(19) Europäisches Patentamt
European Patent Office
Office européen des brevets

(11) **EP 3 952 163 A1**

(12) **EUROPEAN PATENT APPLICATION**

(43) Date of publication:
**09.02.2022 Bulletin 2022/06**

(21) Application number: **21190099.8**

(22) Date of filing: **06.08.2021**

(51) International Patent Classification (IPC):
*H04L 1/08* (2006.01)    *H04L 5/00* (2006.01)

(52) Cooperative Patent Classification (CPC):
**H04L 5/0053; H04L 1/08; H04L 5/0023**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2020 US 202063062190 P**

(71) Applicant: **Comcast Cable Communications, LLC
Philadelphia, PA 19103 (US)**

(72) Inventors:
• **CIRIK, Ali Cagatay
  Philadelphia, 19103 (US)**
• **DINAN, Esmael Hejazi
  Philadelphia, 19103 (US)**
• **YI, Yunjung
  Philadelphia, 19103 (US)**
• **ZHOU, Hua
  Philadelphia, 19103 (US)**

(74) Representative: **V.O.
P.O. Box 87930
2508 DH Den Haag (NL)**

(54) **CONTROL CHANNEL REPETITION**

(57)    Control channel repetition may be used in wireless communications. One or more parameters may be communicated and/or used for transmission/reception occurring prior to repeated messages. A wireless device and/or a base station may use the one or more parameters for transmission/reception scheduled by the repeated messages.

FIG. 25

**Description**

CROSS-REFERENCE TO RELATED APPLICATIONS

This application claims the benefit of U.S. Provisional Application No. 63/062,190, filed on August 6, 2020. The above-referenced application is hereby incorporated by reference in its entirety.

BACKGROUND

In wireless communications, repetitions of a message are used to increase reliability. These repetitions are often sent via a plurality of wireless resources.

SUMMARY

The following summary presents a simplified summary of certain features. The summary is not an extensive overview and is not intended to identify key or critical elements.

A message may be repeated by a base station and/or by a wireless device. Repetitions of a message may increase reliability and/or robustness of wireless communications. At least some repetitions may or may not be successfully received. For example, a base station may not know which of a plurality of repetitions is received by one or more wireless devices. This uncertainty may result in a misalignment between the base station and the wireless device(s). A wireless device and/or a base station may reduce a likelihood of such misalignment, for example, by determining one or more parameters (e.g., indicating a spatial relation, beam, precoder, transmission power, etc.), used for a transmission/reception occurring prior to repetitions of a message, and using the one or more parameters for transmission/reception scheduled by the repeated messages. Additionally or alternatively, a wireless device and/or a base station may communicate/update/use one or more time offsets for repetitions of a message which may provide advantages such as reduced latency and/or reduced retransmissions.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.
FIG. 2A shows an example user plane.
FIG. 2B shows an example control plane configuration.
FIG. 3 shows example of protocol layers.
FIG. 4A shows an example downlink data flow for a user plane configuration.
FIG. 4B shows an example format of a Medium Access Control (MAC) subheader in a MAC Protocol Data Unit (PDU).
FIG. 5A shows an example mapping for downlink channels.
FIG. 5B shows an example mapping for uplink channels.
FIG. 6 shows example radio resource control (RRC) states and RRC state transitions.
FIG. 7 shows an example configuration of a frame.
FIG. 8 shows an example resource configuration of one or more carriers.
FIG. 9 shows an example configuration of bandwidth parts (BWPs).
FIG. 10A shows example carrier aggregation configurations based on component carriers.
FIG. 10B shows example group of cells.
FIG. 11A shows an example mapping of one or more synchronization signal/physical broadcast channel (SS/PBCH) blocks.
FIG. 11B shows an example mapping of one or more channel state information reference signals (CSI-RSs).
FIG. 12A shows examples of downlink beam management procedures.
FIG. 12B shows examples of uplink beam management procedures.
FIG. 13A shows an example four-step random access procedure.
FIG. 13B shows an example two-step random access procedure.
FIG. 13C shows an example two-step random access procedure.
FIG. 14A shows an example of control resource set (CORESET) configurations.
FIG. 14B shows an example of a control channel element to resource element group (CCE-to-REG) mapping.
FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17 shows example configuration parameters for wireless communications between a wireless device and a base station.

FIG. 18 shows example configuration parameters for a control resource set (coreset).

FIG. 19 shows an example of a repetition.

FIG. 20 shows an example of a repetition.

FIG. 21 shows an example of repetition of downlink control information.

FIG. 22 shows an example of repetition of downlink control information.

FIG. 23 shows an example of uplink transmission without control channel repetition.

FIG. 24 shows an example of control channel repetition.

FIG. 25 shows an example of uplink transmission with control channel repetition.

FIG. 26A and FIG. 26B show example methods of uplink transmission with control channel repetition.

FIG. 27 shows an example of scheduling without control channel repetition.

FIG. 28 shows an example of scheduling with control channel repetition.

FIG. 29A and FIG. 29B show example methods of control channel repetition.

FIG. 30 shows an example method of control channel repetition.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to transmission and/or reception configuration and signaling for wireless communication.

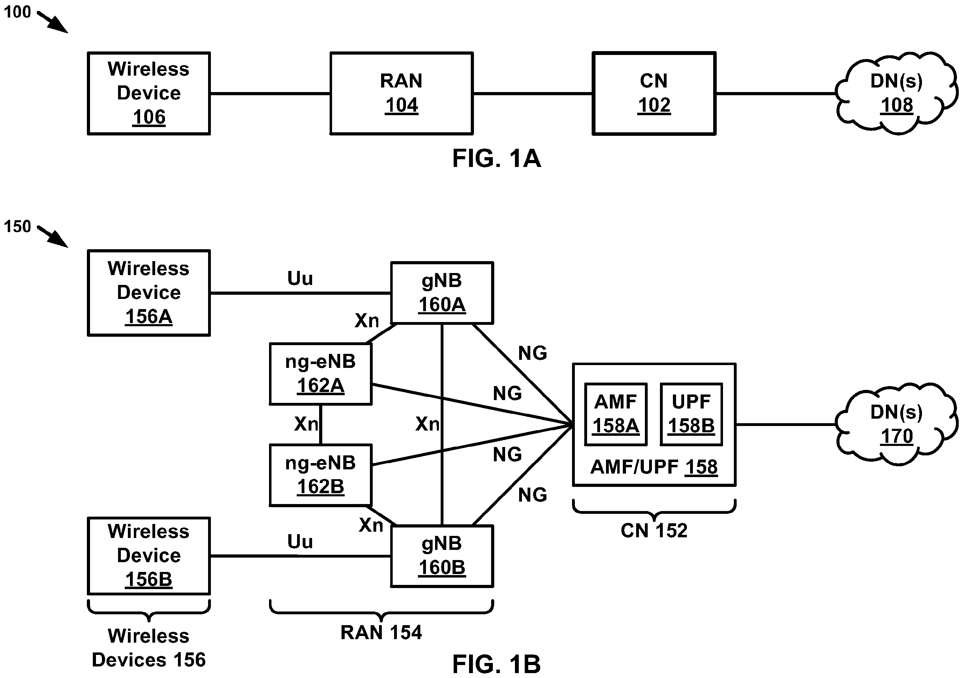

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.),

an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. Abase station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

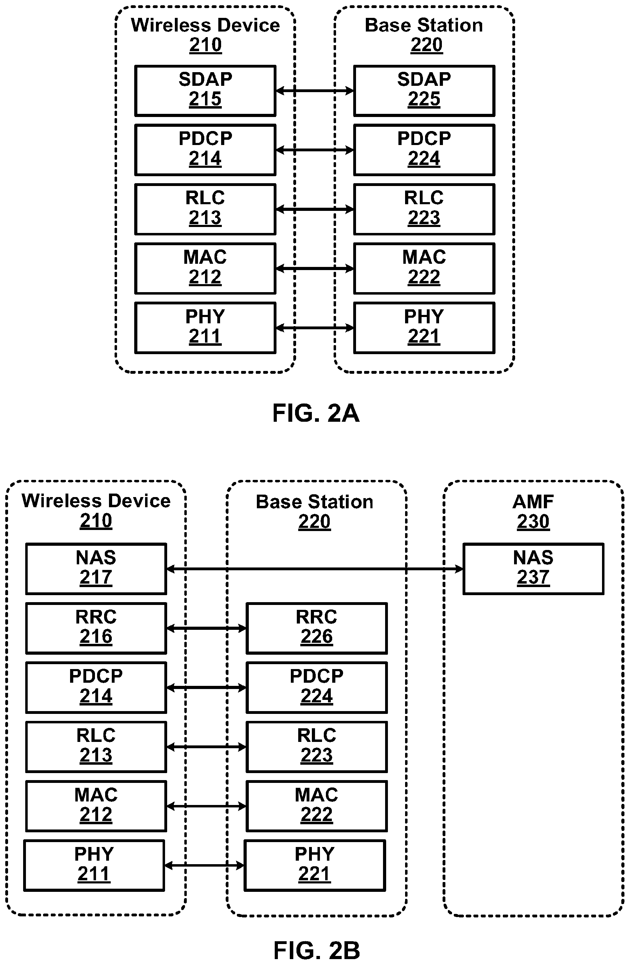

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

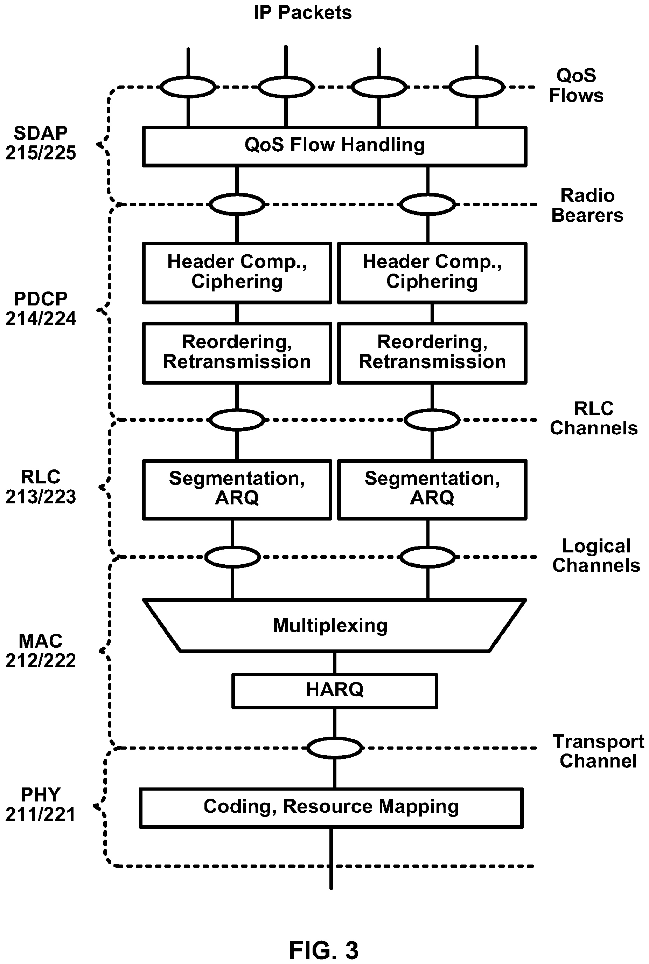

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/demapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted over the air interface, ciphering/deciphering to prevent unauthorized decoding of data transmitted over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

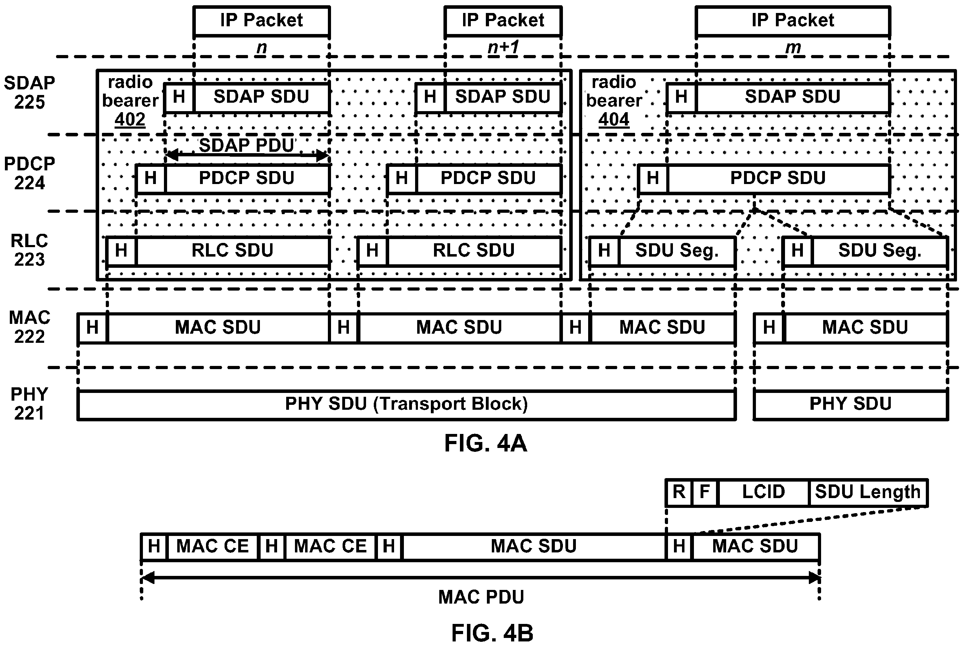

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

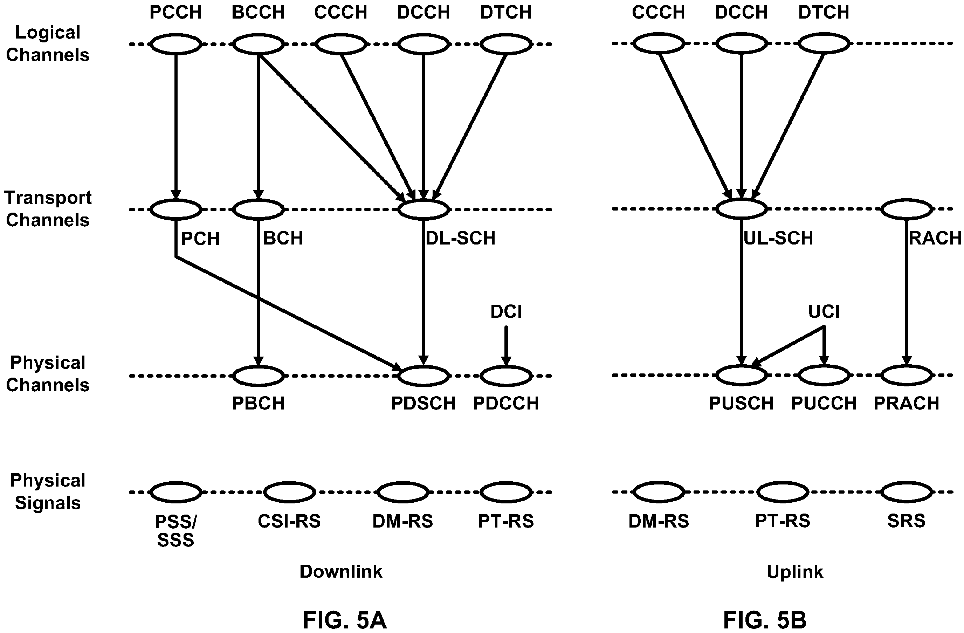

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

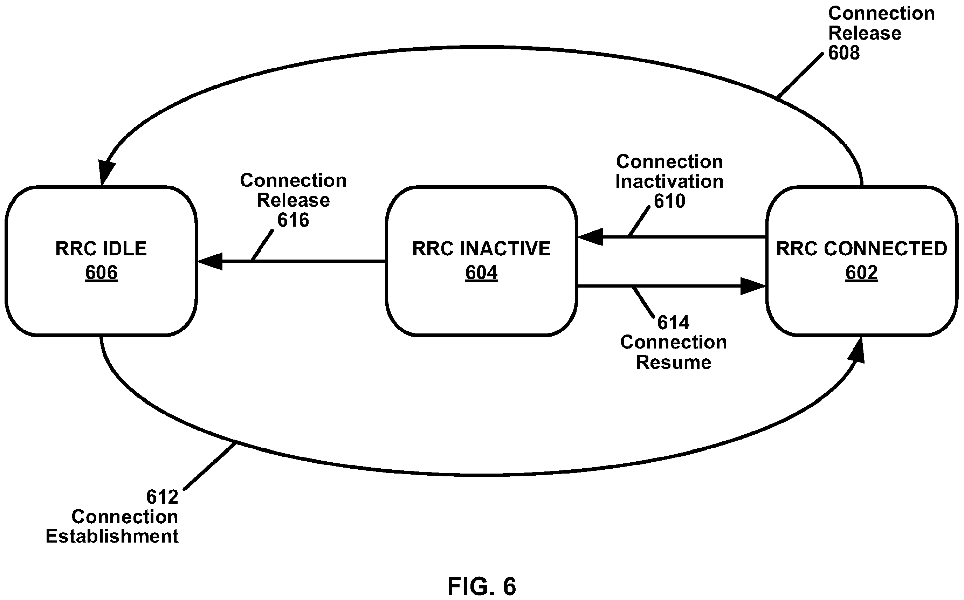

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., each discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g.,

the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

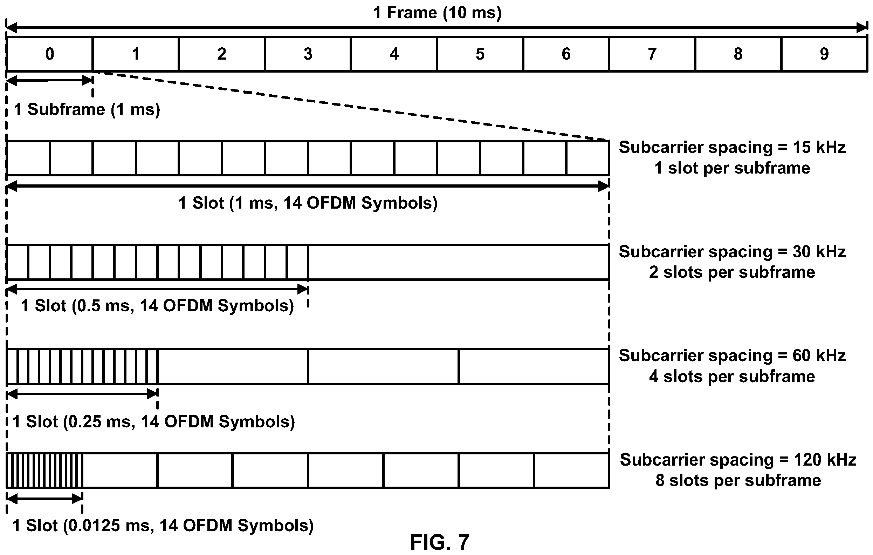

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

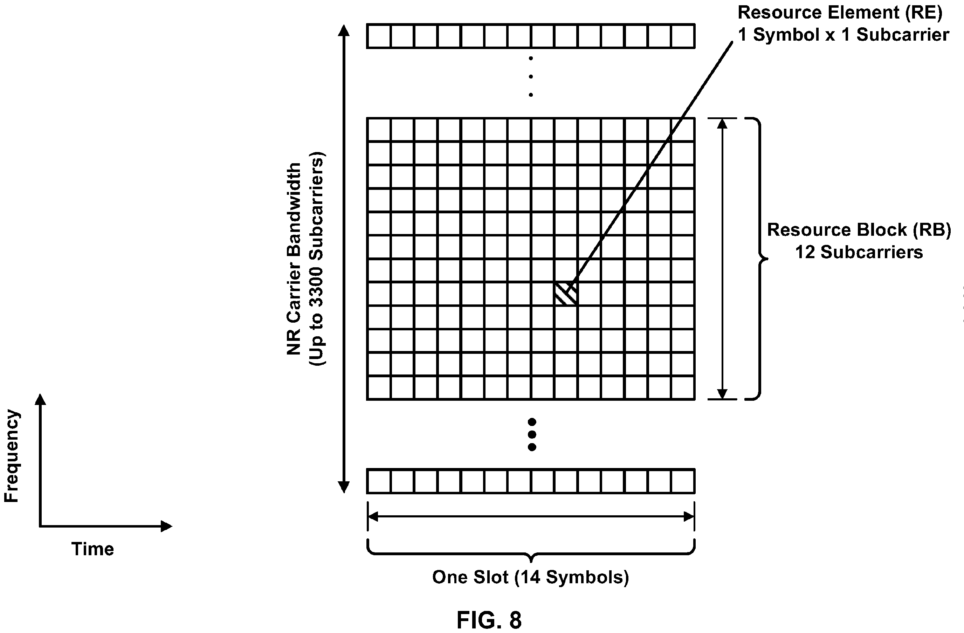

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, after (e.g., based on or in response to) receiving DCI indicating the second BWP as an active BWP. A wireless device may switch an active BWP from a first BWP to a second BWP, for example, after (e.g., based on or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

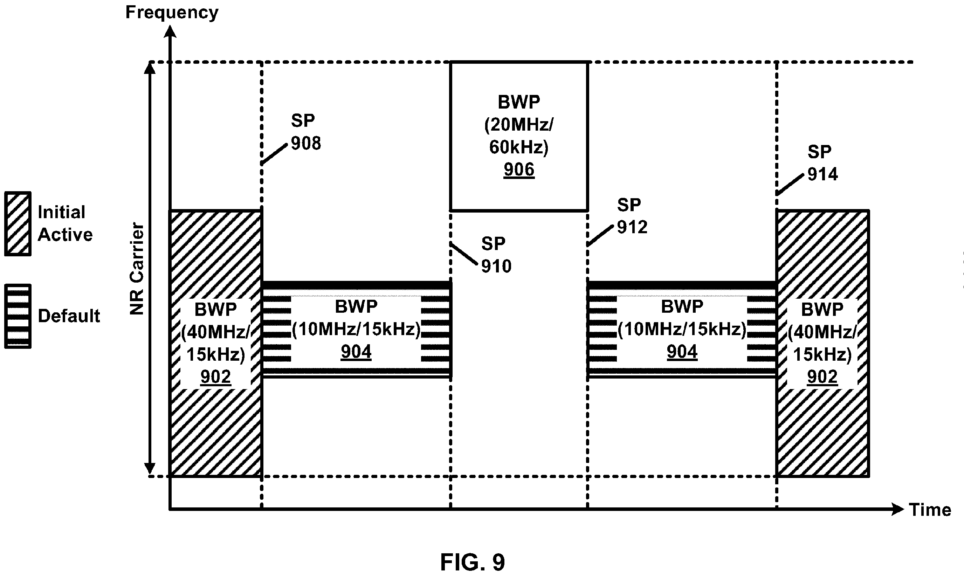

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, after (e.g., based on or in response to) an expiry of a BWP inactivity timer (e.g., indicating switching to the default BWP). The switching at the switching point 908 may occur, for example, after (e.g., based on or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, after (e.g., based on or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

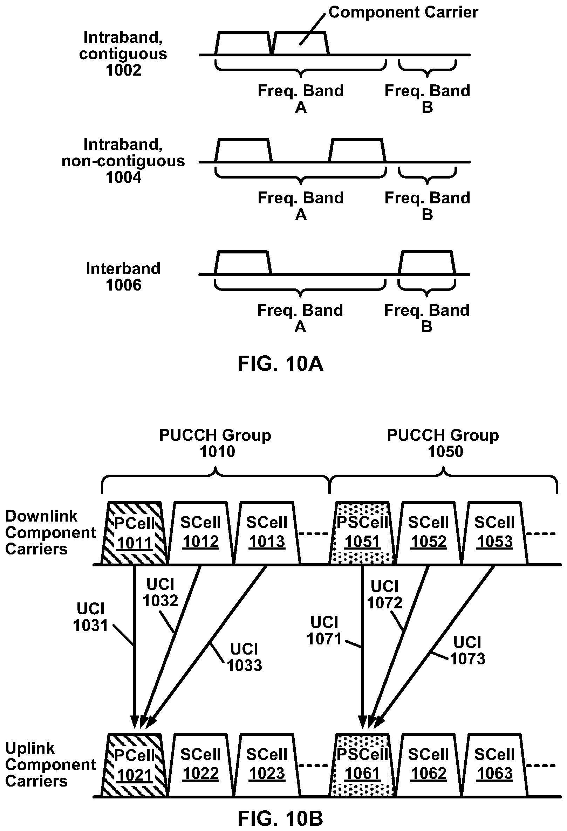

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, after (e.g., based on or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

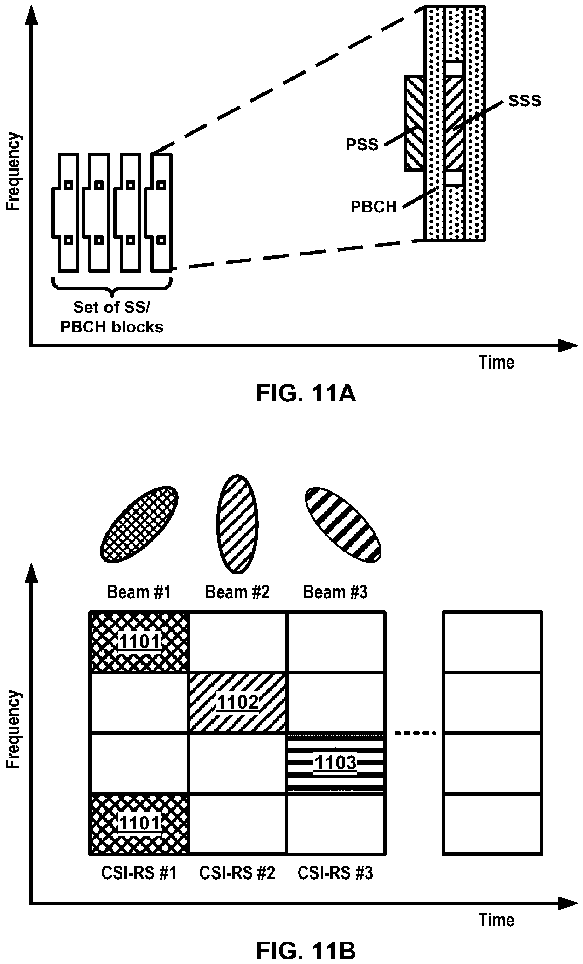

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB 1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indexes. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DMRSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DMRSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DMRS present on a layer of the one or more layers of the PUSCH. A higher layer may configure one or more DMRSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

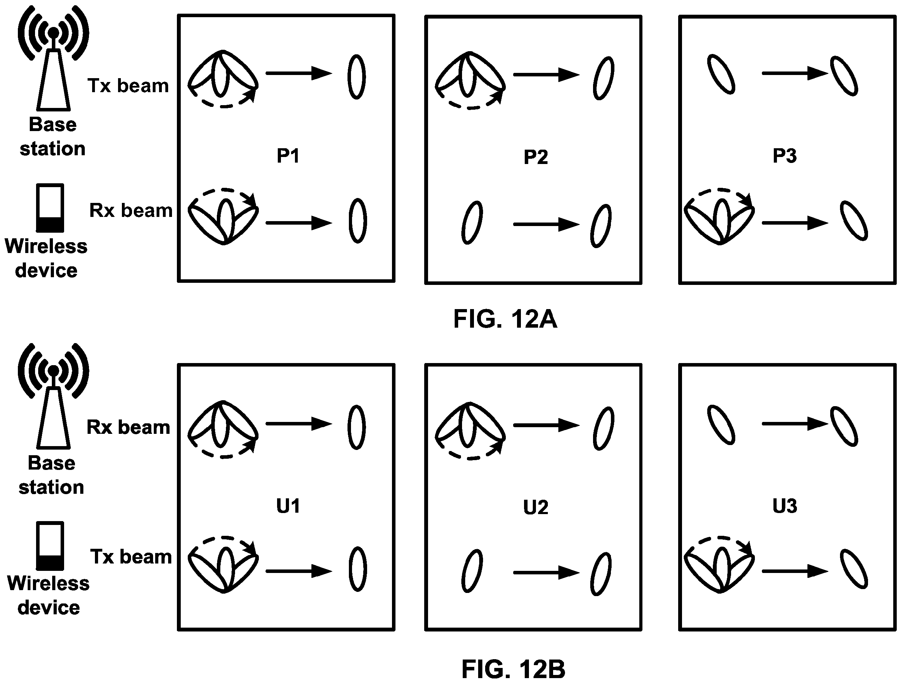

FIG. 12A shows examples of downlink beam management procedures. One or more downlink beam management procedures (e.g., downlink beam management procedures P1, P2, and P3) may be performed. Procedure PI may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of PI and bottom row of P1, respectively. Beamforming (e.g., at a TRP) may comprise a Tx beam sweep for a set of beams (e.g., the beam sweeps shown, in the top rows of PI and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of PI and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure PI. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the UE uses a fixed Tx beam. The wireless device and/or the base station may perform procedure U2, for example, using a smaller set of beams than the set of beams used in procedure P1, or using narrower beams than the beams used in procedure PI. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

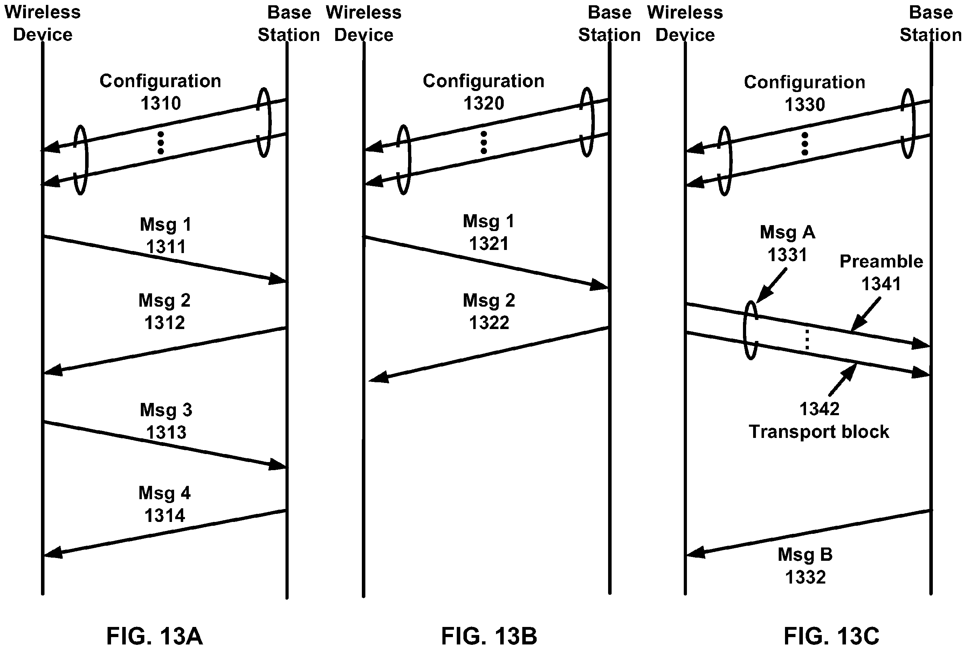

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g.,

prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received after (e.g., based on or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, after (e.g., based on or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type 1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier id may be a UL carrier used for a preamble transmission (e.g., 0 for an NUL carrier, and 1 for an SUL carrier).

The wireless device may send/transmit the third message (e.g., Msg 3 1313), for example, after (e.g., based on or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, after (e.g., based on or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313).

The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, after (e.g., based on or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, after (e.g., based on or in response to) transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, after (e.g., based on or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCI messages may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by abase station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCI messages with one or more DCI formats, for example, depending on the purpose and/or content of the DCI messages. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

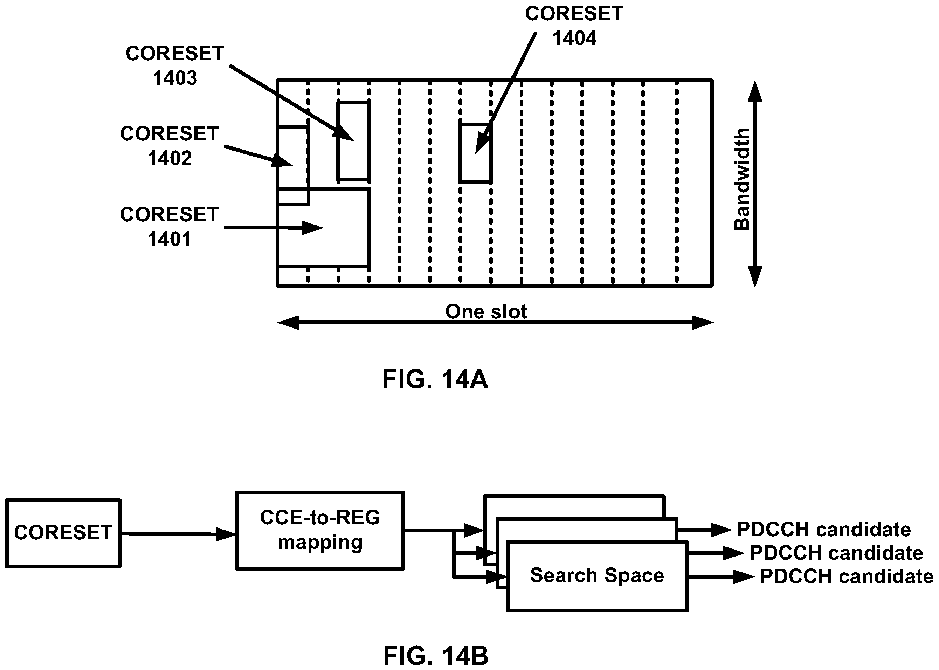

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCI messages. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, after (e.g., based on or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, after (e.g., based on or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

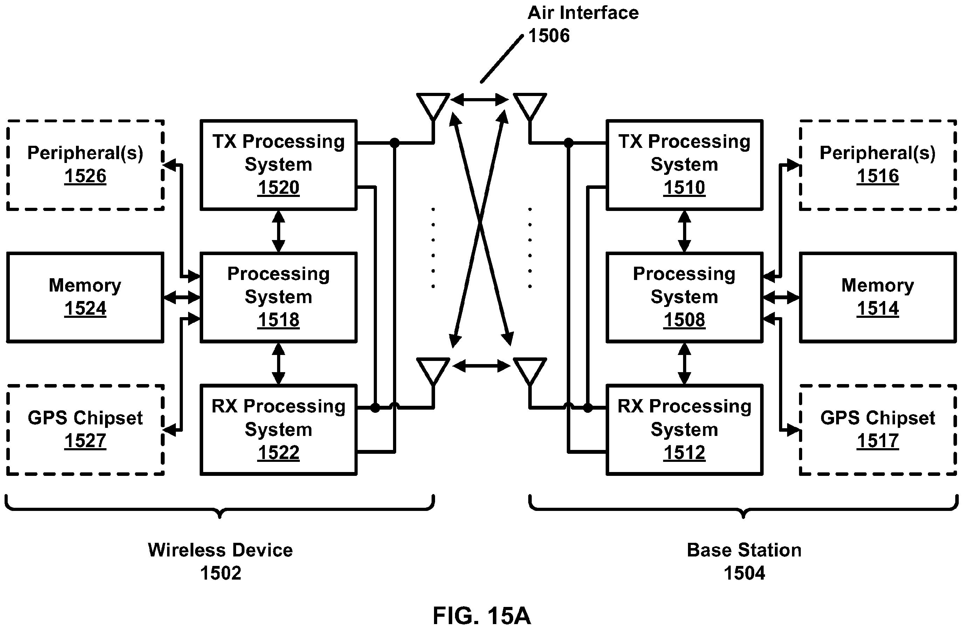

FIG. 15A shows example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For sending/transmission processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

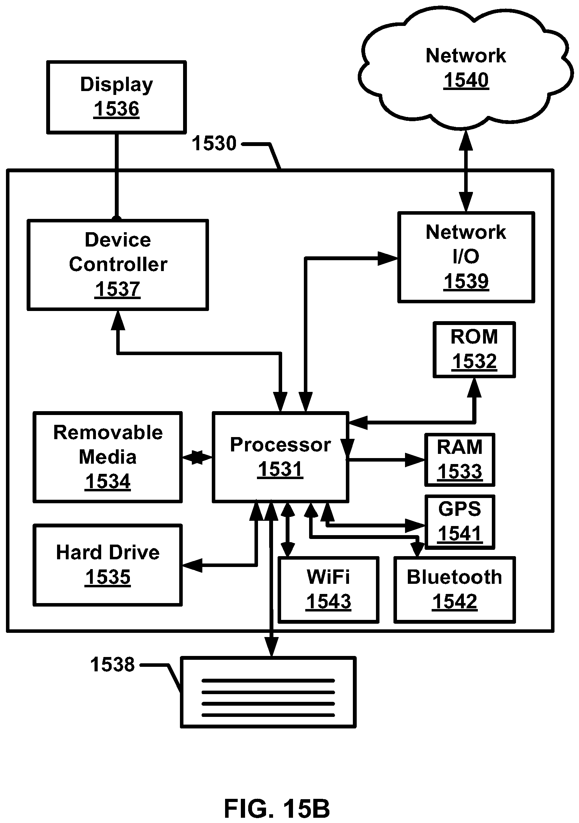

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

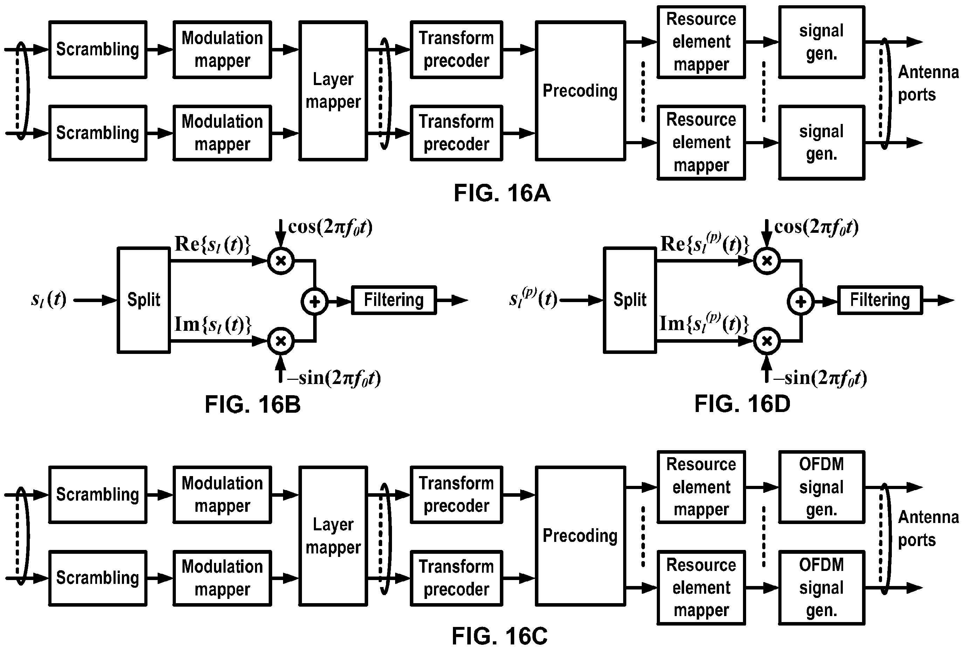

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, if it is started, and continue running until it is stopped or until it expires. A timer may be started, for example, if it is not running or restarted if it is running. A timer may be associated with a value (e.g., the timer may be started or restarted from a value or may be started from zero and expire if it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may receive/determine/detect, in a first time slot, a downlink control information message (e.g., DCI via PDCCH) scheduling an uplink data transmission (e.g., transport block via PUSCH). The DCI may comprise a field (e.g., SRI) indicating an uplink resource (e.g., SRS resource). The wireless device may send/transmit an uplink signal (e.g., SRS) via the uplink resource based on one or more transmission parameters that are used/configured/activated for the uplink resource before (and/or prior to) the first time slot that the wireless device receives the DCI. The one or more transmission parameters may comprise/indicate one or more spatial relation parameters, beams, precoder parameters, power control parameters, etc. The one or more transmission parameters may be configured (e.g., by RRC configuration parameters) and/or activated (e.g., by MAC CE) for the uplink resource. At least some wireless devices may send/transmit, in a second time slot, a transport block based on the one or more transmission parameters that are used/configured/activated for the uplink resource (e.g., most recently) before the first time slot (e.g., before the reception of the DCI). The one or more transmission parameters of the uplink resource may be updated with/using one or more second transmission parameters, for example, after the reception of the DCI and/or before the transmission of the transport block. The wireless device may not send/transmit, in the second time slot, the transport block based on the one or more second transmission parameters of the uplink resource.

At least some wireless devices may receive (e.g., from a base station) one or more configuration parameters for a cell. The configuration parameters may indicate a control channel repetition. The base station may send/transmit, in a plurality of downlink control signal/channel transmission/repetition occasions (e.g., PDCCH monitoring occasions), a plurality of DCI messages/PDCCH transmissions for the control channel repetition. The base station may send/transmit, for example, a first repetition (e.g., DCI 1), a second repetition (e.g., DCI 2), and/or a last repetition (e.g., DCI 3). The DCI 1, DCI 2, DCI 3 may comprise repetitions of a same downlink control signal/channel. The wireless device may monitor, for the plurality of DCI messages/PDCCH transmissions, in the plurality of downlink control signal/channel transmission occasions. These repetitions may increase control channel reliability and robustness.

At least some wireless devices may receive/detect, in downlink control signal/channel transmission occasion(s) of the plurality of downlink control signal/channel transmission occasions, at least one DCI message/PDCCH transmission of the plurality of DCI messages/PDCCH transmissions. The at least one DCI message/PDCCH transmission (e.g., the second repetition, DCI 2) may schedule a transport block (e.g., PUSCH). The at least one DCI message/PDCCH transmission may comprise a field (e.g., SRI) indicating an uplink resource (e.g., SRS resource). At least some wireless devices may miss reception of one or more DCI messages/PDCCH transmissions (e.g., the first and last repetitions, DCI 1 and DCI 3) of the plurality of DCI messages/PDCCH transmissions. Such wireless devices may send/transmit a transport block based on one or more transmission parameters of the uplink resource used/activated/configured before the downlink control signal/channel transmission occasion(s) that the wireless device (successfully) receives among the at least one DCI message/PDCCH transmission.

At least some base stations may not have information of the (received) at least one DCI message/PDCCH transmission (e.g., DCI 2) and the (e.g., missed) one or more DCI messages (e.g., DCI 1 and DCI 3). Such base stations may not have information about which of the plurality of DCI messages/PDCCH transmissions have been successfully received (and/or missed) by a wireless device. For example, at least some wireless device may send/transmit a transport block based on one or more transmission parameters of the uplink resource that are used/activated/configured before the downlink control signal/channel transmission occasion(s) that the wireless device receives from among the at least one DCI message/PDCCH transmission. At least some base stations may receive/decode the transport block based on one or more second transmission parameters of the uplink resource that are used/activated/configured before the plurality of downlink control signal/channel transmission occasions that the plurality of DCI messages/PDCCH transmissions are transmitted/sent (e.g., regardless of being received/detected and/or missed by the wireless device based on not having sufficient information). Such base stations may receive the transport block based on one or more second transmission parameters of the uplink resource that are used/activated/configured before a downlink control signal/channel transmission occasion that the base station sends/transmits one of the one or more DCI messages/PDCCH transmissions (e.g., DCI 1 and DCI 3) that may be missed by the wireless device. Such wireless devices may not send/transmit the transport block based on the one or more second transmission parameters of the uplink resource that are used/activated/configured before the downlink control signal/channel transmission occasion after (e.g., based on or in response to) missing reception of the one (e.g., DCI 1 or DCI 3) of the (missed) one or more DCI messages/PDCCH transmissions in the downlink control signal/channel transmission occasion. This lack of communications may result in a transmission parameter misalignment between such a base station and a wireless device. In the transmission parameter misalignment, such a wireless device may send/transmit the transport block with an inaccurate transmission power (e.g., higher or lower than a required transmission power). The inaccurate transmission power may lead to disadvantages such as increased uplink interference to other cells and/or wireless devices (e.g., if a higher transmission power is used). The inaccurate transmission power may lead to reduced coverage area (e.g., if a lower transmission power is used). In the transmission parameter misalignment, such a wireless device may send/transmit the transport block with a misaligned transmitting beam (e.g., the receiving beam at the base station and transmitting beam at the wireless device are not aligned, pointing at different directions, etc.). Such a base station may not receive/decode the transport block successfully, for example, if there is a transmission parameter misalignment. This lack of communications may reduce the data rate and reliability/robustness of wireless communications.

As described herein, a wireless device and/or a base station may overcome various deficiencies by using improved communications. For example, a wireless device may send/transmit at least one transport block based on one or more transmission parameters of an uplink resource that is used/activated/configured (e.g., most recently) before a reference downlink control signal/channel transmission occasion (e.g., a first DCI message) of a plurality of downlink control signal/channel transmission occasions (e.g., DCI repetitions). The last downlink control signal/channel transmission occasion of the plurality of downlink control signal/channel transmission occasions (e.g., last-in-time DCI message of the DCI repetitions) may be the reference downlink control signal/channel transmission occasion. A base station may send/transmit a last DCI message/PDCCH transmission of the plurality of DCI messages/PDCCHs (e.g., a last-in-time DCI repetition, DCI 3, etc.) in the reference downlink control signal/channel transmission occasion. For example, the first downlink control signal/channel transmission occasion of the plurality of downlink control signal/channel transmission occasions (e.g., first-in-time DCI message of the DCI repetitions) may be the reference downlink control signal/channel transmission occasion. The base station may send/transmit a first DCI message/PDCCH transmission of the plurality of DCI messages/PDCCH transmissions (e.g., a first-in-time DCI repetition, DCI 1, etc.) in the reference downlink control signal/channel transmission occasion. The wireless device may determine the reference downlink control signal/channel transmission occasion based on a number/quantity of repetitions (e.g., 3, the last-in-time repetition, etc.) for the control channel repetition and/or a starting downlink control signal/channel transmission occasion (e.g., 1, the first-in-time repetition, etc.) of the plurality of downlink control signal/channel transmission occasions. The wireless device may (or may not receive) one or more of the plurality of DCI messages/PDCCH transmissions in the reference downlink control signal/channel transmission occasion. The wireless device may receive at least one of the plurality of DCI messages/PDCCH transmissions and determine the one or more transmission parameters of the uplink resource that are used/activated/configured before the reference downlink control signal/channel transmission occasion (e.g., the first repetition or the last repetition). As described herein, the wireless device may be configured to determine the one or more transmission parameters of the uplink resource based on the reference downlink control signal/channel transmission occasion. The configuration may result in reducing the transmission parameter misalignment between the base station and the wireless device. The wireless device may send/transmit at least one transport block with/using a more accurate transmission power (e.g., closer to a required transmission power). The more accurate transmission power may lead to a decreased uplink interference to other cells and/or wireless devices. The more accurate transmission power may lead to an increased coverage area. The wireless device may send/transmit at least one transport block by a sending/transmitting a message that is beam aligned with a receiving beam (e.g., at the base station). The base station may receive/decode the at least one transport block successfully (e.g., without a loss). Procedures described herein may provide advantages such as reduced transmission parameter misalignment, reduced interference (e.g., uplink interference, downlink interference, sidelink interference, etc.) to other cells and/or wireless devices, increased coverage area, increased data rate, and/or increased reliability and/or robustness of wireless communications.

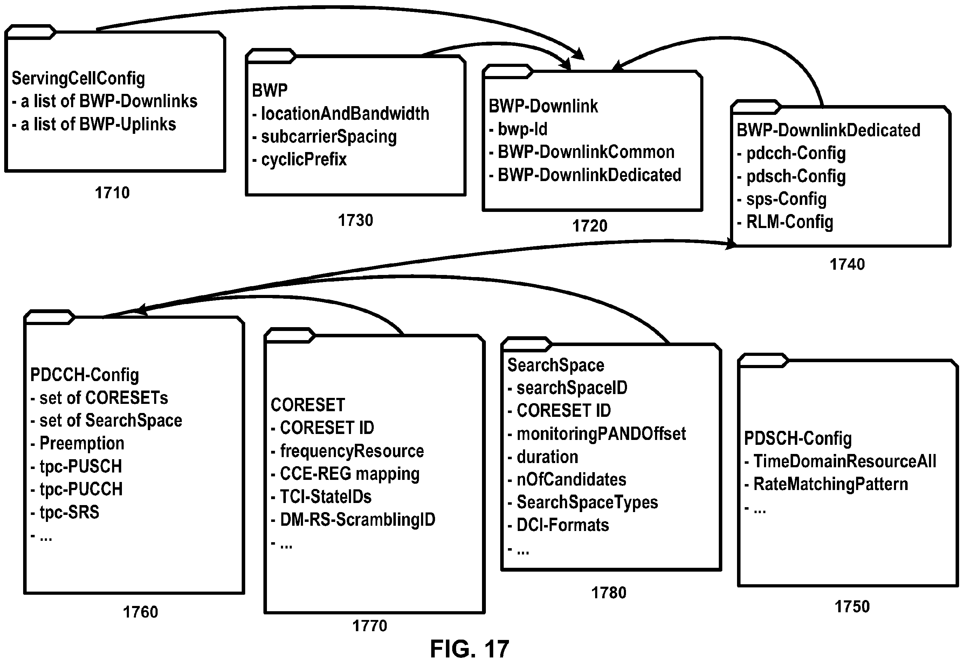

FIG. 17 shows example configuration parameters for a wireless device to receive control and/or data from a base station. A wireless device may receive one or more radio resource control (RRC) messages comprising configuration parameters of a cell. The configuration parameters may indicate/comprise one or more parameters of a serving cell configuration 1710 (e.g., ServingCellConfig). The one or more parameters of the serving cell configuration 1710 may comprise one or more downlink bandwidth parts (e.g., a list of BWP-Downlinks). The one or more parameters of the serving cell configuration 1710 may comprise one or more uplink bandwidth parts (e.g., a list of BWP-Uplinks). A downlink bandwidth part configuration 1720 (e.g., BWP-Downlink) and/or an uplink bandwidth part (e.g., BWP-Uplink) may comprise a bandwidth part index (e.g., bwp-Id), configuration parameters of a cell-common downlink bandwidth part (e.g., BWP-DownlinkCommon), and/or a wireless device-specific downlink bandwidth part (e.g., B WP-DownlinkDedicated). For example, the bandwidth part index (bwp-Id) may indicate a bandwidth part configuration, wherein an index of the bandwidth part is the bandwidth part index. The bandwidth part configuration 1730 may comprise a location and bandwidth information (locationAndBandwidth). The locationAndBandwidth may indicate a starting resource block (RB) of the bandwidth part and a bandwidth of the bandwidth part, based on a reference point (e.g., a pointA of a carrier/cell for the bandwidth part). The bandwidth part configuration 1730 may comprise a subcarrier spacing (e.g., subcarrierSpacing) and a cyclic prefix (e.g., cyclicPrefix). For example, the subcarrier spacing may be one of 15 kHz, 30 kHz, 60 kHz, 120 kHz, 240 kHz, 480 kHz, and/or 960 kHz. For example, the cyclic prefix may be one of a normal cyclic prefix and/or an extended cyclic prefix.

Configuration parameters of the cell-specific downlink bandwidth (e.g., BWP-DownlinkCommon) may comprise genericParameters, pdcch-ConfigCommon, and/or pdsch-ConfigCommon. For example, pdcch-ConfigCommon may comprise cell-specific parameters for receiving downlink control information (DCI) via the cell-specific downlink bandwidth part (e.g., an initial BWP). For example, pdsch-ConfigCommon may comprise cell-specific parameters for receiving PDSCHs of transport blocks (TBs) via the cell-specific downlink bandwidth part. Configuration parameters of the wireless device-specific downlink bandwidth part 1740 (e.g., BWP-DownlinkDedicated) may comprise pdcch-Config, pdsch-Config, sps-Config, and/or radioLinkMonitoringConfig (e.g., RLM-Config). The configuration parameters may indicate/comprise sps-ConfigList and/or beamFailureRecoverySCellConfig. For example, beamFailureRecoverySCellConfig may comprise reference signal parameters for beam failure recovery for secondary cells. For example, pdcch-Config may comprise parameters for receiving DCI messages for the wireless device-specific downlink bandwidth part. For example, pdsch-Config 1750 may comprise parameters for receiving PDSCHs of TBs for the wireless device-specific downlink bandwidth part. For example, sps-Config may comprise parameters for receiving semi-persistent scheduling PDSCHs. The base station may configure a SPS for a BWP or a list of SPS for the BWP. For example, radioLinkMonitoringConfig may comprise parameters for radio link monitoring.

Configuration parameters of pdcch-Config 1760 may comprise at least one of a set of coresets 1770, a set of search spaces 1780, a downlink preemption (e.g., downlinkPreemption), a transmission power control (TPC) for PUSCH (e.g. tpc-PUSCH), a TPC for PUCCH and/or a TPC for SRS. The configuration parameters may indicate/comprise a list of search space switching groups (e.g., searchSpaceSwitchingGroup), a search space switching timer (e.g., searchSpaceSwitchingTimer), an uplink cancellation, and/or a monitoring capability configuration (e.g., monitoringCapabilityConfig). The base station may configure the list of search space switching groups, where the wireless device may switch from a first search space group to a second search space group based on the search space switching timer or a rule, an indication, or an event. The base station may configure up to K (e.g., K = 3) coresets for a BWP of a cell. The downlink preemption may indicate whether to monitor for a downlink preemption indication for the cell. The monitoring capability config may indicate whether a monitoring capability of the wireless device would be configured for the cell, where the capability is based on a basic capability or an advanced capability. The base station may configure up to M (e.g., M = 10) search spaces for the BWP of the cell. The tpc-PUCCH, tpc-PUSCH, or tpc-SRS may enable and/or configure reception of TPC commands for PUCCH, PUSCH or SRS, respectively. The uplink cancellation may indicate to monitor uplink cancellation for the cell.

Configuration parameters of pdcch-ConfigCommon may comprise a control resource set zero (e.g., controlResourceSetZero), a common control resource set (e.g., commonControlResourceSet), a search space zero (e.g., searchSpaceZero), a list of common search space (e.g., commonSearchSpaceList), a search space for SIB1 (e.g., searchSpaceSIB1), a search space for other SIBs (e.g., searchSpaceOtherSystemInformation), a search space for paging (e.g., pagingSearchSpace), a search space for random access (e.g., ra-SearchSpace), and/or a first PDCCH monitoring occasion. The control resource set zero may comprise parameters for a first coreset with an index value zero. The coreset zero may be configured for an initial bandwidth part of the cell. The wireless device may use the control resource set zero in a BWP of the cell, wherein the BWP is not the initial BWP of the cell based on one or more conditions. For example, a numerology of the BWP may be the same as the numerology of the initial BWP. For example, the BWP may comprise the initial BWP. For example, the BWP may comprise the control resource set zero. The common control resource set may be an additional common coreset that may be used for a common search space (CSS) or a UE-specific search space (USS). The base station may configure a bandwidth of the common control resource set is smaller than or equal to a bandwidth of the control resource set zero. The base station may configure the common control resource set such that it is contained within the control resource set zero (e.g., CORESET #0). The list of common search space may comprise one or more CSSs. The list of common search space might not comprise a search space with index zero (e.g., SS #0). The first PDCCH monitoring occasion may indicate a monitoring occasion for a paging occasion. The base station may configure a search space for monitoring DCI messages for paging (e.g., pagingSearchSpace), for RAR monitoring (e.g., ra-SearchSpace), for SIB1 (e.g., searchSpaceSIB1) and/or for other SIBs than SIB1 (e.g., searchSpaceOtherSystemInformation). The search space with index zero (e.g., searchSpaceZero, SS #0) may be configured for the initial BWP of the cell. Similar to the corset #0, the SS #0 may be used in the BWP of the cell based on the one or more conditions.

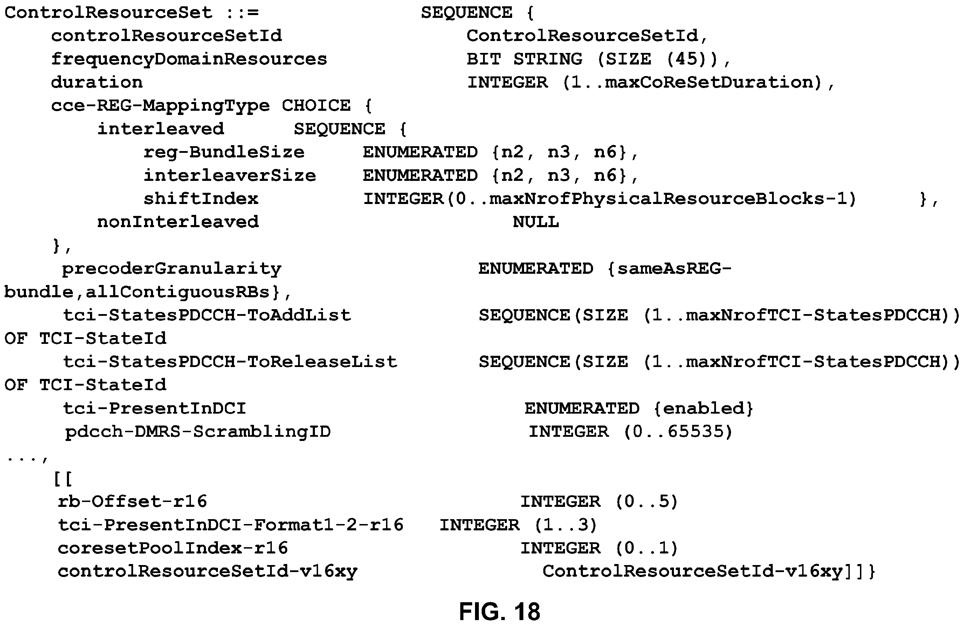

FIG. 18 shows example configuration parameters of a coreset. A ControlResourceSet (coreset) may comprise a coreset index (e.g., ControlResourceSetId), frequency domain resources (e.g., frequencyDomainResources), a duration of the coreset (e.g., a number/quantity of OFDM symbols between [1, maxCoReSetDuration], where, for example, maxCoReSetDuration= 3) and a CCE to REG mapping type (e.g., between interleaved and nonInterleaved). The base station may also configure a bundle size of REG (e.g., reg-BundleSize) and an interleaver size (e.g., interleaverSize), for example, if the CCE-REG mapping type is configured as interleaved. The coreset may also comprise a precoder granularity (e.g., between same as REG bundle (e.g., sameAsREG-bundle) and across all contiguous RBs (e.g., all-ContiguousRBs)). The wireless device may assume that a same precoder is used across REGs in a bundle, for example, if the precoder granularity is configured as 'same as REG bundle.' The wireless device may assume that a same precoder is used across RBs in contiguous RBs of the coreset, for example, if the precoder granularity is configured as 'across all contiguous RBs.' The coreset may comprise a list of TCI states, wherein the coreset is not a coreset #0. The coreset may comprise a parameter of a TCI presence in DCI. The wireless device may expect that a DCI format comprises a TCI indication in DCI based on the DCI format (e.g., a DCI format 1_1 and/or a DCI format 0_1) scheduled via a search space associated with the coreset, for example, if the DCI indicates/comprises the TCI field for the coreset. The coreset may optionally comprise one or more of a DMRS scrambling identity, a coreset pool index, an enhanced coreset index (e.g., ControlResourceSetId-v16xy), a TCI present in DCI for a DCI format 1_2, and an RB offset. The wireless device may ignore the coreset index, for example, if the enhanced coreset index is present in the coreset configuration. The enhanced coreset index may indicate a value between [0, ... , 15] whereas the coreset index may indicate a value between [0, ... , 11].

A coreset may be associated with a search space, and the wireless device may determine search space candidates and/or monitoring occasions of the search space based on configuration of the search space and the coreset. A search space may be associated with a coreset, and the wireless device may determine search space candidates and/or monitoring occasions of the search space based on configuration of the search space and the coreset. Parameters of the search space may comprise an index of the coreset, for example, if the search space is associated with the coreset or the coreset is associated with the search space.

A search space may comprise an index of the search space (e.g., searchSpaceId), an index for the associated coreset (e.g., controlResourceSetId), a monitoring periodicity and offset (e.g., periodicity in terms of a number/quantity of slots and an offset in terms of a number/quantity of slots, between [1, 2560] slots for periodicity, an offset between [0, ... , P-1] where the P is the periodicity). The search space may comprise a duration, wherein the wireless device may monitor the search space in consecutive slots starting from the monitoring occasion based on the duration. The base station might not configure the duration for a search space scheduling a DCI format 2_0. A maximum duration value may be the periodicity -1 (e.g., repeated in each slot within an interval/periodicity). The search space may comprise monitoring symbols within a slot (e.g., a bitmap of size of OFDM symbols in a slot (e.g., 12 for extended cyclic prefix (CP), 14 for normal CP)). The search space may comprise a set of a number/quantity of candidates of each aggregation level (e.g., a first candidate number/quantity for an aggregation level L = 1, a second candidate number/quantity of an aggregation level L = 2, and so on). The search space may comprise a search space type (e.g., between CSS and USS). Each CSS or USS may comprise one or more DCI formats monitored in the search space. For example, for CSS, one or more of a DCI format 0_0/1_0, a DCI format 2_0, a DCI format 2_1, a DCI format 2_2 and a DCI format 2_3 may be configured. For USS, the base station may configure a list of search space group index (if configured). For USS, the base station may configure a frequency monitoring occasion/location for a wideband operation of unlicensed spectrum or licensed spectrum. In the specification, DCI format 0_0/1_0 may be interchangeably used with DCI format 0-0/1-0 or fallback DCI format. DCI format 0_1/1_1 may be interchangeably used with DCI format 0-1/1-1 or non-fallback DCI format. DCI format 0_2/1_2 may be interchangeably used with DCI format 0-2/1-2 or non-fallback DCI format.

Configuration parameters of the pdsch-Config may comprise parameters for receiving transport blocks. For example, the configuration parameters may indicate/comprise a data scrambling identify for PDSCH, a DM-RS mapping type (e.g., between mapping type A and mapping type B), a list of transmission configuration indicator (TCI) states, a parameter of (virtual RB) VRB-to-(physical RB) PRB interleaver, a resource allocation type (e.g., resource allocation type 0, resource allocation type 1 or a dynamic switch between two), a list of time domain allocation, a aggregation factor, a list of rate matching patterns, an RBG (resource block group) size, an MCS table (e.g., between QAM 256 and a QAM64LowSE, between high MCSs or low MCSs), a maximum codeword (e.g., 1 or 2), parameter(s) related to a PRB bundling, maximum MIMO layer, a minimum scheduling offset related to a power saving technique, and/or one or more parameters related to a DCI format 1_2 (e.g., a compact DCI or small sized DCI format).

A base station may configure a coreset with a plurality of TCI states. The base station may indicate a TCI of the plurality of TCI states for the coreset as an active TCI state via a MAC CE command or a DCI command. A serving cell index (e.g., Serving Cell ID 1910) may indicate an index of a serving cell, where the MAC CE is used. A coreset index (e.g., CORESET ID 1920) may indicate a coreset index where the MAC CE is used. A TCI state index (e.g., TCI State ID 1940) may indicate a TCI state identified by TCI-StateId. The TCI state ID 1940 may indicate one TCI state of first 64 TCI states configured for pdsch-Config of a BWP of the serving cell, for example, if the coreset is CORESET #0. The BWP of the serving cell may be an active BWP of the cell. The TCI state ID 1940 may indicate a TCI state of the plurality of TCI states configured for the coreset in pdcch-Config, for example, if the coreset is not the CORESET #0 (e.g., CORESET ID is not zero).

A physical downlink control channel (PDCCH) may comprise one or more CCEs. For example, the PDCCH may comprise one CCE that may correspond to an aggregation level (AL) = 1. For example, the PDCCH may comprise two CCEs that may correspond to an AL of two (AL = 2). For example, the PDCCH may comprise four CCEs that may correspond to an AL of four (AL = 4). For example, the PDCCH may comprise eight CCEs that may correspond to an AL of eight (AL = 8). For example, the PDCCH may comprise sixteen CCEs that may correspond to an AL of sixteen (AL = 16).

A PDCCH may be carried over one or more control resource sets (coresets). A coreset may comprise N_rb_coreset resource blocks (RBs) in the frequency domain and N_symbol_coreset symbols in the time domain. For example, the N_rb_coreset may be a multiple of 6 RBs (e.g., 6, 12, 18, etc.). For example, N_symbol_coreset may be 1, 2 or 3. A CCE may comprise M (e.g., M = 6) resource-element groups (REGs). For example, one REG may comprise one RB during one OFDM symbol. REGs within the coreset may be ordered/numbered in increasing order in a time-first manner, starting with 0 for a first OFDM symbol and a lowest number (e.g., a lowest frequency) RB in the coreset. The wireless device may increase the numbering in the first OFDM symbol by increasing a frequency location or an RB index. The wireless device may move to a next symbol, for example, based on (e.g., after or in response to) all RBs of the first symbol having been indexed. The wireless device may map one or more REG indices for one or more 6 RBs of N_rb_coreset RBs within N_symbol_coreset OFDM symbols of the coreset.

A wireless device may receive configuration parameters from a base station. The configuration parameters may indicate/comprise one or more coresets. One coreset may be associated with one CCE-to-REG mapping. For example, a single coreset may have a single CCE mapping to physical RBs/resources of the single coreset. For example, a CCE-to-REG of a coreset may be interleaved or non-interleaved. For example, a REG bundle may comprise L consecutive REGs (e.g., iL, iL+1, ... , iL+L-1). For example, L may be a REG bundle size (e.g., L = 2 or 6 for N_symbol_coreset = 1 and L = N_symbol_coreset or 6, for example, if N_symbol_coreset is 2 or 3). An index of a REG bundle (e.g., i), may be in a range of [0, 1, ... N_reg_coreset/L -1]. For example, N_reg_coreset may be defined as N_rb_coreset * N_symbol_coreset (e.g., a total number/quantity of REGs in the single coreset). For example, a j-th indexed CCE may comprise one or more REG bundles of { f(6j/L), f(6j/L+1), ., f(6j/L + 6/L-1)}. For example, f(x) may be an interleaver function. The function f(x) may be x (e.g., j-th CCE may comprise 6j/L, 6j/L+1, ... , and 6j/L+6/L-1), for example, if the CCE-to-REG mapping is non-interleaved. When the CCE-to-REG mapping may be interleaved, L may be defined as one of {2, 6} when N_symbol_coreset is 1, or L may be defined as one of {N symbol coreset, 6} when N_symbol coreset is 2 or 3. When the CCE-to-REG mapping may be interleaved, the function f(x) may be defined as (rC + c + n_shift) mod (N_reg_coreset/L), wherein x = cR + r, r = 0, 1, ... , R-1, c = 0, 1, ... , C-1, C = N_reg_coreset/(L*R), and R is one of {2, 3, 6}.

For example, the configuration parameters may indicate/comprise a frequencyDomainResources that may define N_rb_coreset. The configuration parameters may indicate/comprise duration that may define N_symbol_coreset. The configuration parameters may indicate/comprise cce-REG-MappingType that may be selected between interleaved or non-interleaved mapping. The configuration parameters may indicate/comprise reg-BundleSize that may define a value for L for the interleaved mapping. For the non-interleaved mapping, L = 6 may be predetermined. The configuration parameters may indicate/comprise shiftIndex that may determine n_shift as one of {0, 1, ..., 274}. The wireless device may determine/assume a same precoding for REGs within a REG bundle, for example, if precorder granularity (e.g., a precoderGranularity indicated/configured by the configuration parameters) is configured as sameAsREG-bundle. The wireless device may determine/assume a same precoding for all REGs within a set of contiguous RBs of a coreset, for example, if the precoderGranularity is configured as allContiguousRBs. A first coreset (e.g., CORESET#0) may be defined/configured with L = 6, R= 2, n_shift = cell ID, and precoderGranularity = sameAsREG-bundle.

A base station may send (e.g., transmit) one or more messages comprising configuration parameters. The configuration parameters may indicate/comprise a plurality of serving cells for a wireless device. The configuration parameters may indicate/comprise parameter(s) to enable control channel repetition. For example, the control channel repetition may be sent (e.g., transmitted) via one or more serving cells. The control channel repetition may schedule one or more resources for a transport block. The transport block may be sent (e.g., transmitted) via one or more PDSCHs or one or more PUSCHs. For example, the control channel repetition may be sent (e.g., transmitted) via a single cell, where the single cell may operate with a single transmission and reception point (TRP) or a plurality of TRPs. The base station may send (e.g., transmit) one or more control channels for control channel repetition via one or more resources in different frequency resources (e.g., repetition in a frequency domain or in a plurality of carriers/cells). The one or more resources may overlap in time domain. The base station may send (e.g., transmit) one or more second control channels for control channel repetition via one or more second resources in different time resources (e.g., repetition in a time domain or in a plurality of slots). The one or more second resources may overlap in frequency domain. For example, the base station may send (e.g., transmit) the repetitions of the control channel repetition via a plurality of coresets of the single cell. For example, the base station may send (e.g., transmit) the control channel repetition via a plurality of search spaces of the single cell.

The control channel repetition may be sent (e.g., transmitted) via a plurality of PDCCHs. For example, a PDCCH may indicate a physical control channel sent (e.g., transmitted) in one search space candidate. A search space candidate may comprise one or more CCEs based on an aggregation level. The plurality of PDCCHs may be sent (e.g., transmitted) via a plurality of coresets of a plurality of cells. For example, a coreset of a cell of the plurality of cells may send (e.g., transmit) a PDCCH of the plurality of the PDCCHs. The plurality of PDCCHs may be sent (e.g., transmitted) via a plurality of coresets of a cell. For example, a coreset of the plurality of coresets may send (e.g., transmit) a PDCCH of the plurality of the PDCCHs. The plurality of PDCCHs may be sent (e.g., transmitted) via a plurality of search spaces, where a PDCCH of the plurality of PDCCHs may be sent (e.g., transmitted) via a search space of the plurality of search spaces. The plurality of PDCCHs may be sent (e.g., transmitted) via a plurality of search space candidates where each PDCCH of the plurality of PDCCHs may be sent (e.g., transmitted) via a search space candidate of the plurality of search space candidates. The plurality of search space candidates may belong to a single search space or a plurality of search spaces. A search space may comprise a set of search space candidates associated with monitoring occasions. Monitoring occasions of the search space may refer to timing occasions during which the wireless device may monitor a search space candidate for receiving DCI message/PDCCH transmission.

A PDCCH of the plurality of PDCCHs for the control channel repetition may send (e.g., convey/transmit) DCI based on a DCI format. For example, first DCI of a first PDCCH of the plurality of PDCCHs may be the same as second DCI of a second PDCCH of the plurality of PDCCHs. For example, content of the first DCI message/PDCCH transmission may be the same as content of the second DCI message/PDCCH transmission. Based on the same content of the plurality of PDCCHs, the wireless device may aggregate the plurality of DCI messages/PDCCH transmissions, for example, before decoding DCI message/PDCCH transmission. For example, the wireless device may need to determine a reference frequency domain resource, a reference time domain resource, a reference CCE index, and/or a reference REG index, for example, if the control channel repetition is sent (e.g., transmitted) via equal content DCI messages/PDCCH transmissions. For example, the wireless device may determine an aggregated DCI message/PDCCH transmission by aggregating the plurality of DCI messages/PDCCH transmissions. The wireless device may decode the aggregated DCI message/PDCCH transmission. For example, the reference frequency domain resource of the plurality of DCI messages/PDCCH transmissions may be determined based on an earliest PDCCH (or a latest PDCCH) among the plurality of PDCCHs. The first PDCCH may determine the reference frequency domain resource, for example, if a first PDCCH of the plurality of PDCCHs is sent (e.g., transmitted) in a slot n and a second PDCCH of the plurality of PDCCHs is sent (e.g., transmitted) in a slot n+1. Similarly, the reference time domain resource and/or the reference CCE index and/or the reference REG may be determined based on the earliest PDCCH or the latest PDCCH. The reference frequency domain resource of the plurality of DCI messages/PDCCH transmissions may be determined based on a CORESET index of one or more CORESETs where the plurality of DCI messages/PDCCH transmissions are sent (e.g., transmitted). For example, a smallest (or a largest) index of the one or more CORESETs may be used for the determining.

The reference frequency domain resource of the plurality of DCI messages/PDCCH transmissions may be determined based on a search space index of one or more search spaces where the plurality of DCI messages/PDCCH transmissions are sent (e.g., transmitted). For example, a smallest (or a largest) index of the one or more search spaces may be used for the determining. The reference frequency domain resource of the plurality of DCI messages/PDCCH transmissions may be determined based on a cell index of one or more cells where the plurality of DCI messages/PDCCH transmissions are sent (e.g., transmitted). For example, a smallest (or a largest) index of the one or more cells may be used for the determining. Similarly, the reference time domain resource and/or the reference CCE index and/or the reference REG may be determined based on the CORESET index, the search space index and/or the cell index. Combinations of transmission time, a CORESET index, a search space, and/or a cell index may be used. For example, the reference frequency domain resource may be determined based on the transmission time of DCI message/PDCCH transmission. The wireless device may use the CORESET index, the search space index, and/or the cell index to further identify a reference DCI message/PDCCH transmission, for example, if there are multiple DCI messages/PDCCH transmissions sent (e.g., transmitted) at the same time. The wireless device may determine the reference DCI message/PDCCH transmission for determining the reference frequency domain resource, the reference time domain resource, the reference CCE index, and/or the reference REG index.

The base station may configure a maximum repetition number/quantity K for the control channel repetition. The base station may send (e.g., transmit) a number/quantity of repetitions M that is smaller than the K. The wireless device may determine the reference DCI message/PDCCH transmission, for example, based on a candidate DCI message/PDCCH transmission in the K-th repetition regardless whether the K-th repetition has been actually sent (e.g., transmitted) or not, and/or, for example, based on the M being smaller than K. The wireless device may determine the reference DCI message/PDCCH transmission based on first DCI message/PDCCH transmission, which may be a first repetition. The wireless device may determine the reference DCI message/PDCCH transmission based on a last DCI message/PDCCH transmission which has been actually sent (e.g., transmitted) (e.g., M-th repetition). This type of control channel repetition (e.g., same content is repeated over a plurality of DCI messages/PDCCH transmissions) may be called/referred to as a first control channel repetition mode (e.g., mode 1, repetition mode 1, first repetition mode). A base station may configure a list of time domain resource allocation entries. A time domain resource allocation entry may comprise a number/quantity of repetitions of a control channel, a scheduling offset between the control channel and a PDSCH, and/or a number/quantity of PDSCH repetitions. For example, the number/quantity of repetitions of the control channel may represent the number/quantity of repetitions K. Based on the number/quantity of repetitions, the wireless device may determine a reference DCI message/PDCCH transmission timing based on the K-th DCI message/PDCCH transmission repetition. The repeated DCI messages/PDCCH transmissions may indicate an entry of the list of time domain resource allocation entries.

First DCI message/PDCCH transmission of the plurality of DCI messages/PDCCH transmissions may be different from second DCI message/PDCCH transmission of the plurality of DCI messages/PDCCH transmissions. For example, a wireless device might not aggregate the first DCI message/PDCCH transmission and the second DCI as contents of the first DCI message/PDCCH transmission may be different. The wireless device may attempt to decode the first DCI message/PDCCH transmission separately from the second DCI message/PDCCH transmission. For example, the wireless device may complete the decoding of the control channel repetition, for example, if the wireless device has received at least one DCI message/PDCCH transmission of the plurality of DCI messages/PDCCH transmissions. The wireless device may be able to receive or send (e.g., transmit) a TB scheduled by the plurality of DCI messages/PDCCH transmissions, for example, if the wireless device has received at least one DCI message/PDCCH transmission of the plurality of DCI messages/PDCCH transmissions. This type of control channel repetition (e.g., potentially different contents are sent (e.g., transmitted) via a plurality of DCI messages/PDCCH transmissions, and DCI message/PDCCH transmission of the plurality of DCI messages/PDCCH transmissions may schedule one or more resources of a transport block) may be called/referred to as a second control channel repetition mode (e.g., mode 2, repetition mode 2, second repetition mode). For example, a reference DCI message/PDCCH transmission of the plurality of DCI messages/PDCCH transmissions based on the second control channel repetition mode may be each DCI message/PDCCH transmission received by the wireless device.

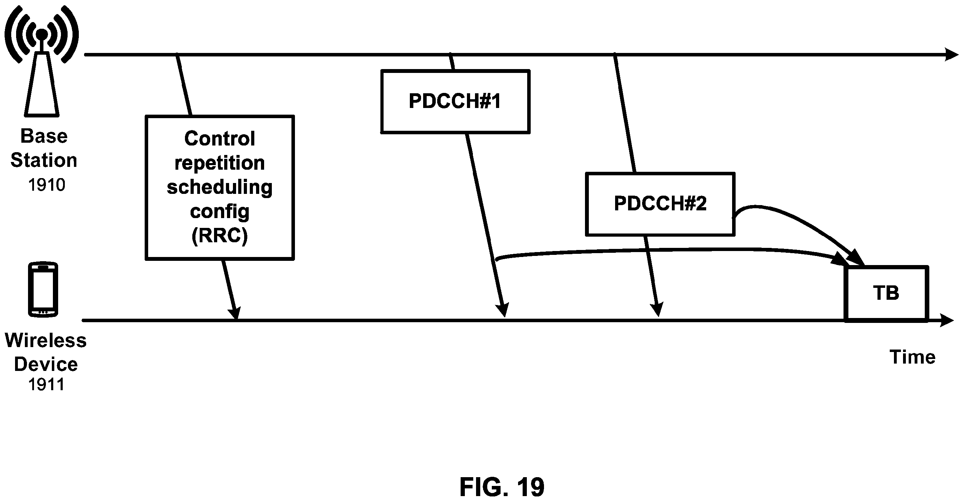

FIG. 19 shows an example of a repetition. The repetition may comprise PDCCH repetition. A base station 1910 may send/transmit one or more RRC messages comprising one or more configuration parameters. The configuration parameter(s) may comprise one or more parameters for a control channel repetition. The one or more parameters may comprise one or more scheduling carriers/cells for transmitting/sending one or more PDCCH transmissions/DCI messages of repeated control channels (and/or of the control channel repetition). The one or more parameters may comprise one or more search spaces for the control channel repetition. Control channel repetition may be enabled via a first search space (e.g., SS#1) of a first carrier/cell (e.g., DL carrier#0). The one or more parameters may indicate one or more indexes of the one or more search spaces of the first carrier and/or a carrier/cell index of the first carrier. The base station 1910 may send/transmit a first PDCCH transmission (e.g., PDCCH#1), scheduling at least one TB via the first carrier, via the first search space of the first carrier. The base station 1910 may send/transmit a second PDCCH transmission (e.g., PDCCH#2), scheduling the at least one TB via the first carrier, via the first search space of the first carrier. The first PDCCH transmission and the second PDCCH transmission may be transmitted/sent via a plurality of monitoring occasions of the first search space. The wireless device 1911 may aggregate the first PDCCH and the second PDCCH, for example, based on the first control channel repetition mode. The wireless device 1911 may attempt to receive/decode each PDCCH transmission independently, for example, based on the second control channel repetition mode. The wireless device 1911 may send/transmit and or receive the at least one TB, for example, based on the first PDCCH and/or the second PDCCH.

The base station 1910 may send/transmit one or more RRC messages. The one or more RRC messages may indicate a control channel repetition enabled for a first carrier/cell. The wireless device 1911 may determine one or more first search spaces of the first carrier/cell, for example, based on the indication of the control channel repetition. The wireless device 1911 may determine the one or more first search spaces for the control channel repetition, for example, based on the active BWP of the first carrier/cell. The one or more first search spaces may be configured with at least one of: a non-fallback DCI format, a DCI format 1_1, a DCI format 1_2, a DCI format 0_1, and/or a DCI format 0_2. The one or more RRC messages may indicate one or more search space indexes of the one or more first search spaces for the control channel repetition. The one or more RRC messages may indicate one or more DCI formats, that the wireless device 1911 may apply/use for the control channel repetition. The wireless device 1911 may determine the one or more first search spaces of the first carrier/cell, for example, based on the one or more DCI formats of the control channel repetition.

A base station may send (e.g., transmit) a plurality of DCI messages/PDCCH transmissions, scheduling resource(s) for a transport block of a cell, via a plurality of TRPs or via a plurality of coreset pools or via a plurality of coreset groups. For example, a base station may configure a first TRP (or a first coreset pool) for a first cell via one or more RRC messages. The one or more RRC messages may comprise configuration parameters. The configuration parameters may indicate/comprise the first coreset pool of the first cell. The configuration parameters may indicate/comprise a second coreset pool of the first cell. For example, the second coreset pool may correspond to a second TRP of the first cell. The base station may send (e.g., transmit) first DCI message/PDCCH transmission via a first search space of a first coreset of the first coreset pool. The base station may send (e.g., transmit) second DCI message/PDCCH transmission via a second search space of a second coreset of the second coreset pool. The first DCI message/PDCCH transmission and the second DCI message/PDCCH transmission may schedule resource(s) of a transport block. The first/PDCCH and the second DCI message/PDCCH transmission may be repeated transmission of a control information. The transport block may be sent (e.g., transmitted) via the first TRP and the second TRP. The transport block may be sent (e.g., transmitted) based on a plurality of TCI states. The transport block may be sent (e.g., transmitted) based on a TCI state, where the TCI state is associated with a plurality of TCI states. The transport block may be sent (e.g., transmitted) via the first TRP or the second TRP.

The configuration parameters may indicate control channel repetition enabled/configured for the first cell. For example, a parameter of a control channel repetition mode may be configured. The control channel repetition mode may be the first control channel repetition mode or the second control channel repetition mode. The configuration parameters may indicate/comprise a first coreset associated with (e.g., configured with or of) the first coreset pool. The configuration parameters may indicate/comprise a second coreset associated with (e.g., configured with or of) the second coreset pool. The wireless device may determine a pair of the first coreset and the second coreset, where repeated DCI message/PDCCH transmissions may be sent (e.g., transmitted), based on a rule. For example, the wireless device may determine the first coreset of the first coreset pool based on a search space associated with the first coreset, where the wireless device may monitor a DCI format via the search space. For example, the DCI format may be a DCI format 1_1, a DCI format 0_1, a DCI format 1_2, a DCI format 0_2, a DCI format 3_0, or a DCI format 3_1. The wireless device may determine the plurality of first coresets of the first coreset pool, for example, if there is a plurality of first search spaces, of the first coreset pool, configured with the DCI format. Similarly, the wireless device may determine the second coreset of the second coreset pool based on a search space associated with the second coreset, where the wireless device may monitor the DCI format via the search space. The wireless device may determine the plurality of second search spaces, for example, if there is a plurality of second search spaces, of the second coreset pool, configured with the DCI format. The wireless device may be configured with at most one search space for a DCI format in each coreset pool.

The wireless device may determine the second coreset of the second coreset pool based on a first coreset index of the first coreset of the first coreset pool. For example, a second index of the second coreset may be the first coreset index + GAP. For example, the GAP may be a determined/predetermined value (e.g., 0, 12). For example, the configuration parameters may indicate/comprise a parameter indicating a value of the GAP. The wireless device may determine the second coreset based on a second search space, associated with the second coreset, and the first search space. For example, an index of the second search space may be a first index of the first search space + SS-GAP. For example, SS-GAP may be a predetermined value (e.g., 20, 0). For example, the wireless device may determine the second coreset and/or the second search space based on an association configured by the configuration parameters. For example, the configuration parameters may indicate the association between each of a coreset/search space associated with the first coreset pool and each of a coreset/search space associated with the second coreset pool. The configuration parameters may indicate/comprise a first coreset and/or a first search space of the first coreset pool. The wireless device may monitor first DCI message/PDCCH transmission via the first search space of the first coreset pool. The configuration parameters may indicate/comprise a parameter indicating control channel repetition across a multi-TRP or a multi-coreset pool for the first coreset or the first search space. Based on the parameter, the wireless device may determine a second coreset or a second search space of the second coreset pool. For example, the wireless device may determine the second coreset based on one or more parameters of the first coreset. For example, a same set of resource blocks configured for the first coreset may be used for the second coreset. For example, monitoring occasions of the first search space may be used for determining monitoring occasions of the second search space.

A base station may indicate control channel repetition based on a coreset. For example, the base station may send (e.g., transmit) a plurality of DCI messages/PDCCH transmissions via the coreset. The base station may send (e.g., transmit) the plurality of DCI messages/PDCCH transmissions over a plurality of TRPs. The base station may send (e.g., transmit) one or more RRC messages and/or MAC CEs indicating a plurality of TCI states are activated for the coreset. For example, the plurality of TCI states may comprise a first TCI state, corresponding to a first TRP of the plurality of TRPs, and a second TCI state, corresponding to a second TRP of the plurality of TRPs. The base station may send (e.g., transmit) one or more second RRC messages comprising configuration parameters for the coreset. For example, the configuration parameters may indicate control channel repetition based on the coreset. The configuration parameters may indicate the control channel repetition across a plurality of TRPs. The configuration parameters may indicate repetition pattern across the plurality of TRPs. For example, the repetition pattern (e.g., TRP switching pattern) may be [0, ... ,0,1, ... ,1] where 0 may represent a first TRP of the plurality of TRPs and 1 may represent a second TRP of the plurality of TRPs. The base station may indicate a bitmap indicating a number/quantity of control channel repetitions. Each bit of the bitmap may represent which TRP may send (e.g., transmit) i-th repetition. The repetition pattern may be [0, 1, 0, 1, ..., 0, 1]. The repetition pattern may be [0, 0, ... ,0, 1, 1, ... ,1, 0, 0, ... , 0, 1, 1, ... , 1]. Various repetition patterns may be considered. Based on the repetition pattern, the wireless device may receive a control channel repetition based on a TCI state of the plurality of TCI states. The wireless device may receive the control channel repetition based on the first TCI state, for example, if the repetition pattern indicates the first TRP. The wireless device may receive the control channel repetition based on the second TCI state, for example, if the repetition indicates the second TRP.

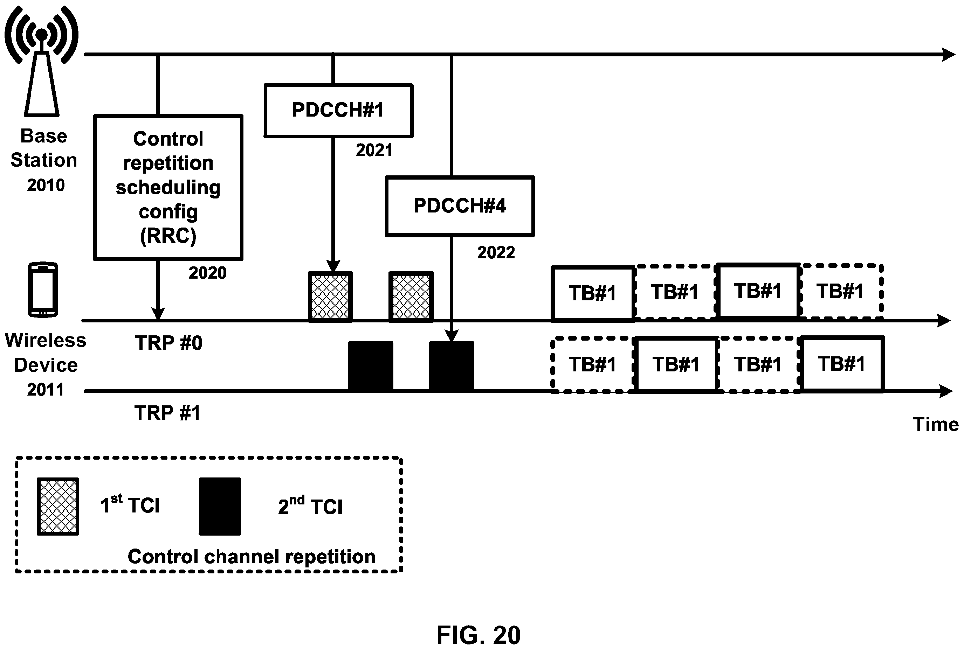

FIG. 20 shows an example of control channel repetition across a plurality of TRPs (or a plurality of coreset pools). The base station 2010 may send (e.g., transmit) one or more RRC messages 2020 comprising configuration parameters. The configuration parameters may indicate/comprise a first TRP (TRP #0) and a second TRP (TRP #1) associated with a cell. The configuration parameters may comprise/indicate control channel repetition across a multi-TRP (e.g., via the first TRP and the second TRP). The base station 2010 may send (e.g., transmit) first DCI message/PDCCH transmission (e.g., PDCCH#1 2021) via the first TRP or a first coreset pool. The first DCI message/PDCCH transmission may comprise/indicate resources scheduling a TB via the multi-TRP. The base station 2010 may send (e.g., transmit) second DCI message/PDCCH transmission (e.g., PDCCH#2) via the second TRP or a second coreset pool. The second DCI message/PDCCH transmission may comprise/indicate the resources scheduling the TB via the multi-TRP. The first DCI message/PDCCH transmission and the second DCI message/PDCCH transmission may indicate a same HARQ process index (e.g., HARQ-K) scheduling the TB. The base station 2010 may send (e.g., transmit) a third DCI message/PDCCH transmission via the first TRP. The base station 2010 may send (e.g., transmit) a fourth DCI message/PDCCH transmission (e.g., PDCCH#4 2022) via the second TRP. A control information scheduling the TB may be repeated four times via a plurality of TRPs. A wireless device 2011 may monitor the first DCI message/PDCCH transmission 2021 and the third DCI message/PDCCH transmission based on a first TCI state, associated with the first TRP or the first coreset pool. The wireless device 2011 may monitor the second DCI message/PDCCH transmission and the fourth DCI message/PDCCH transmission 2022 based on a second TCI state, associated with the second TRP or the second coreset pool.

The base station 2010 may repeat the TB via four repetitions of the first TRP and via four repetitions of the second TRP. The wireless device 2011 may repeat the TB simultaneously via the first TRP and the second TRP, for example, if the wireless device 2011 supports simultaneous reception via the first TRP and the second TRP. The base station 2010 may send (e.g., transmit) the repeated transmission of the TB via the first TRP and the second TRP based on a time-domain division multiplexing, for example, if the wireless device 2011 does not support simultaneous reception via the first TRP and the second TRP. For example, the base station 2010 may send (e.g., transmit) a first repetition of the repeated transmission via the first TRP. The base station 2010 may send (e.g., transmit) a second repetition of the repeated transmission via the second TRP. A switching pattern between the first TRP and the second TRP may be configured by the base station 2010 based on RRC/MAC-CE/DCI signaling. The first DCI and the second DCI may schedule the repeated transmissions of the TB. Control channel repetition via a plurality of TRPs may enhance reliability and lead to better QoS experience.

A base station 2010 may send (e.g., transmit) one or more RRC messages 2020 comprising configuration parameters. The configuration parameters may indicate control channel repetition enabled for a cell. The base station 2010 may send (e.g., transmit) a plurality of DCI messages/PDCCH transmissions scheduling a transport block via a plurality of coresets of the cell. For example, the configuration parameters may configure a first coreset and a second coreset for the control channel repetition. The configuration parameters may comprise/indicate a first search space associated with the first coreset. The configuration parameters may comprise/indicate a second search space associated with the second coreset. The configuration parameters may comprise/indicate a first TCI state associated with the first coreset. The configuration parameters may comprise/indicate a second TCI state associated with the second coreset. The first TCI state may be the same as or different from the second TCI state. The configuration parameters may comprise/indicate a set of first TCI states associated with the first coreset. One or more MAC CEs may indicate the first TCI state of the set of the first TCI states for the first coreset. For example, the configuration parameters may comprise/indicate a set of second TCI states associated with the second coreset. One or more second MAC CEs may indicate the second TCI state of the set of the second TCI states for the second coreset. The configuration parameters may indicate the first coreset and the second coreset are associated to schedule repeated DCI messages/PDCCH transmissions for a transport block.

The configuration parameters may indicate/comprise a search space associated with the first coreset and the second coreset. The configuration parameters may indicate/comprise a plurality of coreset indexes. The configuration parameters may comprise a coreset index, of the plurality of coreset indexes, indicating the first coreset. The configuration parameters may indicate/comprise one or more indexes, of the plurality of coreset indexes, of repeated/additional coresets (e.g., coresets used for control channel repetition in addition to the first coreset, the second coreset). For example, an index of the one or more indexes may indicate the second coreset. First parameters of the first coreset and second parameters of the second coreset may have restriction in terms of configuration, for example, if the first coreset and the second coreset are associated for control channel repetition. For example, a set of resource blocks (RB) in frequency domain of the first coreset may be the same as (or a subset of or a superset of) a set of resource block(s) in frequency domain of the second coreset. The wireless device 2011 may determine a set of RBs belonging to the first coreset and the second coreset for the control channel repetition. For example, a first duration of the first coreset may be the same as a second duration of the second coreset. For example, a number/quantity of REGs of the first coreset may be the same as a number/quantity of REGs. For example, a number/quantity of CCEs of the first coreset may be the same as (or less than or larger than) a number/quantity of CCEs of the second coreset. The wireless device 2011 may determine a number/quantity of REGs based on the determined set of RBs or based on the set of RBs of the first coreset. For example, a first CCE-to-REG mapping type of the first coreset (e.g., between interleaved or non-interleaved) may be the same as a second CCE-to-REG mapping type of the second coreset. For example, a precoder granularity of the first coreset may configured as same to a precoder granularity of the second coreset. For example, a first tci-PresenceInDCI of the first coreset may same as a second tci-PresenceInDCI of the second coreset. For example, a first rb-Offset of the first coreset may be the same as a second rb-Offset of the second coreset.

The first coreset and the second coreset may have potentially different configurations for one or more parameters. For example, the one or more parameters may comprise one or more TCI states. For example, the one or more parameters may comprise DM-RS scrambling identity (e.g., pdcch-DMRS-ScramblingID). For example, the one or more parameters may comprise a coreset pool index (e.g., coresetPoolIndex). For example, the one or more parameters may comprise a coreset index.

The wireless device 2011 may determine whether a first number/quantity of CCEs of the first coreset is less than or equal to (or greater than or equal to) a second number/quantity of CCEs of the second coreset, for example, if the wireless device 2011 receives first configuration parameters of the first coreset and second configuration parameters of the second coreset. Based on the determining, the wireless device 2011 may consider the first coreset and the second coreset may be used for control channel repetition. Otherwise, the wireless device 2011 may determine the first coreset, and the second coreset might not be used for the control channel repetition. Alternatively, the wireless device 2011 may determine a smallest number/quantity of CCEs (e.g., M) among one or more of CCEs of one or more coresets (e.g., determine a coreset of the one or more coresets with a smallest number/quantity of CCEs). For example, the one or more coresets may be configured/indicated/used for control channel repetition. The wireless device 2011 may determine/assume/consider that first M candidates of each coreset of the one or more coresets are used for the control channel repetition.

A wireless device 2011 may determine a number/quantity of REGs of a first coreset of one or more coresets configured for control channel repetition. The wireless device 2011 may determine a second number of REGs of a second coreset of the one or more coresets. The wireless device 2011 may determine whether the number of REGs is equal to the second number of REGs. The wireless device 2011 may consider that the control channel repetition is configured via the first coreset and the second coreset, for example, based on (e.g., after or in response to) the determination that the number/quantity of REGs is equal to the second number/quantity of REGs. Otherwise, the wireless device 2011 may consider the configuration as an error case and might not activate the control channel repetition via the first coreset and the second coreset. The wireless device 2011 may determine a smallest number/quantity of REGs of the one or more coresets (e.g., determine a coreset with a smallest number/quantity of REGs). The wireless device 2011 may assume that the smallest number/quantity of REGs used for the control channel repetition.

The configuration parameters of the search space, associated with the first coreset and the second coreset, may comprise/indicate a switching pattern or mapping pattern of the first coreset and the second coreset. For example, the wireless device may determine a search space monitoring occasion based on the configuration parameters of the search space. The wireless device may determine the search space monitoring occasion based on the first coreset. The wireless device may determine a second search space monitoring occasion or an extended monitoring occasion based on a rule. For example, the wireless device may determine the second search space monitoring occasion as a next slot of the first monitoring occasion. The wireless device may determine the second search space monitoring occasion based on the second search space. The configuration parameters may indicate a bitmap of a number/quantity of OFDM symbols in a slot (or of a number/quantity of slots, for example, a multiple slots). The bitmap may indicate 0 for the first coreset or 1 for the second coreset for each corresponding OFDM symbol or a slot. The wireless device may monitor a search space monitoring occasion based on the first coreset, for example, if 0 is indicated for an OFDM symbol. The wireless device may monitor a second search space monitoring occasion based on a second coreset, for example, if 1 is indicated for a second OFDM symbol.

A wireless device may receive one or more RRC messages comprising configuration parameters. The configuration parameters may indicate/comprise a coreset of a bandwidth part of a cell. The configuration parameters may comprise parameters of a search space associated with the coreset. The parameters of the search space may indicate a first monitoring periodicity in a unit of a first time duration. For example, the first time duration may be a slot or a few slots. The parameters of the search space may indicate a second monitoring periodicity in a unit of a second time duration. For example, the second time duration may be an OFDM symbol or a few OFDM symbols or a slot. For example, the second time duration may be smaller than the first time duration. The wireless device may monitor one or more repeated DCI messages/PDCCH transmissions via one or more monitoring occasions determined based on the second monitoring periodicity within the first monitoring periodicity. For example, the configuration parameters may indicate the one ore monitoring occasions within the first monitoring periodicity.

For example, the wireless device may receive/monitor first DCI message/PDCCH transmission of the one or more repeated DCI messages/PDCCH transmissions via a first monitoring occasion of the one or more monitoring occasions. The wireless device may receive/monitor second DCI message/PDCCH transmission of the one or more repeated DCI messages/PDCCH transmissions via a second monitoring occasion of the one or more monitoring occasions. The first DCI message/PDCCH transmission may be the same as the second DCI message/PDCCH transmission. The first DCI message/PDCCH transmission and the second DCI message/PDCCH transmission may indicate the same resource(s) for a transport block. The wireless device may receive/monitor DCI via the one or more monitoring occasions, where a search space candidate for the DCI may comprise one or more candidates of the one or more monitoring occasions. For example, the search space candidate may comprise a first candidate of the first monitoring occasion and a second candidate of the second monitoring occasion. For example, a first starting CCE index of the first candidate of the first monitoring occasion may be the same as a second starting CCE index of the second candidate of the second monitoring occasion.

The wireless device may receive/monitor the DCI message/PDCCH transmission via the one or more monitoring occasions, where the search space candidate for the DCI message/PDCCH transmission may comprise one or more CCEs from the one or more monitoring occasions. For example, the coreset may be associated with a plurality of TCI states as active TCI states. For example, the plurality of TCI states may be activated via one or more RRC messages or MAC CEs or DCIs. The wireless device may monitor the first monitoring occasion based on a first TCI of the plurality of TCI states. The wireless device may monitor the second monitoring occasion based on a second TCI of the plurality of TCI states.

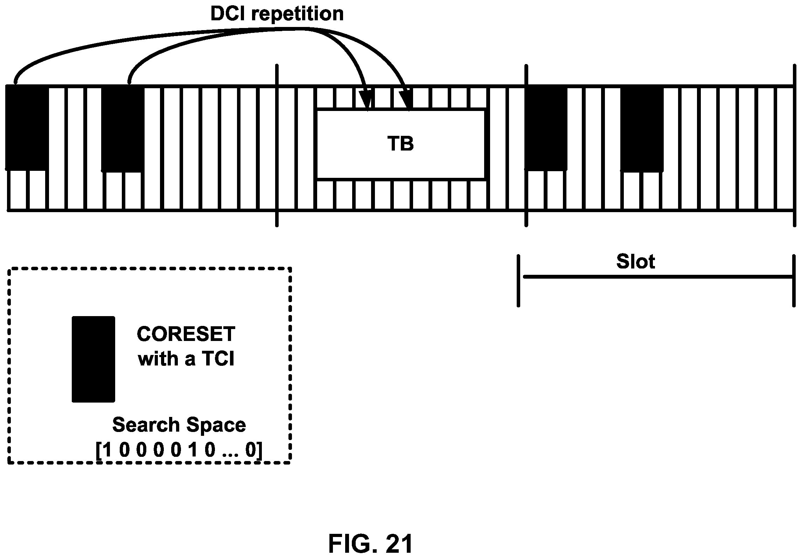

FIG. 21 shows an example of repetition. The repetition may comprise repetitions using a plurality of transmission and reception points (TRPs) and/or a plurality of coresets. A base station may send/transmit, to a wireless device that may receive, one or more RRC messages comprising configuration parameters. The configuration parameters may comprise/indicate a coreset associated with an active TCI state. The base station may activate the active TCI state via the one or more RRC messages, one or more MAC CEs, or one or more DCI messages. The configuration parameters may comprise/indicate a bitmap indicating one or more monitoring occasions for a control channel repetition. A bitmap size may be 14 (e.g., the bitmap corresponds to a slot where each bit maps to each OFDM symbol), such as shown in FIG. 21, and/or any other quantity of bits (e.g., less than 14, greater than 14, etc.). The bitmap may indicate monitoring occasions of a 1st OFDM symbol and a 6th OFDM symbol of a slot (or any other symbol of a slot). The configuration parameters may indicate/comprise a first monitoring periodicity as two slots (e.g., monitor in every two slots), or any other quantity of slots. The wireless device may determine one or more monitoring occasions, for example, in each monitoring periodicity, based on the bitmap. The wireless device may determine a monitoring occasion starting at a first OFDM symbol of a slot (or any other symbol of a slot), for example, if the bitmap is not present. The wireless device may determine a first monitoring occasion and/or a second monitoring occasion, for example, based on the bitmap in each monitoring periodicity. The wireless device may determine any quantity of monitoring occasions. The wireless device may monitor the first monitoring occasion and/or the second monitoring occasion for receiving one or more DCI messages/PDCCH transmissions scheduling at least one transport block.

The configuration parameters may indicate (e.g., for a search space) one or more monitoring occasions within a monitoring periodicity. For example, a periodicity value (e.g., monitoringSlotPeriodicityAndOffset) may determine the monitoring periodicity. The wireless device may determine the monitoring periodicity, for example, based on a gap between each monitoring occasion within the slot based on one or more parameters (e.g., the monitoringSymbolWithinSlot, if parameters may comprise a monitoringSymbolWithinSlot). The wireless device may expect/determine an equal interval between monitoring occasions within the slot. Additionally or alternatively, the parameters may not comprise the one or more parameters (e.g., the monitoringSymbolsWithinSlot), for example, if the search space is used for a control channel repetition. The one or more parameters (e.g., monitoringSymbolsWithinSlot) may be used to indicate the one or more monitoring occasions within a monitoring periodicity determined. The one or more parameters may be used to indicate the one or more monitoring occasions within a monitoring periodicity determined based on a periodicity and/or offset parameter (e.g., the monitoringSlotPeriodicityAndOffset), for example, if a control channel repetition is enabled. A parameter to indicate enabling of the control channel repetition may be configured for the search space and/or for a coreset associated with the search space and/or a DCI format monitored via the search space. A duration of the search space may be used to determine the one or more monitoring occasions within the monitoring periodicity. The wireless device may determine the one or more monitoring occasions based on the monitoring periodicity and the duration, for example, if the monitoring periodicity is larger than a slot. The wireless device may determine a first monitoring occasion of the one or more monitoring occasions based on a parameter (e.g., the monitoringSlotPeriodicityAndOffset), for example, if the monitoring periodicity is P slots and the duration is D. The wireless device may determine a second monitoring occasion of the one or more monitoring occasions as a next slot of the first monitoring occasion. The wireless device may determine D number of monitoring occasions starting from the first monitoring occasions in consecutive slots. The search space may comprise a plurality of control resource set IDs (e.g., a controlResourceSetID and/or a second controlResourceSetID), for example, if a search space is configured/associated with a plurality of coresets.

A base station may send/transmit a first DCI message/PDCCH transmission via a first monitoring occasion of the one or more monitoring occasions. The base station may send/transmit a second DCI message/PDCCH transmission via a second monitoring occasion of the one or more monitoring occasions. The first DCI message/PDCCH transmission and the second DCI message/PDCCH transmission may indicate same resource(s) for a transport block. A first content of the first DCI message/PDCCH transmission may be the same as or different from a second content of the second DCI message/PDCCH transmission. The wireless device may determine/attempt to decode the first DCI message/PDCCH transmission independently from the second DCI message/PDCCH transmission. The wireless device may not assume/determine that the base station may send/transmit the first DCI message/PDCCH transmission and the second DCI message/PDCCH transmission. The base station may send/transmit one or more DCI messages/PDCCH transmissions via/in/over the one or more monitoring occasions. The base station may send/transmit a single DCI message/PDCCH transmission via/in/over the one or more monitoring occasions. The base station may send/transmit DCI message/PDCCH transmission via/in/over each monitoring occasion. The base station may send/transmit any number of repeated DCI messages/PDCCH transmissions via/in/over the one or more monitoring occasions.

The base station may indicate that the first control channel repetition mode is used for the one or more monitoring occasions. The wireless device may determine a number/quantity of the one or more monitoring occasions O in a monitoring periodicity, for example, based on the first control channel repetition mode. A monitoring occasion of the one or more monitoring occasions is indexed from 0, ..., O-1, for example, based on a time-first manner. The wireless device may attempt to decode one or more search space candidates aggregating candidates from the monitoring occasion from 0 to i (e.g., i = 0, ..., O-1 or i = 0, 1, 3, 7, ...). The wireless device may attempt to decode a first candidate aggregating a candidate from a first monitoring occasion of the one or more monitoring occasions, for example, if O is 4. The wireless device may attempt to decode a second candidate aggregating the candidate and another candidate from a second monitoring occasion of the one or more monitoring occasions. The wireless device may attempt to decode a fourth candidate aggregating each candidate of each monitoring occasion of the one or more monitoring occasions. The wireless device may aggregate candidates from the one or more monitoring occasions where a starting CCE index of a candidate of the candidates is the same. The wireless device may determine candidates, for example, based on a rule. The wireless device may determine candidates of same frequency resources in each monitoring occasion. The wireless device may determine candidates of same REGs (or same REG indexes) in each monitoring occasion.

A wireless device may determine each list of candidates. The wireless device may determine each list of candidates via each monitoring occasion of one or more monitoring occasions. The one or more monitoring occasions may be within a monitoring periodicity of a search space. The wireless device may determine a list of candidates across the one or more monitoring occasions, for example, based on each list of candidates. The list of candidates may comprise one or more candidates of an aggregation level. The wireless device may determine a first list of candidates of a first aggregation level 2 * L, for example, based on two candidates over two monitoring occasions of aggregation level L or four candidates over four monitoring occasions of aggregation level L/2.

A base station may indicate four monitoring occasions in a monitoring periodicity indexed from first to fourth monitoring occasions, for example, for determination of one or more search space candidates of an aggregation level across one or more monitoring occasions. A set of candidates for an aggregation level may be assumed to be consistent across the four monitoring occasions. A first candidate of an aggregation level 2 may start in a third CCE and a second candidate of the aggregation level 2 may start in a fifth CCE. A first candidate of an aggregation level 4 may start in N_CCE (e.g., a number of CCEs) - 8th CCE and a second candidate of the aggregation level 4 may start in N_CCE - fourth CCE. The wireless device may determine a list of candidates with an aggregation level 8, for example, by combining/aggregating four candidates (one candidate from one monitoring occasion each) of the aggregation level 2 and/or by combining/aggregating two candidates (one candidate from one monitoring occasion each) of the aggregation level 4. A first box in the left and a second small box in the right show AL = 8 candidates. The wireless device may determine more candidates, for example, by aggregating/combining second candidates of AL=2 and/or second candidates of AL = 4. The wireless device may determine a candidate of aggregation level (AL) = 16, for example, by combining/aggregating four candidates of AL = 4. The wireless device may determine two AL = 16.

The wireless device may not aggregate candidates wherein the candidates may not comprise a candidate from the first monitoring occasion (or 1st monitoring occasion, an earliest monitoring occasion in a monitoring periodicity). The wireless device may determine possible aggregation levels and/or candidates by aggregating candidates from a 1st monitoring occasion, 1st + 2nd monitoring occasions, 1st + 2nd + 3rd + 4th monitoring occasions, 1st+2nd+3rd+4th+5th-6th+7th+8th, ..., and so on.

The wireless device may determine a list of candidates for an aggregation level, for example, based on a hashing function applied/used in each slot. Same candidates may be determined, for example, if a first monitoring occasion and a second monitoring occasion reside in a same slot. Different candidates may be determined, for example, if a first monitoring occasion and a second monitoring occasion do not reside in a same slot. A base station may send/transmit DCI over a candidate of the across the one or more monitoring occasions.

The base station may send/transmit one or more messages comprising configuration parameters. The configuration parameters may comprise/indicate a search space group for a control channel repetition. The search space group may comprise one or more search spaces. The search group may comprise a first search space of a first carrier and a second search space of a second carrier. The search space group may comprise a first search space of a first BWP of a cell and a second search space of a second BWP of the cell. The search space group may comprise a first search space of first BWP of a first cell and a second search space of a second BWP of a second cell. The configuration parameters may indicate one or more search space groups, for example, for a BWP of a cell. A search space group of the one or more search space groups may be associated/configured with one or more DCI formats. A wireless device may determine a search space group, for example, based on one or more search spaces configured/associated with the BWP of the cell. Each search space of the one or more search spaces may be configured to monitor a DCI format of the one or more DCI formats. The one or more DCI formats may comprise a DCI format 1_1 and a DCI format 0_1. The one or more DCI formats may comprise a DCI format 0_0 and a DCI format 1_0. The one or more DCI formats may comprise a DCI format 1_2 and a DCI format 0_2. The one or more DCI formats may comprise a DCI format 3_0 and a DCI format 3_1. The one or more DCI formats may comprise downlink/uplink DCI messages of non-fallback DCI messages. The one or more DCI formats may comprise downlink/uplink DCI messages of fallback DCI messages. The one or more DCI formats may comprise DCI format(s) of sidelink DCI messages.

The wireless device may determine a search space candidate. The wireless device may determine the search space candidate from/over the one or more search space of the search space group in a similar manner addressed for a control repetition, for example, based on a plurality of coresets. The wireless device may determine one or more monitoring occasions in a slot, for example, based on the one or more search spaces. The wireless device may determine one or more first monitoring occasions, for example, in a slot n, based on a first search space of the one or more search spaces. The wireless device may determine, in the slot n, one or more second monitoring occasions, for example, based on a second search space of the one or more search spaces. The wireless device may monitor the one or more first monitoring occasions and the one or more second monitoring occasions in the slot n. The wireless device may not expect to have overlap between a monitoring occasion of a search space of the one or more search spaces and a second monitoring occasion of a second search space of the one or more search spaces in a time domain. The wireless device may monitor one or more repeated DCI messages, for example, based on the DCI format via the one or more monitoring occasions in the slot.

The one or more repeated DCI messages may be transmitted/sent, by the base station, via one or more PDCCHs. Each PDCCH may carry/transmit each DCI. Each DCI of the one or more repeated DCI messages may have same content or different content. The wireless device may aggregate the one or more repeated DCI messages if each DCI may have same content. The one or more repeated DCI messages may be transmitted/sent via a PDCCH. The PDCCH may be transmitted/sent over one or more search space candidates of the one or more search spaces. DCI may be transmitted/sent repeatedly via one or more PDCCHs. Each PDCCH may carrier/transmit the DCI repeatedly.

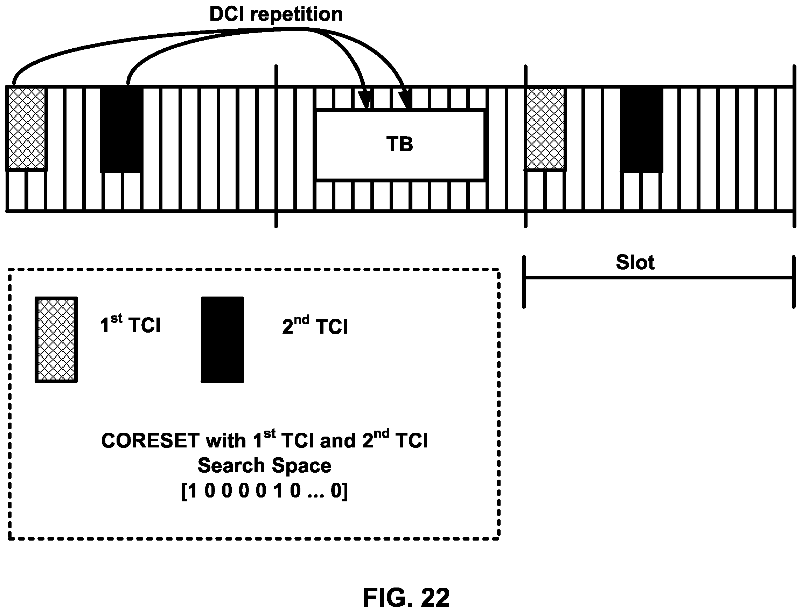

FIG. 22 shows an example of repetition of downlink control information. The repetition may use one or more coresets. A coreset may be associated with one or more TCI states as active TCI states. The base station may associate a plurality of TCI states with a coreset as the active TCI states. The base station may indicate a plurality of monitoring occasions within a slot or in a monitoring periodicity for a control channel repetition. A wireless device may monitor a first monitoring occasion, for example, based on a first TCI state of the plurality of TCI states. The wireless device may monitor a second monitoring occasion, for example, based on a second TCI state of the plurality of TCI states. The base station may indicate a pattern to switch between the plurality of TCI states. Configuration parameters of a search space associated with the coreset may comprise/indicate enabling a control channel repetition. The configuration parameters may comprise/indicate enabling a TCI switching or enabling the control channel repetition via a plurality of TCI states. The configuration parameters may comprise/indicate a switching pattern. The switching pattern may be an alternating between a first TCI state of the plurality of TCI states and a second TCI state of the plurality of TCI states in each monitoring occasion of one or more monitoring occasions within a monitoring periodicity or a slot or within a few slots (e.g., between a monitoring periodicity configured by monitoringSlotPeriodicityAndOffset parameter of the search space). The switching pattern may be a half-half between the first TCI state and the second TCI state. A number of the one or more monitoring occasions is K. The wireless device may monitor first floor (K/2) monitoring occasion(s), for example, based on the first TCI state. The wireless device may monitor remaining monitoring occasion(s), for example, based on the second TCI state within the monitoring periodicity. The switching pattern may be a bitmap to indicate a TCI state in each monitoring occasion of the one or more monitoring occasions.

A wireless device may receive one or more messages. The wireless device may receive the one or more messages from a base station. The one or more messages may comprise one or more configuration parameters. The one or more configuration parameters may be RRC configuration parameter(s) and/or RRC reconfiguration parameter(s).

The one or more configuration parameters may be for a cell. At least one configuration parameter of the one or more configuration parameters may be for a cell. The cell may be a primary cell (PCell). The cell may be a secondary cell (SCell). The cell may be a secondary cell configured with PUCCH (e.g., PUCCH SCell). The cell may be an unlicensed cell (e.g., operating in an unlicensed band). The cell may be a licensed cell (e.g., operating in a licensed band). The cell may operate in a first frequency range (e.g., FR1). The FR1 may, for example, comprise frequency bands below 6 GHz. The cell may operate in a second frequency range (e.g., FR2). The FR2 may, for example, comprise frequency bands from 24 GHz to 52.6 GHz. The cell may operate in any frequency range (e.g., comprising any frequency band(s)).

The wireless device may perform uplink transmissions (e.g., PUSCH, PUCCH, SRS) via the cell in/during a first time period and in/using a first frequency. The wireless device may perform downlink receptions (e.g., PDCCH, PDSCH) via the cell in/during a second time period and in/using a second frequency. The cell may operate in a time-division duplex (TDD) mode. The first frequency and the second frequency may be the same, for example, in the TDD mode. The first time and the second time may be different, for example, in the TDD mode. The cell may operate in a frequency-division duplex (FDD) mode. The first frequency and the second frequency may be different, for example, in the FDD mode. The first time and the second time may be the same, for example, in the FDD mode.

The wireless device may be in an RRC connected mode, an RRC idle mode, and/or an RRC inactive mode. The cell may comprise a plurality of BWPs. The plurality of BWPs may comprise one or more uplink BWPs comprising an uplink BWP of the cell. The plurality of BWPs may comprise one or more downlink BWPs comprising a downlink BWP of the cell.

A BWP of the plurality of BWPs may be in one of an active state and an inactive state. The wireless device may monitor a downlink channel/signal (e.g., PDCCH, DCI, CSI-RS, PDSCH) on/for/via the downlink BWP, for example, in the active state of a downlink BWP of the one or more downlink BWPs. The wireless device may receive a PDSCH transmission on/via/for the downlink BWP, for example, in the active state of a downlink BWP of the one or more downlink BWPs. The wireless device may not monitor a downlink channel/signal (e.g., PDCCH, DCI, CSI-RS, PDSCH) on/via/for the downlink BWP, for example, in the inactive state of a downlink BWP of the one or more downlink BWPs. The wireless device may stop monitoring (or receiving) a downlink channel/signal (e.g., PDCCH, DCI, CSI-RS, PDSCH) on/via/for the downlink BWP, for example, in the inactive state of a downlink BWP of the one or more downlink BWPs. The wireless device may not receive a PDSCH transmission on/via/for the downlink BWP, for example, in the inactive state of a downlink BWP of the one or more downlink BWPs. The wireless device may stop receiving a PDSCH transmission on/via/for the downlink BWP, for example, in the inactive state of a downlink BWP of the one or more downlink BWPs.

The wireless device may send/transmit an uplink signal/channel (e.g., PUCCH, preamble, PUSCH, PRACH, SRS, etc.) on/via the uplink BWP, for example, in the active state of an uplink BWP of the one or more uplink BWPs. The wireless device may not send/transmit an uplink signal/channel (e.g., PUCCH, preamble, PUSCH, PRACH, SRS, etc.) on/via the uplink BWP, for example, in the inactive state of an uplink BWP of the one or more uplink BWPs.

The wireless device may activate the downlink BWP of the one or more downlink BWPs of the cell. The activating the downlink BWP may comprise that the wireless device sets (or switches to) the downlink BWP as an active downlink BWP of the cell. The activating the downlink BWP may comprise that the wireless device sets the downlink BWP in the active state. The activating the downlink BWP may comprise switching the downlink BWP from the inactive state to the active state.

The wireless device may activate the uplink BWP of the one or more uplink BWPs of the cell. The activating the uplink BWP may comprise that the wireless device sets (or switches to) the uplink BWP as an active uplink BWP of the cell. The activating the uplink BWP may comprise that the wireless device sets the uplink BWP in the active state. The activating the uplink BWP may comprise switching the uplink BWP from the inactive state to the active state.

The one or more configuration parameters may be for the (active) downlink BWP of the cell. At least one configuration parameter of the one or more configuration parameters may be for the downlink BWP of the cell.

The one or more configuration parameters may be for the (active) uplink BWP of the cell. At least one configuration parameter of the one or more configuration parameters may be for the uplink BWP of the cell.

The one or more configuration parameters may indicate one or more coresets. The one or more configuration parameters may indicate the one or more coresets for the (active) downlink BWP of the cell. The (active) downlink BWP of the cell may comprise the one or more coresets.

The one or more configuration parameters may indicate one or more coreset indexes (e.g., provided by a higher layer parameter ControlResourceSetId) for the one or more coresets. Each coreset of the one or more coresets may be identified/indicated by a respective coreset index of the one or more coreset indexes. A first coreset of the one or more coresets may be identified by a first coreset index of the one or more coreset indexes. A second coreset of the one or more coresets may be identified/indicated by a second coreset index of the one or more coreset indexes. A coreset index may be a coreset identifier.

The one or more configuration parameters may indicate one or more search space sets, e.g., for the downlink BWP of the cell (e.g., by a higher layer parameter SearchSpace). The one or more configuration parameters may indicate one or more search space sets, e.g., for the cell (e.g., by a higher layer parameter SearchSpace).

The one or more configuration parameters may indicate search space set indexes/identifiers (e.g., provided by a higher layer parameter searchSpaceId) for the one or more search space sets. Each search space set of the one or more search space sets may be identified/indicated by a respective search space set index of the search space set indexes. A first search space set of the one or more search space sets may be identified/indicated by a first search space set index of the search space set indexes. A second search space set of the one or more search space sets may be identified/indicated by a second search space set index of the search space set indexes.

A search space set of the one or more search space sets may be associated with (or linked to) a coreset of the one or more coresets. The one or more configuration parameters may indicate the coreset (or a coreset index of the coreset) for the search space set (e.g., provided by a higher layer parameter controlResourceSetId in the higher layer parameter SearchSpace). The association (or the linkage) may be one-to-one. The association being one-to-one may comprise the search space set associated with (or linked to) the coreset not being associated (or linked to) a second coreset that is different from the coreset.

The one or more configuration parameters may indicate the one or more coreset indexes for the one or more search space sets (e.g., provided by a higher layer parameter controlResourceSetId in the higher layer parameter SearchSpace). Each search space set of the one or more search space sets may be associated with (or linked to) a coreset, of the one or more coresets, identified by a respective coreset index of the one or more coreset indexes. The one or more configuration parameters may indicate the first coreset index of the first coreset for the first search space set. The one or more configuration parameters may indicate the first coreset index of the first coreset in a first coreset index field (e.g., provided by a higher layer parameter controlResourceSetId in the higher layer parameter SearchSpace) of the first search space set. The first search space set may be associated with (or linked to) the first coreset, for example, based on the one or more configuration parameters indicating the first coreset index of the first coreset for the first search space set. The one or more configuration parameters may indicate the first coreset index of the first coreset for the second search space set. The one or more configuration parameters may indicate the first coreset index of the first coreset in a second coreset index field (e.g., provided by a higher layer parameter controlResourceSetId in the higher layer parameter SearchSpace) of the second search space set. The second search space set may be associated with (or linked to) the first coreset, for example, based on the one or more configuration parameters indicating the first coreset index of the first coreset for the second search space set. The one or more configuration parameters may indicate the second coreset index of the second coreset for the first search space set. The first search space set may be associated with (or linked to) the second coreset, for example, based on the one or more configuration parameters indicating the second coreset index of the second coreset for the first search space set. The one or more configuration parameters may indicate the second coreset index of the second coreset for the second search space set. The second search space set may be associated with (or linked to) the second coreset, for example, based on the one or more configuration parameters indicating the second coreset index of the second coreset for the second search space set.

The wireless device may monitor PDCCH candidates, for a downlink control signal/channel (e.g., DCI, PDCCH, RS, GC-PDCCH, DMRS, etc.), in PDCCH monitoring occasions for the search space set associated with (or linked to) the coreset, for example, based on the search space set being associated with (or linked to) the coreset. The wireless device may monitor PDCCH candidates, for DCI, in PDCCH monitoring occasions for the search space set in the coreset associated with (or linked to) the search space set, for example, based on the search space set being associated with (or linked to) the coreset. The wireless device may monitor, for DCI, a PDCCH for the search space set in the coreset associated with (or linked to) the search space set, for example, based on the search space set being associated with (or linked to) the coreset.

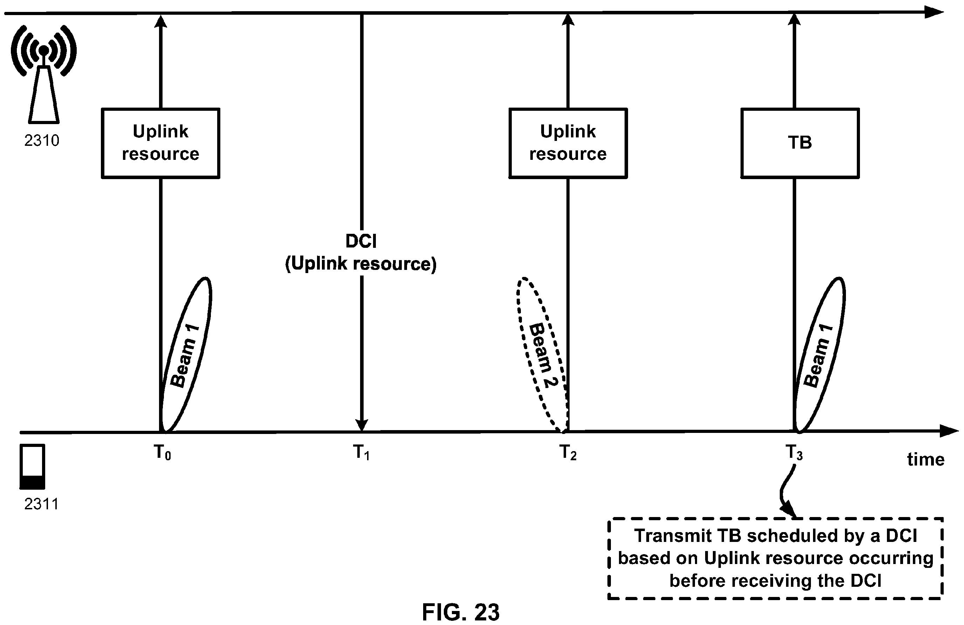

FIG. 23 shows an example of uplink transmission without control channel repetition. The one or more configuration parameters may not indicate a control channel repetition. A wireless device 2311 may receive (from a base station 2310) and/or detect a downlink control signal/channel. The downlink control signal/channel (e.g., DCI) may schedule a transport block. The DCI may indicate an activation of a configured uplink grant (e.g., Type 2 configured uplink grant). The wireless device 2311 may send/transmit, to the base station 2310, the transport block (e.g., PUSCH, TB in FIG. 23) for the configured uplink grant. The transport block may comprise one or more transport blocks.

The DCI may indicate an uplink resource (e.g., Uplink resource in FIG. 23) of the one or more uplink resources. The DCI may comprise an SRI field indicating the uplink resource. The wireless device 2311 may determine one or more transmission parameters of the uplink resource. The wireless device 2311 may determine, for transmission of the transport block, the one or more transmission parameters of the uplink resource. The wireless device 2311, for example, may use the one or more transmission parameters for transmission of an uplink signal (e.g., SRS) via the uplink resource (e.g., Beam 1 at time TO in FIG. 23) that may be configured/activated most recently before (or prior to) the receiving/detecting the DCI (e.g., time T1 in FIG. 23). The wireless device 2311 may send/transmit, via the uplink resource (e.g., to the base station 2310), the uplink signal based on the one or more transmission parameters. The wireless device 2311 may send/transmit the uplink signal via the uplink resource that may be configured/activated (e.g., most recently) before (or prior to) the receiving/detecting the DCI (e.g., time T1 in FIG. 23). Transmission of the uplink signal via the uplink resource may be the most recent/latest transmission via the uplink resource before (or prior to) the receiving/detecting the DCI. The wireless device may not send/transmit, via the uplink resource, another uplink signal after transmission of the uplink signal and before (or prior to) the receiving/detecting the DCI.

The one or more transmission parameters may comprise a spatial relation information parameter (e.g., spatialRelationInfo, SRS-SpatialRelationInfo) indicating a spatial relation. The one or more configuration parameters, for example, may indicate the spatial relation for the uplink resource. The wireless device 2311, for example, may receive an activation command (e.g., AP/SP SRS Activation/Deactivation MAC CE, PUCCH spatial relation Activation/Deactivation MAC CE) indicating/activating the spatial relation for the uplink resource. The wireless device 2311 may send/transmit, via the uplink resource, the uplink signal based on the spatial relation (e.g., Beam 1 at time T0 in FIG. 23). The wireless device 2311 may send/transmit, via the uplink resource, the uplink signal based on the spatial relation, for example before (or prior to) the receiving/detecting the DCI.

The spatial relation may indicate a reference signal (e.g., CSI-RS, SSB/PBCH block, SRS, DM-RS). The wireless device 2311 may determine a spatial domain transmission filter based on the reference signal indicated by the spatial relation. The wireless device 2311 may send/transmit, via the uplink resource, the uplink signal with/using the spatial domain transmission filter. Transmitting/sending, via the uplink resource, the uplink signal based on the spatial relation may comprise transmitting/sending, via the uplink resource, the uplink signal with the spatial domain transmission filter determined based on the reference signal indicated by the spatial relation. The wireless device 2311 may send/transmit, via the uplink resource (e.g., to the base station 2310), the uplink signal with the spatial domain transmission filter, for example before (or prior to) the receiving/detecting the DCI.

At least one DMRS antenna port of the uplink signal transmitted/sent via the uplink resource may be quasi co-located with the reference signal indicated by the spatial relation. Transmitting/sending, via the uplink resource, the uplink signal based on the spatial relation may comprise at least one DMRS antenna port of the uplink signal transmitted/sent via the uplink resource being quasi co-located with the reference signal indicated by the spatial relation. The at least one DMRS antenna port of the uplink signal transmitted/sent via the uplink resource may be quasi co-located with the reference signal, for example, before (or prior to) the receiving/detecting the DCI.

The wireless device 2311 may send/transmit the transport block at time T3, as shown in FIG. 23. The transmission may be based on the one or more transmission parameters of the uplink resource (e.g., Beam 1). The wireless device 2311 may send/transmit the transport block based on the one or more transmission parameters that are used/configured/activated for the uplink resource (e.g., most recently) before (or prior to) the receiving/detecting the DCI (e.g., before time T1 in FIG. 23). The wireless device 2311 may send/transmit the transport block based on the one or more transmission parameters that are used/configured/activated for the uplink resource (e.g., most recently) before (or prior to) the receiving/detecting the DCI, after (e.g., based on or in response to) the one or more configuration parameters not indicating the control channel repetition. The wireless device 2311 may send/transmit the transport block based on the one or more transmission parameters that are used for transmission of the uplink signal via the uplink resource, for example, most recently before (or prior to) the receiving/detecting the DCI. The wireless device 2311 may send/transmit the transport block based on the one or more transmission parameters that are used for transmission of the uplink signal via the uplink resource (e.g., most recently) before (or prior to) the receiving/detecting the DCI, after (e.g., based on or in response to) the one or more configuration parameters not indicating the control channel repetition.

The wireless device 2311 may send/transmit the transport block based on the spatial relation of the uplink resource (e.g., Beam 1). The wireless device 2311 may send/transmit the transport block based on the spatial relation that is used/configured/activated for the uplink resource (e.g., most recently) before (or prior to) the receiving/detecting the DCI (e.g., before time T1 in FIG. 23). The wireless device 2311 may send/transmit the transport block based on the spatial relation that is used/configured/activated for the uplink resource (e.g., most recently) before (or prior to) the receiving/detecting the DCI, after (e.g., based on or in response to) the one or more configuration parameters not indicating the control channel repetition. The wireless device 2311 may send/transmit the transport block based on the spatial relation that is used for transmission of the uplink signal via the uplink resource, for example, most recently before (or prior to) the receiving/detecting the DCI.

The wireless device 2311 may send/transmit the transport block with/using the spatial domain transmission filter. The wireless device 2311 may send/transmit the transport block with/using the spatial domain transmission filter that is used to send/transmit the uplink signal via the uplink resource, for example, most recently before (or prior to) the receiving/detecting the DCI. The wireless device 2311 may send/transmit the transport block with/using the spatial domain transmission filter that is used to send/transmit the uplink signal via the uplink resource (e.g., most recently) before (or prior to) the receiving/detecting the DCI, after (e.g., based on or in response to) the one or more configuration parameters not indicating the control channel repetition. Transmitting/sending the transport block based on the spatial relation may comprise transmitting/sending the transport block with the spatial domain transmission filter determined based on the reference signal indicated by the spatial relation.

At least one DMRS antenna port of the transport block may be quasi co-located with the reference signal indicated by the spatial relation. Transmitting/sending the transport block based on the spatial relation may comprise at least one DMRS antenna port of the transport block being quasi co-located with the reference signal indicated by the spatial relation.

The wireless device 2311 may not use, for transmission of the transport block, one or more second transmission parameters that are used/configured/activated for another uplink resource after the receiving/detecting the DCI (and before transmission of the transport block). The wireless device 2311, for example, may use the one or more second transmission parameters (e.g., Beam 2) for transmission of a second uplink signal (e.g., SRS) via the other uplink resource after the receiving/detecting the DCI. The wireless device 2311 may send/transmit, via the other uplink resource, the second uplink signal based on the one or more second transmission parameters. The wireless device 2311 may send/transmit, via the other uplink resource, the second uplink signal after the receiving/detecting the DCI. The one or more second transmission parameters may comprise the spatial relation information parameter of the other uplink resource. The spatial relation information parameter may indicate a second spatial relation (e.g., Beam 2). The one or more configuration parameters, for example, may indicate the second spatial relation for the other uplink resource. The wireless device 2311, for example, may receive an activation command (e.g., AP/SP SRS Activation/Deactivation MAC CE, PUCCH spatial relation Activation/Deactivation MAC CE) indicating/activating the second spatial relation for the other uplink resource. The wireless device 2311 may activate the second spatial relation for the other uplink resource after the receiving/detecting the DCI.

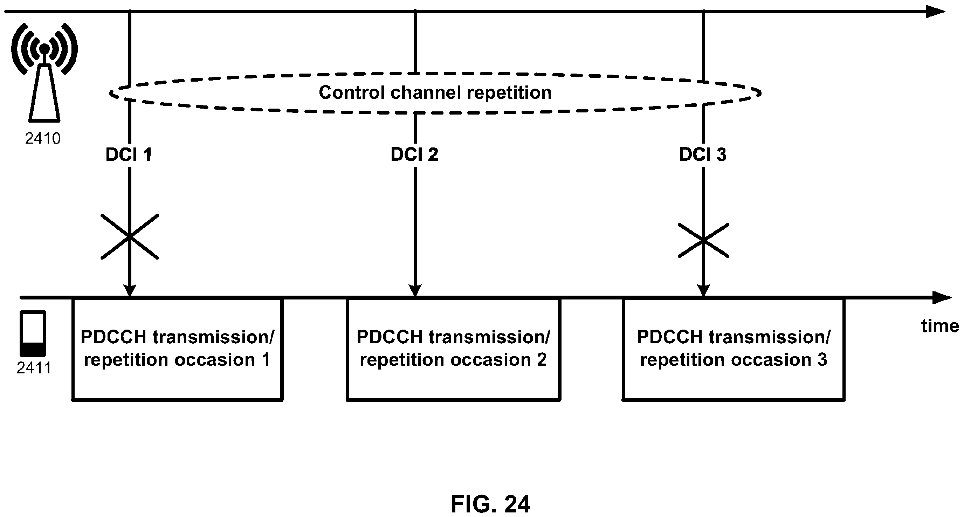

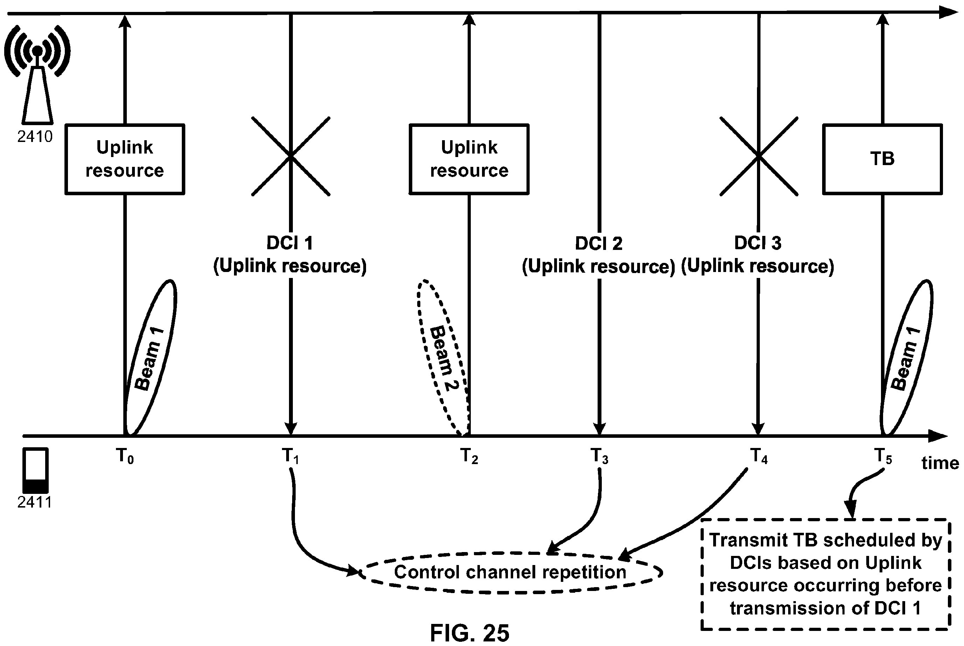

FIG. 24 shows an example of control channel repetition. FIG. 25 show an example of uplink transmission with control channel repetition. A base station 2410 may send/transmit one or more messages to a wireless device 2411. The one or more messages may be repetitions of a control signal/channel message. The control signal/channel message may comprise a downlink control signal/channel (e.g., DCI message/PDCCH transmission) comprising/indicating one or more configuration parameters.

The base station 2410 may send/transmit, for example, DCI 1, DCI 2, DCI 3 in repetitions. The DCI 1, DCI 2, DCI 3 may comprise repetitions of the downlink control signal/channel message, as shown in FIG. 24. The DCI 1 may comprise a first/initial repetition of the downlink control signal/channel at time T1, as shown in FIG. 25. The DCI 2 may comprise a second repetition of the downlink control signal/channel at time T3. The DCI 3 may comprise a last repetition of the downlink control signal/channel at time T4. The DCI 1, DCI 2, DCI 3 may have the same content. The same content may include/indicate, for example, a number/quantity of repetitions (e.g., 3) of the downlink control signal/channel.

The one or more configuration parameters may indicate a control channel repetition (e.g., PDCCH repetition/aggregation). The one or more configuration parameters may comprise a control channel repetition enabling parameter that enables (or activates or indicates) the control channel repetition. The control channel repetition may comprise a repetition of a downlink control signal/channel (e.g., PDCCH, DCI). The one or more configuration parameters may indicate a number/quantity of repetitions for the control channel repetition. The wireless device 2411 may receive DCI (e.g., DCI 2) indicating a number/quantity of repetitions for the control channel repetition. The DCI 2 may comprise a field (e.g., DCI subframe/slot repetition number field) indicating the number/quantity of repetitions.

The number/quantity of repetitions, for example, may be a number/quantity of repetitions of the downlink control signal/channel (e.g., PDCCH, DCI). The base station 2410 may send/transmit a plurality of DCI messages/PDCCH transmissions (e.g., DCI 1, DCI 2 and DCI 3 in FIG. 24 and FIG. 25) for the repetition of the downlink control signal/channel. The wireless device 2411 may monitor, for the plurality of DCI messages/PDCCH transmissions for the repetition of the downlink control signal/channel, the one or more coresets. A number/quantity of the plurality of DCI messages/PDCCH transmissions may be equal to the number/quantity of repetitions (e.g., the number of repetitions is equal to 3 in FIG. 24 and FIG. 25). Each DCI message/PDCCH transmission of the plurality of DCI messages/PDCCH transmissions may be the same (or may have the same content, e.g., same DCI fields, same value for the DCI fields, etc). Each DCI message/PDCCH transmission of the plurality of DCI messages/PDCCH transmissions may be the same as the downlink control signal/channel.

The one or more coresets may be a coreset. The base station 2410 may send/transmit the plurality of DCI messages/PDCCH transmissions via the coreset. The wireless device 2411 may monitor, for the plurality of DCI messages/PDCCH transmissions, the coreset. The one or more configuration parameters may indicate the coreset for the control channel repetition.

The one or more coresets may be a coreset. The base station 2410 may send/transmit the plurality of DCI messages/PDCCH transmissions via a search space (or a search space set) of the coreset. The wireless device 2411 may monitor, for the plurality of DCI messages/PDCCH transmissions, the search space of the coreset. The one or more configuration parameters may indicate the search space for the control channel repetition.

The one or more coresets may be a coreset. The base station 2410 may send/transmit the plurality of DCI messages/PDCCH transmissions via a plurality of search spaces (or search space sets) of the coreset. The wireless device 2411 may monitor, for the plurality of DCI messages/PDCCH transmissions, the plurality of search spaces of the coreset. The base station 2410 may send/transmit each DCI message/PDCCH transmission of the plurality of DCI messages/PDCCH transmissions via a respective search space of the plurality of search spaces. The wireless device 2411 may monitor, for each DCI message/PDCCH transmission of the plurality of DCI messages/PDCCH transmissions, a respective search space of the plurality of search spaces. The one or more configuration parameters may indicate the coreset for the control channel repetition. The one or more configuration parameters may indicate the plurality of search spaces for the control channel repetition.

The one or more coresets may comprise a plurality of coresets. The base station 2410 may send/transmit the plurality of DCI messages/PDCCH transmissions via the plurality of coresets. The wireless device 2411 may monitor, for the plurality of DCI messages/PDCCH transmissions, the plurality of coresets. The base station 2410 may send/transmit each DCI message/PDCCH transmission of the plurality of DCI messages/PDCCH transmissions via a respective coreset of the plurality of coresets. The wireless device 2411 may monitor, for each DCI message/PDCCH transmission of the plurality of DCI messages/PDCCH transmissions, a respective coreset of the plurality of coresets. The one or more configuration parameters may indicate the plurality of coreset for the control channel repetition.

The wireless device 2411 may determine a plurality of downlink control signal/channel transmission/repetition occasions (e.g., PDCCH transmission/repetition/monitoring occasions) for the control channel repetition. The base station 2410 may send/transmit, via the one or more coresets, the plurality of DCI messages/PDCCH transmissions across/over/on the plurality of downlink control signal/channel transmission/repetition occasions (e.g., PDCCH transmission/repetition occasion 1, PDCCH transmission/repetition occasion 2 and PDCCH transmission/repetition occasion 3 in FIG. 24). The wireless device 2411 may monitor, for the plurality of DCI messages/PDCCH transmissions, the one or more coresets across/over/on the plurality of downlink control signal/channel transmission/repetition occasions. In FIG. 24 and FIG. 25, the base station 2410 may send/transmit a first downlink control signal/channel (e.g., DCI 1) of the plurality of DCI messages/PDCCH transmissions in a first downlink control signal/channel transmission/repetition occasion (e.g., PDCCH transmission/repetition occasion 1) of the plurality of downlink control signal/channel transmission/repetition occasions. The base station 2410 may sent/transmit a second downlink control signal/channel (e.g., DCI 2) of the plurality of DCI messages/PDCCH transmissions in a second downlink control signal/channel transmission/repetition occasion (e.g., PDCCH transmission/repetition occasion 2) of the plurality of downlink control signal/channel transmission/repetition occasions. The base station 2410 may send/transmit a third downlink control signal/channel (e.g., DCI 3) of the plurality of DCI messages/PDCCH transmissions in a third downlink control signal/channel transmission/repetition occasion (e.g., PDCCH transmission/repetition occasion 3) of the plurality of downlink control signal/channel transmission/repetition occasions. The wireless device 2411 may monitor, for the first downlink control signal/channel, at least one coreset of the one or more coresets in the first downlink control signal/channel transmission/repetition occasion. The wireless device 2411 may monitor, for the second downlink control signal/channel, at least one coreset of the one or more coresets in the second downlink control signal/channel transmission/repetition occasion. The wireless device 2411 may monitor, for the third downlink control signal/channel, at least one coreset of the one or more coresets in the third downlink control signal/channel transmission/repetition occasion.

The repetition of the downlink control signal/channel (or transmission of the plurality of DCI messages/PDCCH transmissions) may, for example, be/occur in time units (e.g. TDM-ed). The time units, for example, may be consecutive. A number/quantity of the time units may be equal to the number/quantity of repetitions. The time units, for example, may be time slots. The time units may, for example, be mini-slots. The time units may, for example, be time symbols. The time units may, for example, be sub-frames. The time units, for example, may be monitoring occasions (e.g., PDCCH monitoring occasions) in time. A number/quantity of the plurality of downlink control signal/channel transmission occasions may be equal to the number of repetitions. The plurality of downlink control signal/channel transmission occasions may be/occur in the time units. For example, a first downlink control signal/channel transmission occasion of the plurality of downlink control signal/channel transmission occasions may be/occur in a first time unit of the time units. A second downlink control signal/channel transmission occasion of the plurality of downlink control signal/channel transmission occasions may be/occur in a second time unit of the time units, and so on.

The repetition of the downlink control signal/channel (or transmission of the plurality of DCI messages/PDCCH transmissions) may, for example, be/occur in frequency units (FDM-ed). A number/quantity of the frequency units may be equal to the number of repetitions. The frequency units, for example, may be frequency bands. The frequency units, for example, may be physical resource blocks (PRBs). The frequency units may, for example, be BWPs. The frequency units may, for example, be cells. A number/quantity of the plurality of downlink control signal/channel transmission occasions may be equal to the number of repetitions. The plurality of downlink control signal/channel transmission occasions may be/occur in the frequency units. For example, a first downlink control signal/channel transmission occasion of the plurality of downlink control signal/channel transmission occasions may be/occur in a first frequency unit of the frequency units. A second downlink control signal/channel transmission occasion of the plurality of downlink control signal/channel transmission occasions may be/occur in a second frequency unit of the frequency units, and so on.

The base station 2410 may send/transmit the plurality of DCI messages/PDCCH transmissions across/over/in the time units. The base station 2410 may send/transmit the plurality of DCI messages/PDCCH transmissions across/over/in the frequency units. The base station 2410 may repeat transmission of the downlink control signal/channel across/over/in the plurality of uplink signal/channel transmission occasions. The base station 2410 may send/transmit the downlink control signal/channel with the number of repetitions. The plurality of downlink control signal/channel transmission occasions comprises a first downlink control signal/channel transmission occasion (first TX occasion), a second downlink control signal/channel transmission occasion (e.g., second TX occasion), and a third downlink control signal/channel transmission occasion (e.g., third TX occasion), as shown in FIG. 24 and FIG. 25. The first downlink control signal/channel transmission occasion may be/occur in a first time unit of the time units (e.g., first time slot, first symbol, first subframe, first monitoring occasion). The second downlink control signal/channel transmission occasion may be/occur in a second time unit of the time units (e.g., second time slot, second symbol, second subframe, second monitoring occasion). The third downlink control signal/channel transmission occasion may be/occur in a third time unit of the time units (e.g., third time slot, third symbol, third subframe, third monitoring occasion). The first downlink control signal/channel transmission occasion may be/occur in a first frequency unit of the frequency units (e.g., first PRB, first cell, first frequency, first BWP, first subband). The second downlink control signal/channel transmission occasion may be/occur in a second frequency unit of the frequency units (e.g., second PRB, second cell, second frequency, second BWP, second subband). The third downlink control signal/channel transmission occasion may be/occur in a third frequency unit of the frequency units (e.g., third PRB, third cell, third frequency, third BWP, third subband).

The one or more configuration parameters may indicate a repetition scheme (e.g., by a higher layer parameter RepetitionSchemeConfig, FDM-Scheme, TDM-Scheme, SDM-Scheme, CDM-Scheme), for the control channel repetition. The repetition scheme, for example, may be a time domain repetition scheme, a frequency domain repetition scheme, or a spatial/code domain repetition scheme. The wireless device 2411 may monitor, for the plurality of DCI messages/PDCCH transmissions, the one or more coresets across/over/in the plurality of downlink control signal/channel transmission occasions based on the one or more configuration parameters indicating the repetition scheme.

The repetition scheme may be a time domain repetition scheme (e.g., TDM scheme, TDMSchemeA, TDMSchemeB, etc.). The plurality of downlink control signal/channel transmission occasions (e.g., 1st TX occasion, 2nd TX occasion, 3rd TX occasion, and 4th TX occasion) may not overlap in time, for example, in the time domain repetition scheme. The plurality of downlink control signal/channel transmission occasions may or may not overlap in frequency, for example, in the time domain repetition scheme. A downlink control signal/channel transmission occasion (e.g., each downlink control signal/channel transmission occasion) of the plurality of downlink control signal/channel transmission occasions may have a non-overlapping time domain resource allocation with respect to other signal/channel transmission occasion(s) of the plurality of downlink control signal/channel transmission occasions. For example, a first downlink control signal/channel transmission occasion of the plurality of downlink control signal/channel transmission occasions may not overlap, in time, with a second downlink control signal/channel transmission occasion of the plurality of downlink control signal/channel transmission occasions. The first downlink control signal/channel transmission occasion and the second downlink control signal/channel transmission occasion may be different. The first downlink control signal/channel transmission occasion (first TX occasion), the second downlink control signal/channel transmission occasion (e.g., second TX occasion), and the third downlink control signal/channel transmission occasion (e.g., third TX occasion) may not overlap in time, for example, in the time domain repetition scheme. The plurality of downlink control signal/channel transmission occasions may occur in different time units. For example, the first time unit, the second time unit, and the third time unit may not overlap in time. The first time unit, the second time unit, and the third time unit may be different.

The repetition scheme may comprise a frequency domain repetition scheme (e.g., FDM scheme, FDMSchemeA, FDMSchemeB, etc). The plurality of downlink control signal/channel transmission occasions may or may not overlap in time, for example, in the frequency domain repetition scheme. The plurality of downlink control signal/channel transmission occasions may not overlap in frequency, for example, in the frequency domain repetition scheme. Each downlink control signal/channel transmission occasion of the plurality of downlink control signal/channel transmission occasions may have a non-overlapping frequency domain resource allocation with respect to other signal/channel transmission occasion(s) of the plurality of downlink control signal/channel transmission occasions. For example, a first downlink control signal/channel transmission occasion of the plurality of downlink control signal/channel transmission occasions may not overlap, in frequency, with a second downlink control signal/channel transmission occasion of the plurality of downlink control signal/channel transmission occasions. The first downlink control signal/channel transmission occasion and the second downlink control signal/channel transmission occasion may be different. The first downlink control signal/channel transmission occasion (first TX occasion) and the second downlink control signal/channel transmission occasion (e.g., second TX occasion) may not overlap in frequency, for example, in the frequency domain repetition scheme. The first downlink control signal/channel transmission occasion (first TX occasion) and the second downlink control signal/channel transmission occasion (e.g., second TX occasion) may overlap in time. The plurality of downlink control signal/channel transmission occasions may occur in different frequency units (e.g., frequencies, PRBs, frequency bands, bandwidth parts, cells). For example, a first frequency unit of the first downlink control signal/channel transmission occasion and a second frequency unit of the second downlink control signal/channel transmission occasion may not overlap in frequency. The first frequency unit and the second frequency unit may be different.

The repetition scheme may be a spatial/code domain repetition scheme (e.g., SDM scheme, CDM scheme, SDMScheme, CDMScheme, etc.). The plurality of downlink control signal/channel transmission occasions may overlap in time, for example, in the spatial/code domain repetition scheme. The plurality of downlink control signal/channel transmission occasions may overlap in frequency, for example, in the spatial/code domain repetition scheme. Each downlink control signal/channel transmission occasion of the plurality of downlink control signal/channel transmission occasions may have an overlapping frequency domain resource allocation with respect to other downlink control signal/channel transmission occasion(s) of the plurality of downlink control signal/channel transmission occasions. Each downlink control signal/channel transmission occasion of the plurality of downlink control signal/channel transmission occasions may have an overlapping time domain resource allocation with respect to other downlink control signal/channel transmission occasion(s) of the plurality of downlink control signal/channel transmission occasions. For example, a first downlink control signal/channel transmission occasion of the plurality of downlink control signal/channel transmission occasions may overlap, in time and frequency, with a second downlink control signal/channel transmission occasion of the plurality of downlink control signal/channel transmission occasions. The first downlink control signal/channel transmission occasion and the second downlink control signal/channel transmission occasion may be different. For example, in the spatial/code domain repetition scheme, the first downlink control signal/channel transmission occasion (1st TX occasion) and the second downlink control signal/channel transmission occasion (e.g., 2nd TX occasion) may overlap in frequency. The first downlink control signal/channel transmission occasion (1st TX occasion) and the second downlink control signal/channel transmission occasion (e.g., 2nd TX occasion) may overlap in time. The plurality of downlink control signal/channel transmission occasions may occur in same frequency units (e.g., frequencies, PRBs, frequency bands, bandwidth parts, subbands, cells). For example, a first frequency unit of the first downlink control signal/channel transmission occasion and a second frequency unit of the second downlink control signal/channel transmission occasion may overlap in frequency. The first frequency unit and the second frequency unit may be different. The plurality of downlink control signal/channel transmission occasions may occur in the same time units (e.g., symbols, mini-slots, slots, sub-frames, monitoring occasions etc). For example, a first time unit of the first downlink control signal/channel transmission occasion and a second time unit of the second downlink control signal/channel transmission occasion may overlap in time. The first time unit and the second time unit may be different.

The wireless device 2411 may monitor, for the downlink control signal/channel, the search space of the coreset in the plurality of downlink control signal/channel transmission occasions. The wireless device 2411 may monitor, for the downlink control signal/channel, each coreset of the one or more coresets in respective downlink control signal/channel transmission occasion(s) of the plurality of downlink control signal/channel transmission occasions. The wireless device 2411 may monitor, for the downlink control signal/channel, each search space of the plurality of search spaces of the coreset in respective downlink control signal/channel transmission occasion(s) of the plurality of downlink control signal/channel transmission occasions. The respective downlink control signal/channel transmission occasion(s) may have non-overlapping time domain resource allocation with respect to another downlink control signal/channel transmission occasion of the plurality of downlink control signal/channel transmission occasions, for example, in the time domain repetition scheme. The respective downlink control signal/channel transmission occasion(s) may have non-overlapping frequency domain resource allocation with respect to another downlink control signal/channel transmission occasion of the plurality of downlink control signal/channel transmission occasions, for example, in the frequency domain repetition scheme. The respective downlink control signal/channel transmission occasion(s) may have overlapping time and frequency domain resource allocations with respect to another downlink control signal/channel transmission occasion of the plurality of downlink control signal/channel transmission occasions, for example, in the spatial/code domain repetition scheme.

The plurality of DCI messages/PDCCH transmissions may be associated with (or linked to) the plurality of downlink control signal/channel transmission occasions. Each downlink control signal/channel of the plurality of DCI messages/PDCCH transmissions may be associated with a respective downlink control signal/channel transmission occasion of the plurality of downlink control signal/channel transmission occasions. The base station 2410 may send/transmit each downlink control signal/channel of the plurality of DCI messages/PDCCH transmissions in/via a respective downlink control signal/channel transmission occasion of the plurality of downlink control signal/channel transmission occasions. The wireless device 2411 may monitor, for each downlink control signal/channel of the plurality of DCI messages/PDCCH transmissions, in/via a respective downlink control signal/channel transmission occasion of the plurality of downlink control signal/channel transmission occasions. The first downlink control signal/channel (e.g., DCI 1) is associated with the first downlink control signal/channel transmission/repetition occasion (e.g., PDCCH transmission/repetition occasion 1), for example, based on the first downlink control signal/channel being transmitted/sent by the base station 2410 or monitored by the wireless device 2411 in/via the first downlink control signal/channel transmission/repetition occasion, as shown in FIG. 24 and FIG. 25. The second downlink control signal/channel (e.g., DCI 2) is associated with the second downlink control signal/channel transmission/repetition occasion (e.g., PDCCH transmission/repetition occasion 2), for example, based on the second downlink control signal/channel being transmitted/sent by the base station 2410 or monitored by the wireless device 2411 in/via the second downlink control signal/channel transmission/repetition occasion. The third downlink control signal/channel (e.g., DCI 3) is associated with the third downlink control signal/channel transmission/repetition occasion (e.g., PDCCH transmission/repetition occasion 3), for example, based on the third downlink control signal/channel being transmitted/sent by the base station 2410 or monitored by the wireless device 2411 in/via the third downlink control signal/channel transmission/repetition occasion.

The wireless device 2411 may receive/detect one or messages from the base station 2410. The one or more messages (e.g., the plurality of DCI messages/PDCCH transmissions (or the repetitions of a downlink control signal/channel)), may comprise one or more configuration parameters. The one or more configuration parameters may comprise at least one downlink control signal/channel. For example, the wireless device 2411 may detect/receive DCI 2. The wireless device 2411 may not receive/detect DCI 1 and DCI 3, as shown in FIG. 24 and FIG. 25. The at least one downlink control signal/channel may be associated with DCI 2. The wireless device 2411 may receive DCI 2 in the second downlink control signal/channel transmission occasion. The wireless device 2411 may not receive/detect DCI 1 in the first downlink control signal/channel transmission occasion. The wireless device 2411 may not receive/detect DCI 3 in the third downlink control signal/channel transmission occasion. The at least one downlink control signal/channel may indicate the number of repetitions. The at least one downlink control signal/channel may comprise the DCI indicating the number/quantity of repetitions.

The one or more configuration parameters may indicate one or more uplink resources. The one or more configuration parameters may indicate the one or more uplink resources, for example, for the active uplink BWP of the cell. The active uplink BWP of the cell may comprise the one or more uplink resources. The one or more uplink resources may be one or more PUCCH resources or one or more SRS resources.

The one or more configuration parameters may comprise one or more SRS configuration parameters (e.g., SRS-Config). The one or more SRS configuration parameters may indicate one or more SRS resource sets comprising an SRS resource set (e.g., by a higher layer parameter SRS-ResourceSet). The SRS resource set may comprise the one or more uplink resources (e.g., the one or more SRS resources). The one or more SRS configuration parameters may comprise an SRS usage parameter (e.g., by a higher layer parameter usage) for the SRS resource set. The SRS usage parameter, for example, may be (set to) "codebook". The SRS usage parameter, for example, may be (set to) "nonCodebook".

The one or more configuration parameters may comprise one or more PUSCH configuration parameters (e.g., PUSCH-Config). The one or more PUSCH configuration parameters, for example, may indicate a codebook based PUSCH transmission. The one or more PUSCH configuration parameters may comprise a transmission configuration parameter (e.g., a higher layer parameter txConfig in pusch-Config) that is set to "codebook" indicating the codebook based PUSCH transmission. The wireless device 2411 may send/transmit one or more transport blocks (e.g., PUSCHs) based on the codebook based PUSCH transmission after (e.g., based on or in response to) the one or more PUSCH configuration parameters indicating the codebook based PUSCH transmission.

The one or more PUSCH configuration parameters, for example, may indicate a non-codebook based PUSCH transmission. The one or more PUSCH configuration parameters may comprise a transmission configuration parameter (e.g., a higher layer parameter txConfig in pusch-Config) that is set to "nonCodebook" indicating the non-codebook based PUSCH transmission. The wireless device 2411 may send/transmit one or more transport blocks (e.g., PUSCHs) based on the non-codebook based PUSCH transmission after (e.g., based on or in response to) the one or more PUSCH configuration parameters indicating the non-codebook based PUSCH transmission.

The at least one downlink control signal/channel (or each downlink control signal/channel of the at least one downlink control signal/channel) may be a DCI format 0-0, a DCI format 0-1, or a DCI format 0-2. The at least one downlink control signal/channel (or each downlink control signal/channel of the at least one downlink control signal/channel) may be an uplink DCI format (e.g., DCI format 0-x, x = 0, 1, 2, 3, ....).

The at least one downlink control signal/channel may schedule a transport block (e.g., PUSCH). The at least one downlink control signal/channel may comprise a dynamic uplink grant for transmission of the transport block. Each downlink control signal/channel of the at least one downlink control signal/channel may schedule the transport block. Each downlink control signal/channel of the at least one downlink control signal/channel may comprise the dynamic uplink grant for transmission of the transport block. The wireless device 2411 may send/transmit the transport block (e.g., TB at time T5 in FIG. 25) scheduled by the at least one downlink control signal/channel.

The one or more configuration parameters may indicate one or more configured uplink grants (e.g., by a higher layer parameter ConfiguredGrantConfig). The one or more configured uplink grants may comprise a configured uplink grant. The configured uplink grant may be a Type 2 configured uplink grant (or configured grant Type 2). A message (e.g., PDCCH) from the base station 2410 may indicate/provide an uplink grant, for example, in the Type 2 configured uplink grant. The wireless device 2411 may store the uplink grant as the configured uplink grant based on receiving DCI (or layer 1 signaling) indicating a configured uplink grant activation.

The at least one downlink control signal/channel may indicate activation of the configured uplink grant (e.g., Type 2 configured uplink grant). Each downlink control signal/channel of the at least one downlink control signal/channel may indicate activation of the configured uplink grant. The wireless device 2411 may activate the configured uplink grant based on the receiving/detecting the at least one downlink control signal/channel. The wireless device 2411 may send/transmit a transport block (e.g., PUSCH, TB at time T5 in FIG. 25) for the configured uplink grant activated by the at least one downlink control signal/channel.

The at least one downlink control signal/channel may indicate an uplink resource (e.g., Uplink resource in FIG. 25) of the one or more uplink resources. The at least one downlink control signal/channel, for example, may comprise an SRS resource indicator (SRI) field indicating the uplink resource. Each downlink control signal/channel of the at least one downlink control signal/channel may indicate the uplink resource. Each downlink control signal/channel of the at least one downlink control signal/channel, for example, may comprise the SRI field indicating the uplink resource. The one or more configuration parameters, for example, may indicate a mapping between the SRI field and the uplink resource. A mapping/association between the SRI field and the uplink resource, for example, may be preconfigured/predefined/preset/fixed. The one or more configuration parameters may indicate an uplink resource index/identifier indicating/identifying/for the uplink resource. A value of the SRI field, for example, may be mapped to/associated with an uplink resource index/identifier of the uplink resource. The value of the SRI field, for example, may be equal to the uplink resource index/identifier of the uplink resource.

The wireless device 2411 may determine/indicate/select one of the repeated downlink control signal/channel transmissions (e.g., DCI 1, DCI 2, DCI 3) as a reference downlink control signal/channel transmission occasion. The reference downlink control signal/channel transmission occasion (e.g., DCI 1 at time T1 in FIG. 25) may be used as a reference to determine/select one or more transmission parameters of an uplink resource, for example, for sending/transmitting a transport block. The wireless device 2411 may send/transmit the transport block (TB at time T5 in FIG. 25), for example, based on the one or more transmission parameters of the uplink resource (e.g., Beam 1 at time TO in FIG. 25) used/activated/configured most recently before the reference downlink control signal/channel transmission occasion (e.g., time T1 in FIG. 25).

The wireless device 2411 may determine the reference downlink control signal/channel transmission occasion among the plurality of downlink control signal/channel transmission occasions. The wireless device 2411 may determine the reference downlink control signal/channel transmission occasion, for example, based on the receiving/detecting the at least one downlink control signal/channel. The wireless device 2411 may determine the reference downlink control signal/channel transmission occasion, for example, based on the receiving/detecting the at least one downlink control signal/channel scheduling the transport block (or indicating activation of the configured uplink grant). The wireless device 2411 may determine the reference downlink control signal/channel transmission occasion, for example, based on the one or more configuration parameters indicating the control channel repetition. The wireless device 2411 may determine, for a spatial domain transmission filter of the transport block, the reference downlink control signal/channel transmission occasion. The wireless device 2411 may determine the reference downlink control signal/channel transmission occasion, for example, based on one or more transmission parameters of the transport block.

The wireless device 2411 may receive/detect the at least one downlink control signal/channel during/in at least one downlink control signal/channel transmission occasion of the plurality of downlink control signal/channel transmission occasions (e.g., one or more repeated DCI messages/PDCCH transmissions). The at least one downlink control signal/channel transmission occasion may or may not be the reference downlink control signal/channel transmission occasion. The at least one downlink control signal/channel transmission occasion is the second downlink control signal/channel transmission occasion (e.g., DCI 2 in FIG. 24 and FIG. 25).

The determining the reference downlink control signal/channel transmission occasion among the plurality of downlink control signal/channel transmission occasions may comprise determining a reference downlink control signal/channel among the plurality of DCI messages/PDCCH transmissions, for example based on the plurality of DCI messages/PDCCH transmissions being associated with the plurality of downlink control signal/channel transmission occasions. For example, the first downlink control signal/channel (e.g., DCI 1) may be the reference downlink control signal/channel, for example, if the first downlink control signal/channel transmission/repetition occasion is the reference downlink control signal/channel transmission occasion. The second downlink control signal/channel (e.g., DCI 2) may be the reference downlink control signal/channel, for example, if the second downlink control signal/channel transmission/repetition occasion is the reference downlink control signal/channel transmission occasion. The third downlink control signal/channel (e.g., DCI 3) may be the reference downlink control signal/channel, for example, if the third downlink control signal/channel transmission/repetition occasion is the reference downlink control signal/channel transmission occasion. The at least one downlink control signal/channel may or may not be the reference downlink control signal/channel. The at least one downlink control signal/channel is the second downlink control signal/channel (e.g., DCI 2), as shown in FIG. 24 and FIG. 25.

The wireless device 2411 may determine the reference downlink control signal/channel transmission occasion based on the number of repetitions and/or a starting downlink control signal/channel transmission occasion (or a starting time slot) of the plurality of downlink control signal/channel transmission occasions. The one or more configuration parameters, for example, may indicate the starting downlink control signal/channel transmission occasion. The at least one downlink control signal/channel, for example, may indicate the starting downlink control signal/channel transmission occasion.

The wireless device 2411 may monitor for the downlink control signal/channel, the one or more coresets in the first downlink control signal/channel transmission occasion at a first time unit (e.g., first time slot, first time symbol, first subframe, etc), in the second downlink control signal/channel transmission occasion at a second time unit, and/or in the third downlink control signal/channel transmission occasion at a third time unit.

The reference downlink control signal/channel transmission occasion may be the last (or latest) downlink control signal/channel transmission occasion (e.g., PDCCH transmission/repetition occasion 3 in FIG. 24) among the plurality of downlink control signal/channel transmission occasions.

The last downlink control signal/channel transmission occasion, for example, may have the latest starting time among starting times of the plurality of downlink control signal/channel transmission occasions. The third time unit may start later in time than the first time unit and the second time unit. A first symbol of the third time unit may occur after (or later) in time than a first symbol of the first time unit and a first symbol of the second time unit. The third downlink control signal/channel transmission occasion may be the reference downlink control signal/channel transmission occasion based on the third time unit starting later in time than the first time unit and the second time unit.

The last downlink control signal/channel transmission occasion, for example, may have the latest ending time among ending times of the plurality of downlink control signal/channel transmission occasions. The third time unit may end later in time than the first time unit and the second time unit. A last symbol of the third time unit may occur after (or later) in time than a last symbol of the first time unit and a last symbol of the second time unit. The third downlink control signal/channel transmission occasion may be the reference downlink control signal/channel transmission occasion based on the third time unit ending later in time than the first time unit and the second time unit.

The last downlink control signal/channel transmission occasion may be associated with a last downlink control signal/channel among the plurality of DCI messages/PDCCH transmissions. The base station 2410 may send/transmit the last downlink control signal/channel in/via the last downlink control signal/channel transmission occasion. The wireless device 2411 may monitor, for the last downlink control signal/channel, in/via the last downlink control signal/channel transmission occasion. The last downlink control signal/channel may be the reference downlink control signal/channel. The base station 2410 may send/transmit a last repetition of the downlink control signal/channel in the last downlink control signal/channel transmission occasion. The wireless device 2411 may monitor, for the last repetition of the downlink control signal/channel, in the last downlink control signal/channel transmission occasion. The reference downlink control signal/channel transmission occasion may be the earliest (or the first) downlink control signal/channel transmission occasion (e.g., PDCCH transmission/repetition occasion 1 in FIG. 24) among the plurality of downlink control signal/channel transmission occasions.

The earliest reference downlink control signal/channel transmission occasion, for example, may have the earliest starting time (e.g., T0 in FIG. 25) among starting times (e.g., T0, T3, T4 in FIG. 25) of the plurality of downlink control signal/channel transmission occasions. The first time unit may start earlier in time than the second time unit and the third time unit. A first symbol of the first time unit may occur before (or earlier) in time than a first symbol of the second time unit and a first symbol of the third time unit. The first downlink control signal/channel transmission occasion may be the reference downlink control signal/channel transmission occasion based on the first time unit starting earlier than the second time unit and the third time unit.

The earliest reference downlink control signal/channel transmission occasion, for example, may have the earliest ending time among ending times of the plurality of downlink control signal/channel transmission occasions. For example, the first time unit may end earlier in time than the second time unit and the third time unit. A last symbol of the first time unit may occur before (or earlier) in time than a last symbol of the second time unit and a last symbol of the third time unit. The first downlink control signal/channel transmission occasion may be the reference downlink control signal/channel transmission occasion based on the first time unit ending earlier than the second time unit and the third time unit.

The earliest reference downlink control signal/channel transmission occasion may be associated with a first downlink control signal/channel (e.g., DCI 1 in FIG. 24 and FIG. 25) among the plurality of DCI messages/PDCCH transmissions. The base station 2310 may send/transmit the first downlink control signal/channel in/via the earliest reference downlink control signal/channel transmission occasion. The wireless device 2411 may monitor, for the first downlink control signal/channel, in/via the earliest reference downlink control signal/channel transmission occasion. The first downlink control signal/channel (e.g., DCI 1 in FIG. 24 and FIG. 25) may be the reference downlink control signal/channel. The base station 2410 may send/transmit a first repetition (e.g., DCI 1) of the downlink control signal/channel in the earliest reference downlink control signal/channel transmission occasion (e.g., at time T1). The wireless device may monitor, for the first repetition of the downlink control signal/channel, in the earliest reference downlink control signal/channel transmission occasion.

The wireless device 2411 may monitor, for the downlink control signal/channel, a coreset of the one or more coresets in the reference downlink control signal/channel transmission occasion. The reference downlink control signal/channel transmission occasion may be associated with the coreset. The wireless device may monitor, for DCI (or the downlink control signal/channel), the coreset in the reference downlink control signal/channel transmission occasion.

The one or more configuration parameters may indicate the reference downlink control signal/channel transmission occasion for the coreset. The wireless device 2411 may determine the reference downlink control signal/channel transmission occasion to monitor the coreset based on the receiving the one or more configuration parameters.

The coreset may be identified/indicated by a coreset index of the one or more coreset indexes. The coreset index may be lowest (or highest) among the one or more coreset indexes. The coreset may be identified/indicated by a coreset index that is lowest (or highest) among the one or more coreset indexes of the one or more coresets.

The wireless device 2411 may determine/select/detect/indicate the coreset with a coreset index that is lowest (or highest) among the one or more coreset indexes of the one or more coresets. The wireless device 2411 may monitor, for DCI, the coreset in a downlink control signal/channel transmission occasion. The downlink control signal/channel transmission occasion may be the reference downlink control signal/channel transmission occasion. The wireless device 2411 may determine the reference downlink control signal/channel transmission occasion based on the coreset.

The reference downlink control signal/channel transmission occasion may be associated with a reference downlink control signal/channel among the plurality of DCI messages/PDCCH transmissions. The base station 2410 may send/transmit the reference downlink control signal/channel in/via the reference downlink control signal/channel transmission occasion. The wireless device 2411 may monitor, for the reference downlink control signal/channel, in/via the reference downlink control signal/channel transmission occasion. The wireless device 2411 may monitor, for the reference downlink control signal/channel, the coreset in the reference downlink control signal/channel transmission occasion.

The one or more search space sets may be a plurality of search spaces. The plurality of search spaces may be identified/indicated by the search space set indexes. The wireless device 2411 may monitor, for the downlink control signal/channel, a search space of the plurality of search spaces in the reference downlink control signal/channel transmission occasion (e.g., PDCCH monitoring occasion). The reference downlink control signal/channel transmission occasion may be associated with the search space. The wireless device 2411 may monitor, for DCI (or the downlink control signal/channel), the search space in the reference downlink control signal/channel transmission occasion. The one or more configuration parameters may indicate the reference downlink control signal/channel transmission occasion for the search space. The wireless device 2411 may determine the reference downlink control signal/channel transmission occasion to monitor the search space based on the receiving the one or more configuration parameters.

The search space may be identified/indicated by a search space set index of the search space set indexes. The search space set index may be lowest (or highest) among the search space set indexes. The search space may be identified/indicated by a search space set index that is lowest (or highest) among the search space set indexes.

The wireless device 2411 may determine/select/detect/indicate the search space with a search space set index that is lowest (or highest) among the search space set indexes of the plurality of search spaces. The wireless device 2411 may monitor, for DCI, the search space in a downlink control signal/channel transmission occasion. The downlink control signal/channel transmission occasion may be the reference downlink control signal/channel transmission occasion. The wireless device 2411 may determine the reference downlink control signal/channel transmission occasion based on the search space.

The reference downlink control signal/channel transmission occasion may be associated with a reference downlink control signal/channel among the plurality of DCI messages/PDCCH transmissions. The base station 2410 may send/transmit the reference downlink control signal/channel in/via the reference downlink control signal/channel transmission occasion. The wireless device 2411 may monitor, for the reference downlink control signal/channel, in/via the reference downlink control signal/channel transmission occasion. The wireless device 2411 may monitor, for the reference downlink control signal/channel, the search space in the reference downlink control signal/channel transmission occasion.

The wireless device 2411 may determine one or more transmission parameters of the uplink resource. The wireless device 2411 may determine, for transmission of the transport block, the one or more transmission parameters of the uplink resource. The wireless device 2411, for example, may use the one or more transmission parameters for transmission of a first uplink signal (e.g., SRS) via the uplink resource before (or prior to) the reference downlink control signal/channel transmission occasion. The wireless device 2411 may send/transmit, via the uplink resource, the first uplink signal based on the one or more transmission parameters. The wireless device 2411 may send/transmit, the first uplink signal before (or prior to) the reference downlink control signal/channel transmission occasion. Transmission of the first uplink signal (e.g., at time T0 in FIG. 25) via the uplink resource may be the most recent/latest transmission via the uplink resource before (or prior to) the reference downlink control signal/channel transmission/repetition occasion (e.g., at time T1 in FIG. 25). The wireless device 2411 may not send/transmit, via the uplink resource, a second uplink signal after transmission of the first uplink signal and before (or prior to) the reference downlink control signal/channel transmission/repetition occasion (e.g., no transmission of second uplink signal occurring between time T0 and T1 in FIG. 25).

The one or more configuration parameters may comprise the one or more transmission parameters for the uplink resource. The wireless device 2411 may receive one or more activation commands (e.g., MAC CEs before time T0 in FIG. 25) indicating/activating/updating the one or more transmission parameters for the uplink resource.

The one or more transmission parameters may comprise one or more power control parameters, one or more spatial domain transmission parameters (e.g., spatial filter, beam, etc.), or one or more transmission precoder parameters. The one or more transmission parameters may comprise a spatial relation information parameter (e.g., spatialRelation-Info, SRS-SpatialRelationInfo) indicating a spatial relation. The one or more configuration parameters, for example, may indicate the spatial relation for the uplink resource. The wireless device 2411, for example, may receive an activation command (e.g., AP/SP SRS Activation/Deactivation MAC CE, PUCCH spatial relation Activation/Deactivation MAC CE) indicating/activating the spatial relation for the uplink resource. The wireless device 2411 may send/transmit, via the uplink resource, the uplink signal based on the spatial relation (e.g., Beam 1 at time T0 in FIG 25). The wireless device 2411 may send/transmit the uplink signal based on the spatial relation, for example, before (or prior to) the reference downlink control signal/channel transmission occasion (e.g., time T1 in FIG. 25).

The spatial relation may indicate a reference signal (e.g., CSI-RS, SSB/PBCH block, SRS, DM-RS). The spatial relation may indicate the reference signal, for example, before (or prior to) the reference downlink control signal/channel transmission occasion. The spatial relation may comprise a reference signal index/identifier (e.g., provided by a higher layer parameter reference Signal, ssb-index, csi-RS-Index, NZP-CSI-RS-ResourceId) identifying (or indicating or of) the reference signal. The one or more configuration parameters may indicate the reference signal index/identifier for the reference signal.

The wireless device 2411 may determine a spatial domain transmission filter based on the reference signal indicated by the spatial relation. The wireless device 2411 may send/transmit, via the uplink resource, the uplink signal with/using the spatial domain transmission filter. Transmitting/sending, via the uplink resource, the uplink signal based on the spatial relation may comprise transmitting/sending, via the uplink resource, the uplink signal with the spatial domain transmission filter determined based on the reference signal indicated by the spatial relation. The wireless device 2411 may send/transmit, via the uplink resource, the uplink signal with the spatial domain transmission filter, for example, before (or prior to) the reference downlink control signal/channel transmission occasion.

At least one DMRS antenna port of the uplink signal transmitted/sent via the uplink resource may be quasi co-located with the reference signal indicated by the spatial relation. Transmitting/sending, via the uplink resource, the uplink signal based on the spatial relation may comprise at least one DMRS antenna port of the uplink signal transmitted/sent via the uplink resource being quasi co-located with the reference signal indicated by the spatial relation. The at least one DMRS antenna port of the uplink signal transmitted/sent via the uplink resource may be quasi co-located with the reference signal, for example, before (or prior to) the reference downlink control signal/channel transmission occasion.

The reference signal may be a downlink reference signal. The downlink reference signal may comprise a SS/PBCH block. The downlink reference signal may comprise a CSI-RS (e.g., periodic CSI-RS, semi-persistent CSI-RS, aperiodic CSI-RS). The downlink reference signal may comprise a DM-RS (e.g., of PDCCH, PDSCH, etc). The wireless device 2411 may use a spatial domain receiving filter to receive the downlink reference signal. The wireless device 2411 may receive the downlink reference signal with the spatial domain receiving filter. The wireless device 2411 may determine that the spatial domain transmission filter used for transmission of the uplink signal is the same as the spatial domain receiving filter used for reception of the reference signal indicated by the spatial relation, for example, based on the reference signal being the downlink reference signal. The wireless device 2411 may send/transmit the uplink signal with the spatial domain transmission filter that is same as the spatial domain receiving filter, for example, based on the reference signal being the downlink reference signal. The wireless device 2411 may send/transmit the uplink signal with the spatial domain receiving filter, for example, based on the reference signal being the downlink reference signal. The wireless device 2411 may send/transmit the uplink signal based on the spatial domain receiving filter, after (e.g., based on or in response to) the reference signal being the downlink reference signal. The determining the spatial domain transmission filter based on the spatial relation may comprise determining the spatial domain receiving filter, as the spatial domain transmission filter, used to receive the reference signal indicated by the spatial relation. The determining the spatial domain transmission filter based on the spatial relation may comprise determining the spatial domain transmission filter that is the same as the spatial domain receiving filter used to receive the reference signal indicated by the spatial relation.

The reference signal may be an uplink reference signal (e.g., periodic SRS, semi-persistent SRS, aperiodic SRS, DM-RS). The wireless device 2411 may use a second spatial domain transmission filter to send/transmit the uplink reference signal. The wireless device 2411 send/transmit the uplink reference signal with the second spatial domain transmission filter. The wireless device 2411 may determine that the spatial domain transmission filter used for transmission of the uplink signal is the same as the second spatial domain transmission filter used for transmission of the reference signal indicated by the spatial relation, for example, based on the reference signal being the uplink reference signal. The wireless device 2411 may send/transmit the uplink signal with the spatial domain transmission filter that is same as the second spatial domain transmission filter used to send/transmit the uplink reference signal, for example, based on the reference signal being the uplink reference signal. The wireless device 2411 may send/transmit the uplink signal based on the second spatial domain transmission filter used to send/transmit the uplink reference signal, for example, based on the reference signal being the uplink reference signal. The determining the spatial domain transmission filter based on the spatial relation may comprise determining the second spatial domain transmission filter, as the spatial domain transmission filter, used to send/transmit the reference signal indicated by the spatial relation. The determining the spatial domain transmission filter based on the spatial relation may comprise determining the spatial domain transmission filter that is the same as the second spatial domain transmission filter used to send/transmit the reference signal indicated by the spatial relation.

The wireless device 2411 may send/transmit the transport block (e.g., at time T5 in FIG. 25). The wireless device 2411 may send/transmit the transport block via the active uplink BWP of an uplink carrier of the cell. The uplink carrier, for example, may be NUL. The uplink carrier, for example, may be SUL.

The wireless device 2411 may send/transmit the transport block based on the one or more transmission parameters of the uplink resource. The wireless device may send/transmit the transport block based on the one or more transmission parameters that are used/configured/activated for the uplink resource (e.g., most recently) before (or prior to) the reference downlink control signal/channel transmission occasion (e.g., before time T1 in FIG. 25). The wireless device 2411 may send/transmit the transport block based on the one or more transmission parameters that are used for transmission of the uplink signal via the uplink resource (e.g., most recently) before (or prior to) the reference downlink control signal/channel transmission occasion.

The wireless device 2411 may send/transmit the transport block based on the spatial relation of the uplink resource (e.g., Beam 1). The wireless device 2411 may send/transmit the transport block based on the spatial relation that are used/configured/activated for the uplink resource (e.g., most recently) before (or prior to) the reference downlink control signal/channel transmission occasion (e.g., before time T1 in FIG. 25). The wireless device 2411 may send/transmit the transport block based on the spatial relation that is used for transmission of the uplink signal via the uplink resource (e.g., most recently) before (or prior to) the reference downlink control signal/channel transmission occasion.

The wireless device 2411 may send/transmit the transport block with/using the spatial domain transmission filter. The wireless device 2411 may send/transmit the transport block with/using the spatial domain transmission filter that is used to send/transmit the uplink signal via the uplink resource (e.g., most recently) before (or prior to) the reference downlink control signal/channel transmission occasion. Transmitting/sending the transport block based on the spatial relation may comprise transmitting/sending the transport block with the spatial domain transmission filter determined based on the reference signal indicated by the spatial relation.

At least one DMRS antenna port of the transport block may be quasi co-located with the reference signal indicated by the spatial relation. Transmitting/sending the transport block based on the spatial relation may comprise at least one DMRS antenna port of the transport block being quasi co-located with the reference signal indicated by the spatial relation.

The wireless device 2411 may not use, for transmission of the transport block (e.g., TB at time T5 in FIG. 25), one or more second transmission parameters that are used/configured/activated for another uplink resource after the reference downlink control signal/channel transmission occasion (and before transmission of the transport block). The wireless device 2411, for example, may use the one or more second transmission parameters (e.g., Beam 2 in FIG. 25) for transmission of a second uplink signal (e.g., SRS) via the other uplink resource (e.g., at time T2 in FIG. 25) after the reference downlink control signal/channel transmission occasion (e.g., at time T1 in FIG. 24). The wireless device 2411 may send/transmit, via the other uplink resource, the second uplink signal based on the one or more second transmission parameters. The wireless device 2411 may send/transmit, via the other uplink resource, the second uplink signal after the reference downlink control signal/channel transmission occasion. The spatial relation information parameter of the other uplink resource may indicate a second spatial relation (e.g., Beam 2). The one or more configuration parameters, for example, may indicate the second spatial relation for the other uplink resource. The wireless device 2411, for example, may receive an activation command (e.g., AP/SP SRS Activation/Deactivation MAC CE, PUCCH spatial relation Activation/Deactivation MAC CE) indicating/activating the second spatial relation for the other uplink resource. The wireless device 2411 may activate the second spatial relation for the other uplink resource after the reference downlink control signal/channel transmission occasion.

The wireless device 2411 may not use the one or more second transmission parameters (e.g., Beam 2 in FIG. 25) for transmission of the transport block and use the one or more transmission parameters (e.g., Beam 1 in FIG. 25) for transmission of the transport block. The wireless device 2411 may ignore the one or more second transmission parameters for the transmission of the transport block. The wireless device 2411 may use, for the transmission of the transport, the one or more transmission parameters that are used/configured/activated for the uplink resource (e.g., most recently) before (or prior to) the reference downlink control signal/channel transmission occasion.

The wireless device 2411 may receive/detect a downlink control signal/channel of the at least one downlink control signal/channel before (or prior to) the reference downlink control signal/channel transmission occasion (e.g., DCI 2 if DCI 3 is the reference downlink control signal/channel transmission occasion). The wireless device 2411 may receive the downlink control signal/channel in a downlink control signal/channel transmission occasion of the plurality of downlink control signal/channel transmission occasions. The at least one downlink control signal/channel transmission occasion may comprise/indicate the downlink control signal/channel transmission occasion. The downlink control signal/channel transmission occasion may occur before (or prior to) the reference downlink control signal/channel transmission occasion. The wireless device 2411 may not determine/use, for transmission of the transport block, one or more transmission parameters (e.g., Beam 2 at time T2 in FIG. 25) that are used/configured/activated for the uplink resource before the downlink control signal/channel transmission occasion (e.g., time T3 in FIG. 25). The wireless device 2411 may suspend/delay determination of the one or more transmission parameters (e.g., Beam 2 at time T2 in FIG. 25) that are used/configured/activated for the uplink resource after the reference downlink control signal/channel transmission occasion (e.g., time T1 in FIG. 25). The wireless device 2411 may determine/use, for transmission of the transport block, one or more transmission parameters (e.g., Beam 1 at time T0 in FIG. 25) that are used/configured/activated for the uplink resource, for example, most recently before (or prior to) the reference downlink control signal/channel transmission occasion (e.g., time T1 in FIG. 25).

The wireless device 2411 may receive/detect a downlink control signal/channel of the at least one downlink control signal/channel (e.g., DCI 2 received at time T3 in FIG. 25) after the reference downlink control signal/channel transmission occasion (e.g., DCI 1 transmitted/sent at time T1 in FIG. 25). The wireless device 2411 may receive the downlink control signal/channel in a downlink control signal/channel transmission occasion of the plurality of downlink control signal/channel transmission occasions. The at least one downlink control signal/channel transmission occasion may comprise the downlink control signal/channel transmission occasion. The downlink control signal/channel transmission occasion (e.g., time T3 in FIG. 25) may occur after the reference downlink control signal/channel transmission occasion (e.g., time T1 in FIG. 25). The wireless device 2411 may not determine/use, for transmission of the transport block, one or more transmission parameters (e.g., Beam 2 at time T2 in FIG. 25) that are used/configured/activated for the uplink resource before the downlink control signal/channel transmission occasion (e.g., time T3 in FIG. 25) and after the reference downlink control signal/channel transmission occasion (e.g., time T1 in FIG. 25). The wireless device may determine/use, for transmission of the transport block (e.g., TB at time T5 in FIG. 25), one or more transmission parameters (e.g., Beam 1 at time T0 in FIG. 25) that are used/configured/activated for the uplink resource most recently before the reference downlink control signal/channel transmission occasion (e.g., time T1 in FIG. 25).

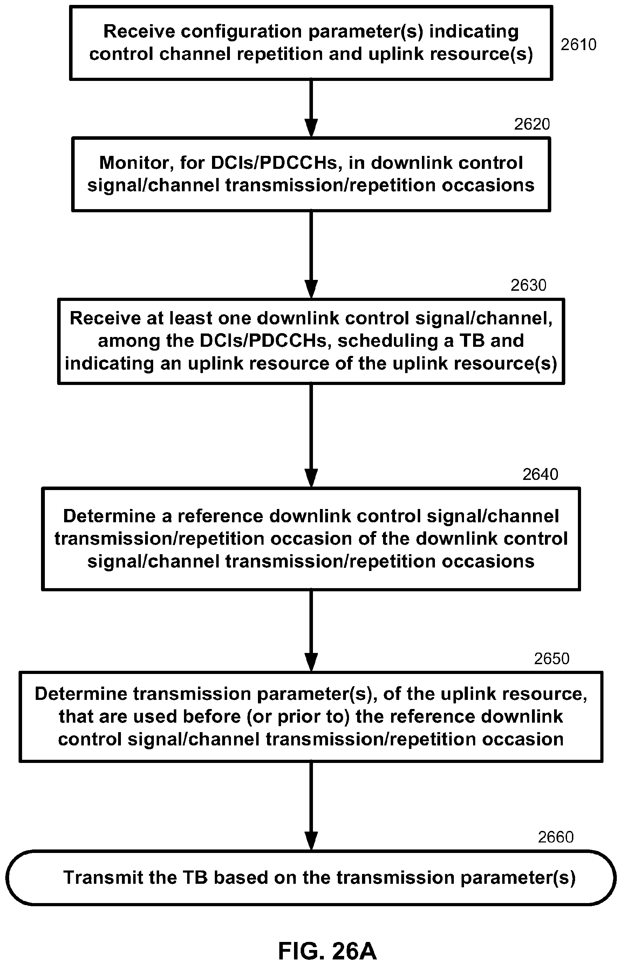

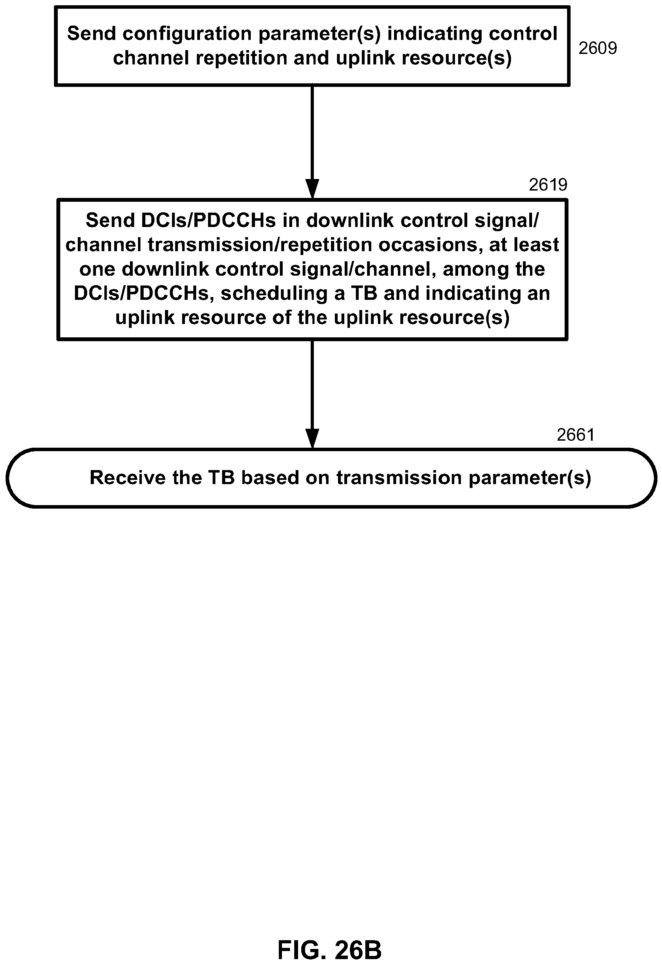

FIG. 26A an FIG. 26B show example methods of uplink transmission with control channel repetition. At step 2609, a base station may send one or more messages, as shown in FIG. 26B. At step 2610, a wireless device may receive the one or more messages, as shown in FIG. 26A. The one or more messages may comprise/indicate one or more configuration parameters for a cell (e.g., PCell, PUCCH SCell, etc). The one or more configuration parameters may indicate a control channel repetition.

The one or more configuration parameters may indicate one or more uplink resources (e.g., SRS resources) for an active uplink BWP of the cell. The one or more configuration parameters may indicate, for the active uplink BWP, an SRS resource set comprising the one or more uplink resources. The active uplink BWP may comprise the one or more uplink resources. An active downlink BWP of the cell may comprise one or more coresets. The one or more configuration parameters may indicate the one or more coresets for the active downlink BWP.

At step 2619, the base station may send/transmit a plurality of downlink control signals/channels (e.g., DCI messages/PDCCH transmissions). The plurality of DCI messages/PDCCH transmissions may comprise repetitions of a downlink control signal/channel. The downlink control signal/channel may be repeatedly sent/transmitted in/via a plurality of downlink control signal/channel transmission/repetition occasions, as shown in FIG. 26B. At least one downlink control signal/channel, among DCI messages/PDCCH transmissions, may schedule at least one transport block (e.g., PUSCH transmission). The at least one downlink control signal/channel, for example, may indicate an activation of a configured uplink grant. The at least one downlink control signal/channel may comprise an SRI field indicating an uplink resource (e.g., SRS resource) of the one or more uplink resources.

At step 2620, the wireless device may monitor the one or more coresets. The one or more coresets are monitored, for a plurality of DCI messages/PDCCH transmissions, in the plurality of downlink control signal/channel transmission/repetition occasions (e.g., PDCCH monitoring occasions). The wireless device may monitor the one or more coresets, as shown in FIG. 26A, for example, based on the one or more configuration parameters indicating the control channel repetition. The wireless device may monitor the one or more coresets, for example, for a repetition of the downlink control signal/channel (e.g., DCI, PDCCH).

At step 2630, the wireless device may receive the at least one downlink control signal/channel, as shown in FIG. 26A. The at least one downlink control signal/channel may schedule the at least one transport block (e.g., PUSCH transmission). The at least one downlink control signal/channel, for example, may indicate the activation of the configured uplink grant. The wireless device may send/transmit at least one transport block (e.g., PUSCH) for the configured uplink grant. The at least one downlink control signal/channel may comprise the SRI field indicating the uplink resource (e.g., SRS resource) of the one or more uplink resources.

At step 2640, the wireless device may determine a reference downlink control signal/channel transmission occasion among the plurality of downlink control signal/channel transmission/repetition occasions. The wireless device may determine the reference downlink control signal/channel transmission occasion, for example, based on the receiving/detecting the at least one downlink control signal/channel. The wireless device may determine the reference downlink control signal/channel transmission occasion, for example, based on the one or more configuration parameters indicating the control channel repetition. The wireless device may determine, for transmission of the transport block, the reference downlink control signal/channel transmission occasion.

The reference downlink control signal/channel transmission occasion, for example, may be the last downlink control signal/channel transmission/repetition occasion of the plurality of downlink control signal/channel transmission/repetition occasions. The wireless device may monitor, for a last DCI message/PDCCH transmission among the plurality of DCI messages/PDCCH transmissions, in the reference downlink control signal/channel transmission occasion. The wireless device may monitor, for a last repetition of the downlink control signal/channel, in the reference downlink control signal/channel transmission occasion.

The reference downlink control signal/channel transmission occasion, for example, may be the first downlink control signal/channel transmission/repetition occasion of the plurality of downlink control signal/channel transmission/repetition occasions. The wireless device may monitor, for a first DCI message/PDCCH transmission among the plurality of DCI messages/PDCCH transmissions, in the reference downlink control signal/channel transmission occasion. The wireless device may monitor, for a first repetition of the downlink control signal/channel, in the reference downlink control signal/channel transmission occasion.

At step 2650, the wireless device may determine one or more transmission parameters (e.g., spatial relation, spatial parameters, power control parameters, transmission precoder), of the uplink resource, that are used, for example, most recently before (or prior to) the reference downlink control signal/channel transmission/repetition occasion. The wireless device may send/transmit, via the uplink resource and before (or prior to) the reference downlink control signal/channel transmission/repetition occasion, an uplink signal (e.g., SRS) based on the one or more transmission parameters. For example, the wireless device may determine a spatial domain transmission filter based on the one or more transmission parameters (e.g., or a spatial relation information parameter indicating a spatial relation). The wireless device may send/transmit, via the uplink resource, the uplink signal with/using the spatial domain transmission filter, for example, before (or prior to) the reference downlink control signal/channel transmission/repetition occasion.

At step 2660, the wireless device may send/transmit, via the active uplink BWP of the cell, the at least one transport block, as shown in FIG. 26A. At step 2661, the base station may receive, via the active uplink BWP of the cell, the at least one transport block, as shown in FIG. 26B. The wireless device may send/transmit the at least one transport block based on the one or more transmission parameters. The wireless device may send/transmit the at least one transport block based on the one or more transmission parameters of the uplink resource that are used/configured/activated, for example, most recently before (or prior to) the reference downlink control signal/channel transmission/repetition occasion. The wireless device may send/transmit the at least one transport block with/using the spatial domain transmission filter. The wireless device may send/transmit the at least one transport block with/using the spatial domain transmission filter of the uplink resource.

The wireless device may use one or more second transmission parameters (e.g., spatial relation, spatial parameters, power control parameters, transmission precoder) for transmission of a second uplink signal (e.g., SRS) via the uplink resource, for example, after the reference downlink control signal/channel transmission/repetition occasion and before transmission of the at least one transport block. The wireless device may send/transmit, via the uplink resource and after the reference downlink control signal/channel transmission/repetition occasion and before transmission of the at least one transport block, the second uplink signal based on the one or more second transmission parameters. For example, the wireless device may determine a second spatial domain transmission filter based on the one or more second transmission parameters (e.g., or a spatial relation information parameter indicating a spatial relation). The wireless device may send/transmit, via the uplink resource, the second uplink signal with/using the second spatial domain transmission filter, for example, after the reference downlink control signal/channel transmission/repetition occasion and before transmission of the at least one transport block. For example, the wireless device may receive one or more second configuration parameters comprising the one or more second transmission parameters for the uplink resource. For example, the wireless device may receive an activation command indicating/activating the one or more second transmission parameters for the uplink resource. The wireless device may update/activate the one or more second transmission parameters for the uplink resource after the reference downlink control signal/channel transmission/repetition occasion and before transmission of the at least one transport block.

The wireless device may not send/transmit the at least one transport block based on the one or more second transmission parameters. The wireless device may not send/transmit the at least one transport block based on the one or more second transmission parameters of the uplink resource that are used/configured/activated after the reference downlink control signal/channel transmission/repetition occasion and before transmission of the at least one transport block. The wireless device may not send/transmit the at least one transport block with/using the second spatial domain transmission filter. The wireless device may not send/transmit the at least one transport block with/using the second spatial domain transmission filter of the uplink resource. The at least one transport block described herein may comprise a plurality of transport blocks. The at least one transport block described herein may comprise a transport block.

At least some wireless devices may receive, in a time slot, a downlink control signal/channel (e.g., DCI) indicating a new minimum scheduling offset. At least some wireless devices may determine a time slot to apply/activate the new minimum scheduling offset based on the time slot that the wireless device receives the DCI successfully. At least some base stations may not send/transmit another downlink control signal/channel to the wireless device in/within/during the time slot. Such wireless devices may save power during the time slot. Such base stations may send/transmit send/transmit, inv/via a plurality of downlink control signal/channel transmission/repetition occasions (e.g., PDCCH transmission/repetition occasions), a plurality of DCI messages/PDCCH transmissions (e.g., DCI 1, DCI 2, DCI 3) for a control channel repetition. As such base station may not know in which PDCCH transmission/repetition occasion(s) that such wireless devices receive DCI successfully, there may be a misalignment on the time slot that the wireless device activates/applies the new minimum scheduling offset. This misalignment may reduce a length of the time slot during which the wireless device may save power.

As described herein, a wireless device may be configured for improved operations. For example, a wireless device may determine a time slot to apply/activate the new minimum scheduling offset based on a reference downlink control signal/channel transmission occasion of a plurality of downlink control signal/channel transmission/repetition occasions. The reference downlink control signal/channel transmission occasion may be, for example, a first downlink control signal/channel (e.g., DCI 1) transmission/repetition occasion or s last downlink control signal/channel (e.g., DCI 3) transmission/repetition occasion. The wireless device may receive at least one of the plurality of DCI messages/PDCCH transmissions and determine the time slot based on a reference downlink control signal/channel transmission occasion. This configuration may result in reducing misalignment (e.g., in a time slot during which the wireless device may save power).

At least some base stations may not send/transmit a plurality of DCI messages/PDCCH transmissions for the control channel repetition to indicate another new minimum scheduling offset in/within/during the time slot previously set. Such base stations may have to wait until the time slot runs out. This operation may increase latency.

As described herein, a base station may be configured for improved operations. For example, a base station may send/transmit a plurality of DCI messages/PDCCH transmissions in repetitions (e.g., DCI 1, DCI 2, DCI 3) if a last repetition (e.g., DCI 3) occurs after (the end of) a time slot. This configuration may allow the base station to send/transmit repetitions of DCI indicating a new minimum scheduling offset earlier than the end of the time slot, which may provide advantages such as decreased latency.

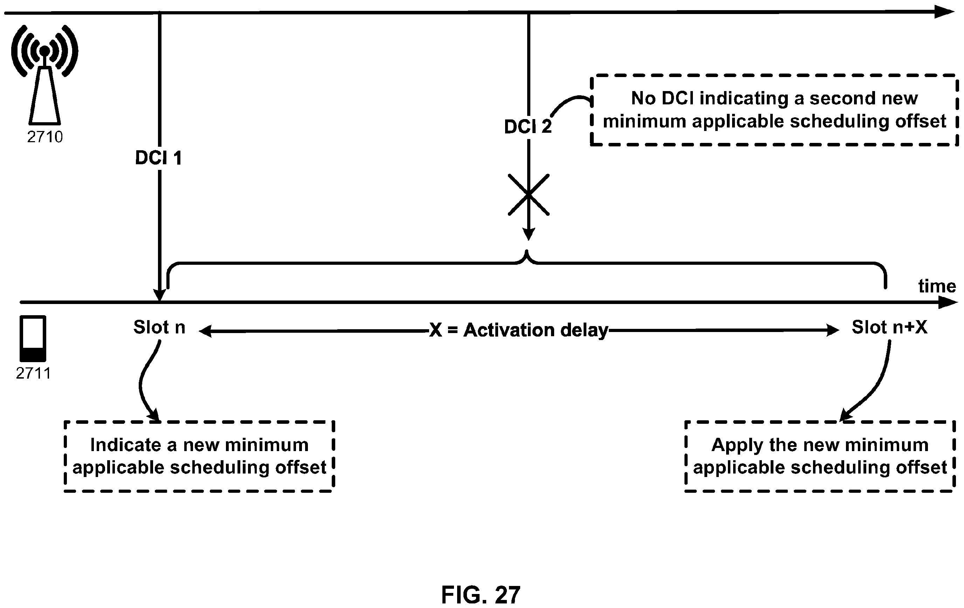

FIG. 27 shows an example of scheduling without control channel repetition. A base station 2710 may send one or more messages. The one or more messages may comprise/indicate one or more configuration parameters. The one or more configuration parameters may not indicate a control channel repetition. A wireless device 2711 may receive a downlink control signal/channel without a repetition. The wireless device 2711 may determine a time slot, for a new minimum applicable scheduling offset, for example, based on the downlink control signal/channel.

The wireless device 2711 may receive/detect a downlink control signal/channel (e.g., DCI 1) without a repetition. The downlink control signal/channel may comprise/indicate a time slot (e.g., Slot n in FIG. 27). The downlink control signal/channel may comprise a minimum applicable scheduling offset indicator field indicating a new minimum applicable scheduling offset.

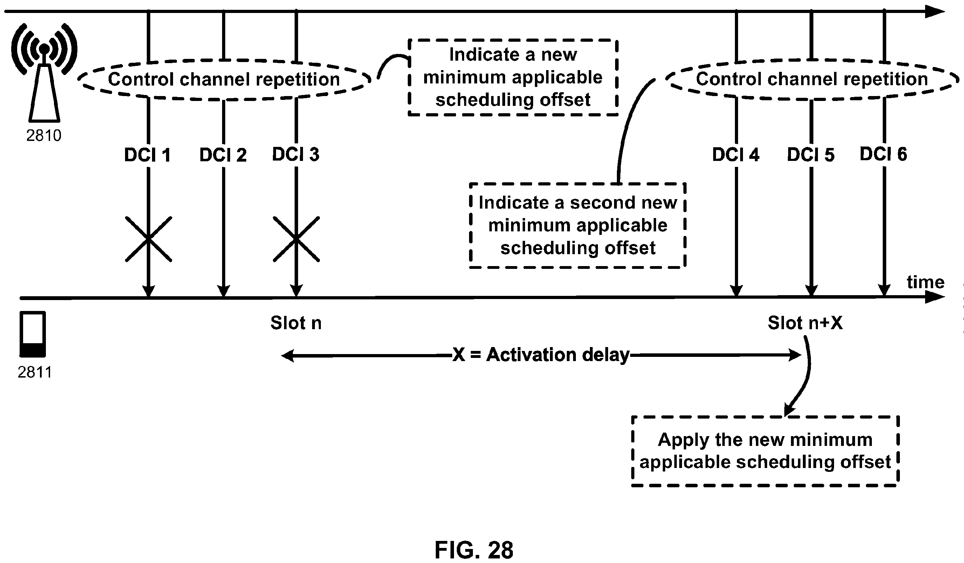

The wireless device 2711 may determine, for the new minimum applicable scheduling offset, a time slot. The wireless device 2711 may determine, to apply/use the new minimum applicable scheduling offset, the time slot (e.g., Slot n + X in FIG. 28). The wireless device 2711 may determine the time slot based on the time slot indicated by the downlink control signal/channel (e.g., DCI 1). The wireless device may determine the time slot, for example, after (e.g., based on or in response to) the one or more configuration parameters not indicating the control channel repetition.

The determining the time slot may be based on an activation delay (e.g., X slots in FIG. 27). The activation delay may be in terms of time slots. The wireless device 2711 may determine the time slot (e.g., Slot n + X in FIG. 27) based the time slot indicated by the downlink control signal/channel (e.g., Slot n in FIG. 27) plus the activation delay (e.g., X slots in FIG. 27).

The wireless device 2711, for example, may apply/use/activate the new minimum applicable scheduling offset in/within/during the time slot. The wireless device 2711, for example, may apply/use/activate the new minimum applicable scheduling offset starting from the time slot. The wireless device 2711, for example, may apply/use the new minimum applicable scheduling offset starting from (and including) the time slot.

The base station 2710 may determine to send/transmit a second downlink control signal/channel (e.g., DCI 2). The second downlink control signal/channel may comprise a minimum applicable scheduling offset indicator field indicating a second new minimum applicable scheduling offset. The base station 2710 may not send/transmit the second downlink control signal/channel before the time slot (e.g., slot n + X in FIG. 28). The base station 2710 may not send/transmit the second downlink control signal/channel before the new minimum applicable scheduling offset is applied/used/activated. The base station 2710 may send/transmit the second downlink control signal/channel after (or at) the time slot. The base station 2710 may send/transmit the second downlink control signal/channel after the new minimum applicable scheduling offset is applied/used/activated. The base station 2710 may send/transmit the second downlink control signal/channel after (or at) the time slot based on the one or more configuration parameters not indicating the control channel repetition. The base station 2710 may not send/transmit the second downlink control signal/channel before the time slot based on the one or more configuration parameters not indicating the control channel repetition.

FIG. 28 shows an example of scheduling with control channel repetition. A base station 2810 may send/transmit one or more messages. A wireless device 2811 may receive the one or more messages. The one or more messages may comprise/indicate one or more configuration parameters. The one or more configuration parameters may indicate a control channel repetition. The one or more messages may be one or more control signal(s)/channel(s).

The one or more control signal(s)/channel(s) (e.g., DCI 1, DCI 2, DCI 3 in FIG. 28) may comprise/be repetitions of a downlink control signal/channel. The wireless device 2811 may receive at least one downlink control signal/channel, for example, DCI 2. The wireless device 2811 may determine, for example, a last time slot occurring in a plurality of downlink control signal/channel transmission occasions as a reference time slot (e.g., Slot n in FIG. 28). The reference time slot may be associated with (or corresponding to) a reference downlink control signal/channel (e.g., DCI 3 in FIG. 28) transmission/repetition occasion. The wireless device 2811 may determine a time slot (e.g., Slot n + X in FIG. 28), for applying/using a new minimum applicable scheduling offset. The wireless device 2811 may determine the time slot, for example, based on the reference time slot indicated by the reference downlink control signal/channel (e.g., DCI 3 in FIG. 28).

The base station 2810 may or may not send/transmit, for example, in/within/during the time slot, repetitions (e.g., DCI4, DCI 5, DCI 6 in FIG. 28) of another reference downlink control signal/channel. The other reference downlink control signal/channel may comprise/indicate another new minimum applicable scheduling offset. The base station 2810 may not send/transmit the repetitions of the other reference downlink control signal/channel, for example, if the last repetition (e.g., DCI 6) occurs in/within/during the time slot (e.g., Slot n + X in FIG. 28). The base station 2810 may send/transmit the repetitions of the other reference downlink control signal/channel, for example, if the last repetition (e.g., DCI 6) occurs after (e.g., the end of) the time slot (e.g., Slot n + X in FIG. 28).

The wireless device 2811 may receive/detect at least one downlink control signal/channel (e.g., DCI 2) among the plurality of DCI messages/PDCCH transmissions (e.g., DCI 1, DCI 2 and DCI 3), as described in FIG. 24 and FIG. 25. The at least one downlink control signal/channel (or each downlink control signal/channel of the at least one downlink control signal/channel) may be a DCI format (e.g., DCI format x-1, x = 0, 1, 2, 3, ....). For example, the at least one downlink control signal/channel (or each downlink control signal/channel of the at least one downlink control signal/channel) may be a DCI format 0-1 or a DCI format 1-1.

The at least one downlink control signal/channel may not indicate an active BWP (e.g., uplink BWP, downlink BWP) change of the cell. The at least one downlink control signal/channel (or each downlink control signal/channel of the at least one downlink control signal/channel) may not indicate a BWP different from the active uplink/downlink BWP of the cell.

The at least one downlink control signal/channel may comprise a minimum applicable scheduling offset indicator field indicating a new minimum applicable scheduling offset (e.g., K0min for a downlink BWP, or K2min for an uplink BWP). Each downlink control signal/channel of the at least one downlink control signal/channel may comprise the minimum applicable scheduling offset indicator field indicating the new minimum applicable scheduling offset.

The wireless device 2811 may determine, for the new minimum applicable scheduling offset, a time slot. The wireless device 2811 may determine, to apply/use the new minimum applicable scheduling offset, the time slot (e.g., Slot n + X in FIG. 28). The wireless device 2811 may determine the time slot, for example, based on a reference downlink control signal/channel transmission/repetition occasion (e.g., Slot n in FIG. 28) among the plurality of downlink control channel transmission/repetition occasions. The wireless device 2811 may determine the time slot, for example, based on the reference downlink control signal/channel transmission/repetition occasion after (e.g., based on or in response to) the one or more configuration parameters indicating the control channel repetition.

The determining the time slot may be based on an activation delay (e.g., X slots in FIG. 28). The activation delay may be in terms of time slots. The wireless device 2711 may determine the time slot, for example, based on a reference time slot (e.g., Slot n in FIG. 28) plus the activation delay (e.g., X slots in FIG. 28). The reference time slot may be associated with (or corresponding to) the reference downlink control signal/channel transmission/repetition occasion.

The reference time slot may be/comprise the reference downlink control signal/channel transmission/repetition occasion. The reference time slot may be a time slot comprising the reference downlink control signal/channel transmission/repetition occasion. The wireless device 2811 may monitor, for the reference downlink control signal/channel (e.g., DCI 3 at Slot n in FIG. 28), in/via the reference downlink control signal/channel transmission occasion. The wireless device 2811 may monitor, for the reference downlink control signal/channel, in the reference time slot.

The reference downlink control signal/channel transmission occasion may be the last (or latest/most recent) downlink control signal/channel transmission occasion (e.g., PDCCH transmission/repetition occasion 3 in FIG. 24 or DCI 3 in FIG. 28) among the plurality of downlink control signal/channel transmission occasions. The reference time slot may be/comprise the last downlink control signal/channel transmission occasion. The reference time slot (e.g., Slot n in FIG. 28) may be a last time slot occurring in the plurality of downlink control signal/channel transmission occasions. The plurality of downlink control signal/channel transmission occasions may end in the last time slot (e.g., Slot n in FIG. 28). The wireless device 2811 may monitor, for the last downlink control signal/channel (e.g., DCI 3 in FIG. 28), in/via the last time slot (e.g., Slot n in FIG. 28). The last time slot may comprise the last downlink control signal/channel transmission occasion.

The reference downlink control signal/channel transmission occasion may be the first (or earliest) downlink control signal/channel transmission occasion (e.g., PDCCH transmission/repetition occasion 1 in FIG. 24 or DCI 1 in FIG. 28) among the plurality of downlink control signal/channel transmission occasions. The reference time slot may be/comprise the earliest/first downlink control signal/channel transmission occasion. The reference time slot may be a first time slot occurring in the plurality of downlink control signal/channel transmission occasions. The plurality of downlink control signal/channel transmission occasions may start in the first time slot. The wireless device 2811 may monitor, for the first downlink control signal/channel, in/via the first time slot. The first time slot may comprise the earliest/first downlink control signal/channel transmission occasion.

The wireless device 2811 may determine the activation delay based on a current minimum applicable scheduling offset (e.g., for the active downlink BWP of the cell or for an active downlink BWP of a scheduled cell scheduled by the cell). The one or more configuration parameters may not indicate a minimum scheduling offset (e.g., minimumSchedulingOffsetK0). The current minimum applicable scheduling offset may be equal to zero, for example, based on the one or more configuration parameters not indicating the minimum scheduling offset.

The wireless device 2811 may determine the activation delay based on a subcarrier spacing (and/or numerology) of the active downlink BWP of the cell. The wireless device 2811 may determine the activation delay based on a subcarrier spacing (or numerology) of an active downlink BWP of a scheduled cell. The cell may schedule the cell.

The wireless device 2811, for example, may apply/use/activate the new minimum applicable scheduling offset in/within/during the time slot. The wireless device 2811, for example, may apply/use/activate the new minimum applicable scheduling offset starting from the time slot. The wireless device 2811, for example, may apply/use the new minimum applicable scheduling offset starting from (and including) the time slot.

The wireless device 2811 may apply/use/activate a minimum applicable scheduling offset. The applying/using/activating the minimum applicable scheduling offset may not comprise receiving a downlink control signal/channel (e.g., DCI) with a slot offset value (or a scheduling offset K_0 or K_2) smaller than the minimum applicable scheduling offset. The base station 2810 may not send/transmit a downlink control signal/channel (e.g., DCI) with a slot offset value (or a scheduling offset) smaller than the minimum applicable scheduling offset. The downlink control signal/channel may comprise a time domain resource assignment field indicating the slot offset value. The downlink control signal/channel may schedule a transport block (e.g., PDSCH, PUSCH). The applying/using/activating the minimum applicable scheduling offset may comprise receiving a downlink control signal/channel (e.g., DCI) with a slot offset value (or a scheduling offset K_0 or K_2) equal to or larger than the minimum applicable scheduling offset. The base station 2810 may send/transmit a downlink control signal/channel (e.g., DCI) with a slot offset value (or a scheduling offset) equal to or larger than the minimum applicable scheduling offset. The downlink control signal/channel may comprise a time domain resource assignment field indicating the slot offset value. The downlink control signal/channel may schedule a transport block (e.g., PDSCH, PUSCH).

The wireless device 2811 may apply/use a current minimum applicable scheduling offset (e.g., K_0 for the active downlink BWP and/or K_2 for the active uplink BWP) before (or until or prior to) the time slot. The wireless device 2811 may apply/use the current minimum applicable scheduling offset until the time slot. The wireless device 2811 may stop using (or deactivate) the current minimum applicable scheduling offset at (or before or in) the time slot. The wireless device 2811 may start using (or activate or switch using) the new minimum applicable scheduling offset at (or after or in) the time slot. The new minimum applicable scheduling offset may take effect in (or starting from) the time slot.

The wireless device 2811 may receive/detect a downlink control signal/channel of the at least one downlink control signal/channel before (or prior to) the reference downlink control signal/channel transmission occasion (e.g., DCI 2 in FIG. 28 if DCI 3 is the reference downlink control signal/channel). The wireless device 2811 may receive the downlink control signal/channel in a downlink control signal/channel transmission occasion of the plurality of downlink control signal/channel transmission occasions. The at least one downlink control signal/channel transmission occasion may comprise/be the downlink control signal/channel transmission occasion. The downlink control signal/channel transmission occasion may occur before (or prior to) the reference downlink control signal/channel transmission occasion. The wireless device 2811 may not determine a time slot to apply/use/activate the new minimum applicable scheduling offset, for example, based on the downlink control signal/channel transmission occasion. The wireless device 2811 may suspend/delay determination of the time slot to apply/use/activate the new minimum applicable scheduling offset to the reference downlink control signal/channel transmission occasion. The wireless device may determine a time slot to apply/activate the new minimum applicable scheduling offset, for example, based on the reference downlink control signal/channel transmission occasion.

The wireless device 2811 may receive/detect a downlink control signal/channel of the at least one downlink control signal/channel after the reference downlink control signal/channel transmission occasion (e.g., DCI 2 in FIG. 28 if DCI 1 transmitted/sent is the reference downlink control signal/channel). The wireless device 2811 may receive the downlink control signal/channel in a downlink control signal/channel transmission occasion of the plurality of downlink control signal/channel transmission occasions. The at least one downlink control signal/channel transmission occasion may comprise/be the downlink control signal/channel transmission occasion. The downlink control signal/channel transmission occasion may occur after the reference downlink control signal/channel transmission occasion. The wireless device may not determine a time slot to apply/activate the new minimum applicable scheduling offset, for example, based on the downlink control signal/channel transmission occasion. The wireless device 2811 may determine a time slot to apply/use/activate the new minimum applicable scheduling offset, for example, based on the reference downlink control signal/channel transmission occasion.

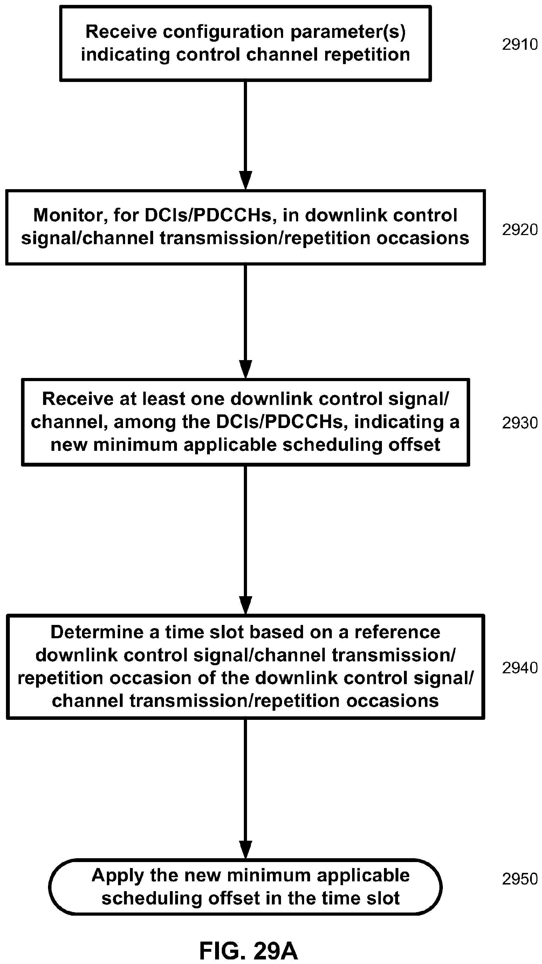

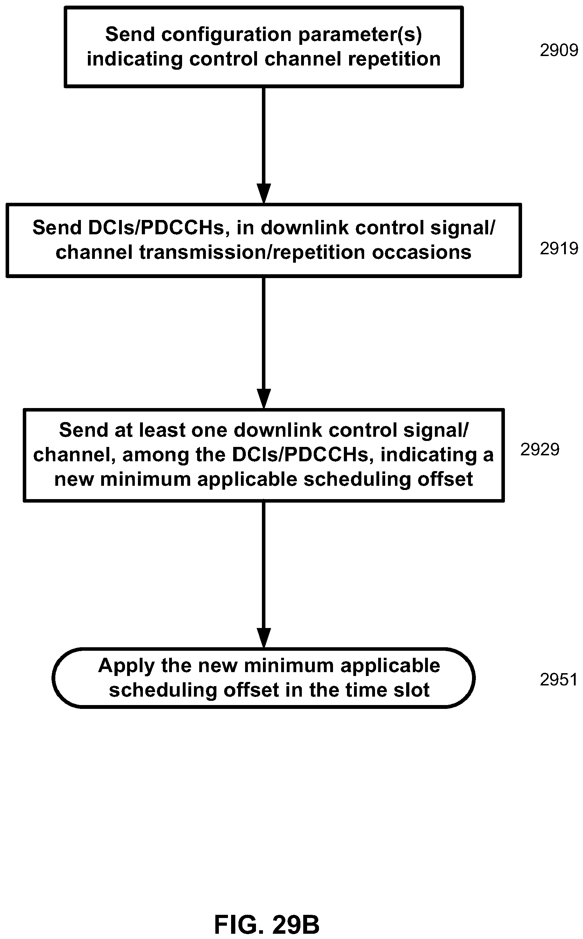

FIG. 29A and 29B show example methods of control channel repetition. At step 2909, a base station may send one or more messages comprising one or more configuration parameters, as shown in FIG. 29B. At step 2910, a wireless device may receive the one or more messages comprising the one or more configuration parameters, as shown in FIG. 29A (e.g., as also described in FIG. 26A and FIG. 26B). The one or more configuration parameters may indicate a control channel repetition.

At step 2919, the base station may send a plurality of DCI messages/PDCCH transmissions in a plurality of downlink control signal/channel transmission/repetition occasions, as shown in FIG. 29B. At step 2920, the wireless device may monitor, for the plurality of DCI messages/PDCCH transmissions, in the plurality of downlink control signal/channel transmission/repetition occasions (e.g., PDCCH monitoring occasions), as shown in FIG. 29A.

At step 2929, the base station may send at least one downlink control signal/channel among the plurality of downlink control signals/channels (e.g., DCI messages/PDCCH transmissions), as shown in FIG. 29B. At step 2930, the wireless device may receive the at least one downlink control signal/channel among the plurality of DCI messages/PDCCH transmissions, as shown in FIG. 29A. The at least one downlink control signal/channel may comprise a minimum applicable scheduling offset indicator field indicating a new minimum applicable scheduling offset.

The wireless device may determine a reference downlink control signal/channel transmission occasion among the plurality of downlink control signal/channel transmission/repetition occasions. The wireless device may determine the reference downlink control signal/channel transmission occasion, for example, based on the receiving/detecting the at least one downlink control signal/channel. The wireless device may determine the reference downlink control signal/channel transmission occasion, for example, based on the one or more configuration parameters indicating the control channel repetition.

At step 2940, the device may determine, for the new minimum applicable scheduling offset, a time slot. The wireless device may determine, to apply/use the new minimum applicable scheduling offset, the time slot. For example, the wireless device may determine the time slot based on the reference downlink control signal/channel transmission/repetition occasion.

At step 2950, the wireless device may apply/use/activate the new minimum applicable scheduling offset in/within/during the time slot. At step 2951, the base station may apply/use/activate the new minimum applicable scheduling offset in/within/during the time slot, as shown in FIG. 29B. The wireless device may apply/use/activate the new minimum applicable scheduling offset starting from the time slot. The wireless device may apply/use the new minimum applicable scheduling offset starting from (and including) the time slot.

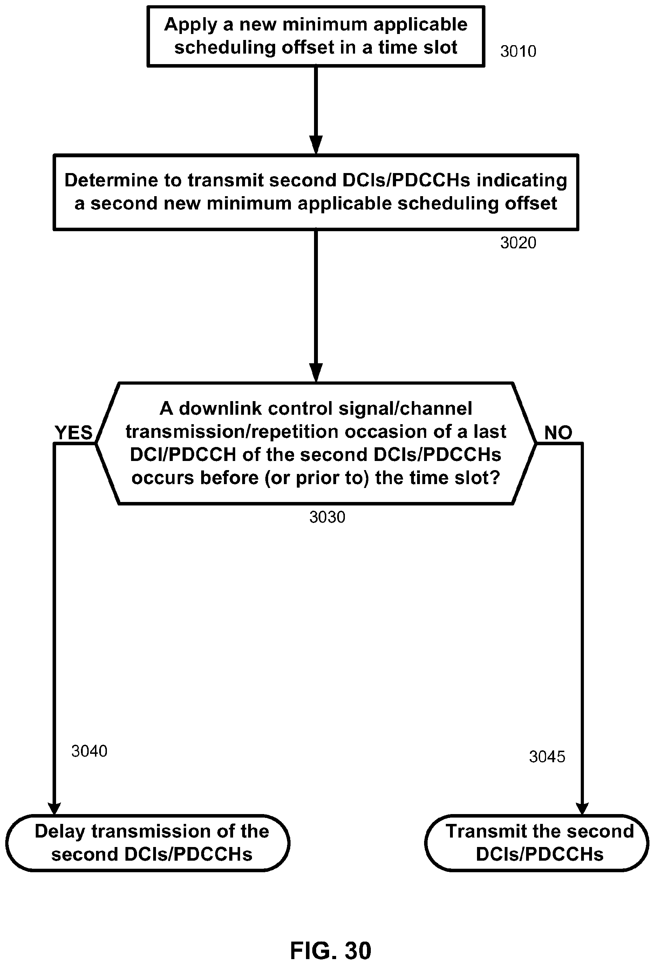

FIG. 30 shows an example method of control channel repetition. The method may be performed by a base station (or any computing device). At step 3010, a base station may apply/use/activate a new minimum applicable scheduling offset in/within/during a time slot. At step 3020, the base station may determine to send/transmit a second plurality of downlink control signals/channels, for example, a second plurality of DCI messages/PDCCH transmissions (e.g., DCI 4, DCI 5 and DCI 6 in FIG. 28). The second plurality of DCI messages/PDCCH transmissions comprise a minimum applicable scheduling offset indicator field indicating a second new minimum applicable scheduling offset (e.g., K0min for a downlink BWP, or K2min for an uplink BWP). Each downlink control signal/channel of the second plurality of DCI messages/PDCCH transmissions may comprise the minimum applicable scheduling offset indicator field indicating the second new minimum applicable scheduling offset.

At step 3030 the base station may determine whether a last DCI message/PDCCH transmission (e.g., DCI 6) of the second plurality of DCI messages/PDCCH transmissions being transmitted/sent before (or prior to) the time slot (e.g., slot n + X in FIG. 27). The base station may determine whether the last DCI message/PDCCH transmission being transmitted/sent before (or prior to) the time slot, for example, based on the one or more configuration parameters indicating the control channel repetition.

At step 3030, the base station may determine that the last DCI message/PDCCH transmission is transmitted/sent before the time slot and proceed to step 3040. At step 3040, the base station may delay (starting) transmission of the second plurality of DCI messages/PDCCH transmissions based on the determining that the last DCI message/PDCCH transmission is transmitted/sent before the time slot. The base station may delay transmission of the second plurality of DCI messages/PDCCH transmissions until the last DCI message/PDCCH transmission is transmitted/sent after the time slot. The base station may delay transmission of the second plurality of DCI messages/PDCCH transmissions until the last DCI message/PDCCH transmission is transmitted/sent after the time slot, for example, based on the one or more configuration parameters indicating the control channel repetition.

At step 3030, the base station may determine that the last DCI message/PDCCH transmission is transmitted/sent after (or at) the time slot and proceed to step 3045. At step 3045, the base station may (start) transmitting/sending the second plurality of DCI messages/PDCCH transmissions based on the determining that the last DCI message/PDCCH transmission is transmitted/sent after the time slot. The base station may (start) transmitting/sending the second plurality of DCI messages/PDCCH transmissions based on the determining that the last DCI message/PDCCH transmission is transmitted/sent after the time slot, for example, after (e.g., based on or in response to) the one or more configuration parameters indicating the control channel repetition.

The base station may send/transmit the second plurality of DCI messages/PDCCH transmissions across/over/on a second plurality of downlink control signal/channel transmission/repetition occasions. The base station may determine whether a last downlink control signal/channel transmission/repetition occasion of the second plurality of downlink control signal/channel transmission/repetition occasions occurs before (or prior to) the time slot (e.g., slot n + X in FIG. 27).

The base station may determine that the last downlink control signal/channel transmission/repetition occasion occurs before the time slot. The base station may delay (starting) transmission of the second plurality of DCI messages/PDCCH transmissions based on the determining that the last downlink control signal/channel transmission/repetition occasion occurs before the time slot. The base station may delay transmission of the second plurality of DCI messages/PDCCH transmissions until the last downlink control signal/channel transmission/repetition occasion occurs after the time slot.

The base station may determine that the last downlink control signal/channel transmission/repetition occasion occurs after (or at) the time slot. The base station may (start) transmitting/sending the second plurality of DCI messages/PDCCH transmissions based on the determining that the last downlink control signal/channel transmission/repetition occasion occurs after the time slot. The base station may send/transmit a last DCI message/PDCCH transmission of the second plurality of DCI messages/PDCCH transmissions in the last downlink control signal/channel transmission/repetition occasion.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device via at least one transmission occasions of a plurality of transmission occasions, at least one downlink control information (DCI) repetition, of a plurality of DCI repetitions, indicating an uplink resource.

Clause 2. The method of clause 1, further comprising determining a transmission parameter used for an uplink transmission, via the uplink resource, prior to the at least one transmission occasion.

Clause 3. The method of any one of clauses 1 to 2, further comprising transmitting, based on the transmission parameter, at least one transport block.

Clause 4. The method of any one of clauses 1 to 3, wherein the at least one DCI repetition comprises a field indicating a time offset between a last-in-time repetition, of the plurality DCI repetitions, and a second set of DCI repetitions.

Clause 5. The method of any one of clauses 1 to 4, further comprising, based on a determination that the second set of DCI repetitions is scheduled to occur after the time offset, receiving the second set of DCI repetitions.

Clause 6. The method of any one of clauses 1 to 5, further comprising monitoring control resource sets (coresets) for the plurality of DCI repetitions.

Clause 7. The method of any one of clauses 1 to 6, wherein the determining the transmission parameter comprises determining a most recent transmission parameter used prior to the at least one transmission occasion.

Clause 8. The method of any one of clauses 1 to 7, wherein the DCI repetitions schedule transmission of the at least one transport block.

Clause 9. The method of any one of clauses 1 to 8, further comprising determining a reference transmission occasion among the transmission occasions.

Clause 10. The method of any one of clauses 1 to 9, further comprising determining, based on the reference transmission occasion, an activation delay during which the wireless device does not receive DCI.

Clause 11. The method of clause 10, wherein the reference transmission occasion has an earliest starting time among starting times of the plurality of transmission occasions.

Clause 12. The method of clause 10, wherein the reference transmission occasion has a latest ending time among ending times of the plurality of transmission occasions.

Clause 13. The method of any one of clauses 1 to 12, further comprising receiving one or more messages comprising one or more configuration parameters.

Clause 14. The method of clause 13, wherein the one or more configuration parameters indicate, for the uplink resource, one or more transmission parameters.

Clause 15. The method of any one of clauses 1 to 14, further comprising receiving an activation command indicating, for the uplink resource, one or more transmission parameters.

Clause 16. The method of any one of clauses 14 to 15, wherein the one or more transmission parameters comprises an indication of at least one of: a spatial relation; a beam; a transmission precoder; or a transmission power.

Clause 17. The method of any one of clauses 14 to 16, wherein the one or more transmission parameters comprise one or more transmission precoder parameters.

Clause 18. The method of any one of clauses 14 to 17, wherein the one or more transmission parameters comprise one or more power control parameters.

Clause 19. The method of any one of clauses 1 to 18, wherein the uplink resource comprises a sounding reference signal (SRS) resource.

Clause 20. The method of clause 19, wherein the DCI repetitions comprise an SRS resource indicator (SRI) field indicating the SRS resource.

Clause 21. The method of any one of clauses 1 to 20, wherein the transmission of the at least one transport block comprises a physical uplink shared channel (PUSCH) transmission comprising the at least one transport block.

Clause 22. The method of any one of clauses 1 to 21, further comprising transmitting, via the uplink resource, an uplink signal based on the transmission parameter, wherein the transmitting the uplink signal is occurs prior to a reference downlink control transmission occasion.

Clause 23. The method of clause 22, wherein the uplink signal, transmitted via the uplink resource, is a most recent transmission via the uplink resource prior to the reference downlink control transmission occasion.

Clause 24. The method of clause 23, wherein the transmitting the at least one transport block comprises transmitting the at least one transport block using a spatial domain transmission filter determined based on a reference signal indicated by a spatial relation.

Clause 25. The method of clause 24, wherein the transmitting the uplink signal comprises transmitting the uplink signal using the spatial domain transmission filter.

Clause 26. The method of any one of clauses 1 to 25, further comprising receiving one or more configuration parameters indicating a codebook-based transmission.

Clause 27. The method of any one of clauses 1 to 26, further comprising receiving one or more configuration parameters indicating a non-codebook-based transmission.

Clause 28. The method of any one of clauses 1 to 27, further comprising receiving one or more configuration parameters indicating an SRS resource set comprising the uplink resource.

Clause 29. The method of clause 28, wherein the one or more configuration parameters indicate, for the SRS resource set, an SRS usage parameter.

Clause 30. The method of clause 29, wherein the SRS usage parameter is at least one of: codebook; and non-codebook.

Clause 31. The method of any one of clauses 1 to 27, wherein the DCI repetitions use a format comprising at least one of: DCI format 0_0; DCI format 0_1; or DCI format 0_2.

Clause 32. The method of any one of clauses 1 to 31, further comprising determining to not transmit the at least one transport block, wherein the determining to not transmit the at least one transport block is based on one or more second transmission parameters, of the uplink resource, that are used after the plurality of transmission occasion.

Clause 33. The method of clause 32, further comprising receiving an activation command indicating, for the uplink resource, the one or more second transmission parameters.

Clause 34. The method of clause 33, further comprising transmitting, via the uplink resource, a second uplink signal based on the one or more second transmission parameters after the plurality of transmission occasions.

Clause 35. The method of clause 34, wherein the transmitting the second uplink signal is before the transmitting the at least one transport block.

Clause 36. The method of any one of clauses 1 to 35, further comprising receiving second DCI, wherein the second DCI is for scheduling transmission of a second transport block and indicates a second uplink resource.

Clause 37. The method of any one of clauses 1 to 36, further comprising transmitting the second transport block, wherein the transmitting the second transport block is based on one or more transmission parameters used for an uplink transmission, via the second uplink resource, prior to the receiving the second DCI.

Clause 38. The method of any one of clauses 1 to 37, wherein the plurality of DCI repetitions comprises at least one of: time domain control channel repetitions; or frequency domain control channel repetitions.

Clause 39. The method of any one of clauses 1 to 38, further comprising monitoring a plurality of search space sets associated with a plurality of coresets.

Clause 40. The method of any one of clauses 1 to 39, further comprising receiving one or more configuration parameters indicating, for the downlink control channel repetition, a plurality of coresets.

Clause 41. The method of any one of clauses 1 to 40, further comprising determining, based on one or more configuration parameters indicating a downlink control channel repetition, a reference transmission occasion.

Clause 42. The method of clause 41, wherein the transmitting the at least one transport block is based on the one or more configuration parameters indicating the downlink control channel repetition.

Clause 43. A wireless device comprising: one or more processors; and memory storing instructions that, when executed by the one or more processors, cause the wireless device to perform the method of any one of clauses 1 to 42.

Clause 44. A system comprising: a wireless device configured to perform the method of any one of clauses 1 to 42; and a base station configured to transmit the DCI repetitions.

Clause 45. A computer-readable medium storing instructions that, when executed, cause performance of the method of any one of clauses 1 to 42.

Clause 46. A method comprising monitoring, by a wireless device, a plurality of coresets for downlink control information (DCI) having repetitions in a plurality of transmission occasions.

Clause 47. The method of clause 46, further comprising receiving a plurality of commands activating a plurality of spatial relations for an uplink resource.

Clause 48. The method of any one of clauses 46 to 47, further comprising receiving, via at least one transmission occasion of the plurality of transmission occasions, at least one repetition of a DCI, wherein the DCI indicates the uplink resource.

Clause 49. The method of any one of clauses 46 to 48, further comprising determining a spatial relation, among the plurality of spatial relations of the uplink resource, that is used most recent prior to a reference transmission occasion among the plurality of transmission occasions

Clause 50. The method of any one of clauses 46 to 49, further comprising transmitting, based on the spatial relation, a transport block.

Clause 51. A wireless device comprising: one or more processors; and memory storing instructions that, when executed by the one or more processors, cause the wireless device to perform the method of clause 50.

Clause 52. A system comprising: a wireless device configured to perform the method of clause 50; and a base station configured to transmit the DCI repetitions.

Clause 53. A computer-readable medium storing instructions that, when executed, cause performance of the method of clause 50.

Clause 54. A method comprising monitoring, by a wireless device and for downlink control channel repetition, a plurality of coresets in a plurality of transmission occasions.

Clause 55. The method of clause 54, further comprising receiving, via at least one transmission occasion of the plurality of transmission occasions, downlink control information (DCI), wherein the DCI comprises a minimum applicable scheduling offset indicator field indicating a new minimum applicable scheduling offset.

Clause 56. The method of any one of clauses 54 to 55, further comprising determining, based on a reference transmission occasion among the plurality of transmission occasions, a time slot to apply the new minimum applicable scheduling offset.

Clause 57. The method of any one of clauses 54 to 56, further comprising applying the new minimum applicable scheduling offset starting from the time slot.

Clause 58. The method of clause 57, wherein the reference transmission occasion has an earliest starting time among starting times of the plurality of transmission occasions.

Clause 59. The method of clause 57, wherein the reference transmission occasion has a latest ending time among ending times of the plurality of transmission occasions.

Clause 60. The method of any one of clauses 57 to 59, wherein the applying comprises receiving first DCI indicating a slot offset value equal to or greater than the minimum applicable scheduling offset, wherein the first DCI schedules a first transport block.

Clause 61. The method of any one of clauses 57 to 60, wherein the applying further comprises determining not to receive second DCI indicating a slot offset value smaller than the minimum applicable scheduling offset, wherein the second DCI schedules a second transport block.

Clause 62. The method of clause 61, wherein the first transport block comprises at least one of: a first physical downlink shared channel (PDSCH) transmission; and a first physical uplink shared channel (PUSCH) transmission.

Clause 63. The method of any one of clauses 61 to 62, wherein the second transport block comprises at least one of: a second PDSCH transmission; or a second PUSCH transmission.

Clause 64. The method of any one of clauses 54 to 63, wherein the applying comprises the new minimum applicable scheduling offset starting from the time slot.

Clause 65. The method of any one of clauses 54 to 64, further comprising applying a current minimum applicable scheduling offset before the time slot.

Clause 66. The method of any one of clauses 54 to 65, wherein the determining the time slot is further based on an activation delay, wherein the activation delay is in terms of time slots.

Clause 67. The method of clause 66, wherein the activation delay is determined based on at least one of: the current minimum applicable scheduling offset; or a subcarrier spacing of an active downlink bandwidth part (BWP).

Clause 68. The method of clause 66, wherein the time slot is equal to a reference time slot associated with the reference transmission occasion plus the activation delay.

Clause 69. The method of clause 68, wherein the reference time slot comprises the reference transmission occasion.

Clause 70. The method of any one of clauses 54 to 69, further comprising receiving one or more messages comprising one or more configuration parameters for a cell.

Clause 71. The method of clause 70, wherein the current minimum applicable scheduling offset is equal to zero based on the one or more configuration parameters not indicating a minimum scheduling offset for an active downlink BWP of the cell.

Clause 72. The method of any one of clauses 70 to 71, wherein the DCI does not indicate an active BWP change of the cell.

Clause 73. The method of any one of clauses 54 to 72, wherein the DCI uses a format comprising at least one of: a DCI format 0_1; or a DCI format 1_1.

Clause 74. The method of any one of clauses 65 to 73, wherein the applying the current minimum applicable scheduling offset before the time slot comprises stopping using the current minimum applicable scheduling offset in the time slot.

Clause 75. The method of any one of clauses 65 to 74, wherein the applying the current minimum applicable scheduling offset before the time slot further comprises switching to the new minimum applicable scheduling offset in the time slot.

Clause 76. A wireless device comprising: one or more processors; and memory storing instructions that, when executed by the one or more processors, cause the wireless device to perform the method of any one of clauses 54 to 75.

Clause 76. A system comprising: a wireless device configured to perform the method of any one of clauses 54 to 75; and a base station configured to transmit the DCI.

Clause 77. A computer-readable medium storing instructions that, when executed, cause performance of the method of any one of clauses 54 to 75.

Clause 78. A method comprising transmitting, by a base station via at least one transmission occasion of a plurality of transmission occasions, at least one downlink control information (DCI) repetition, of a plurality of DCI repetitions, indicating an uplink resource.

Clause 79. The method of clause 78, further comprising determining a transmission parameter used for an uplink reception, via the uplink resource, prior to the at least one transmission occasion.

Clause 80. The method of any of clauses 78 and 79, further comprising receiving, based on the transmission parameter, at least one transport block.

Clause 81. The method of clause 80, wherein the at least one DCI repetition comprises a field indicating a time offset between a last-in-time repetition, of the plurality of DCI repetitions, and a second set of DCI repetitions.

Clause 82. The method of clause 81, wherein the method further comprises, based on a determination that the second set of DCI repetitions is scheduled to occur before the time offset, delaying transmission of the second set of DCI repetitions.

Clause 83. The method of clause 81, wherein the method further comprises, based on a determination that the second set of DCI repetitions is not scheduled to occur before the time offset, transmitting the second set of DCI repetitions.

Clause 84. The method of any of clauses 78 and 83, further comprising activating a minimum applicable scheduling offset starting from the last-in-time repetition of the plurality of DCI repetitions.

Clause 85. The method of any of clauses 78 and 84, further comprising determining to transmit the second set of DCI repetitions, wherein the second set of DCI repetitions comprises a second field indicating a new minimum applicable scheduling offset for transmission, of the second set of DCI repetitions, starting from a time occurring before the time offset.

Clause 86. The method of any of clauses 78 and 85, wherein the determining the transmission parameter comprises determining a most recent transmission parameter used prior to the at least one transmission occasions.

Clause 87. The method of any of clauses 78 and 86, wherein the transmission parameter comprises an indication of at least one of: a spatial relation; a beam; a transmission precoder; or a transmission power.

Clause 88. The method of any of clauses 78 and 87, further comprising transmitting second DCI, wherein the second DCI is for scheduling transmission of a second transport block and indicates a second uplink resource.

Clause 89. The method of any of clauses 78 and 88, further comprising receiving the second transport block, wherein the receiving the second transport block is based on one or more transmission parameters used for an uplink transmission, via the second uplink resource, prior to the transmitting the second DCI.

Clause 90. The method of any of clauses 78 and 89, wherein the plurality of DCI repetitions comprises at least one of: time domain control channel repetitions; or frequency domain control channel repetitions.

Clause 91. A base station comprising: one or more processors; and memory storing instructions that, when executed by the one or more processors, cause the base station to perform the method of any one of clauses 78 and 90.

Clause 92. A system comprising: a base station configured to perform the method of any one of clauses 78 and 90; and a wireless device configured to transmit the at least one transport block.

Clause 93. A computer-readable medium storing instructions that, when executed, cause performance of the method of any one of clauses 78 and 90.

Clause 94. A method comprising transmitting, by a base station via a plurality of transmission occasions, a first set of downlink control information (DCI) repetitions, wherein the first set of DCI repetitions comprises a field indicating a time offset between a last-in-time repetition, of the first set of DCI repetitions, and a second set of DCI repetitions.

Clause 95. The method of clause 94, further comprising determining whether the second set of DCI repetitions is scheduled to occur before the time offset.

Clause 96. The method of any of clauses 94 and 95, further comprising: based on the second set of DCI repetitions being scheduled to occur before the time offset, delaying transmission of the second set of DCI repetitions; or based on the second set of DCI repetitions not being scheduled to occur before the time offset, transmitting the second set of DCI repetitions.

Clause 97. The method of clause 96, wherein the transmitting the first set of DCI repetitions is via transmission occasions.

Clause 98. The method of clause 97, wherein the first set of DCI repetitions indicates an uplink resource.

Clause 99. The method of clause 98, wherein the method further comprises determining a transmission parameter used for an uplink reception, via the uplink resource, prior to the at least one transmission occasion.

Clause 100. The method of any of clauses 98 and 99, wherein the method further comprises receiving, based on the transmission parameter, at least one transport block.

Clause 101. The method of clause 100, wherein the determining the transmission parameter comprises determining a most recent transmission parameter used prior to the at least one transmission occasion.

Clause 102. The method of any of clauses 100 and 101, wherein the transmission parameter comprises an indication of at least one of: a spatial relation; a beam; a transmission precoder; or a transmission power.

Clause 103. The method of any of clauses 99 and 102, further comprising activating a minimum applicable scheduling offset starting from the last-in-time repetition of the first set of DCI repetitions.

Clause 104. The method of any of clauses 99 and 103, further comprising determining to transmit the second set of DCI repetitions, wherein the second set of DCI repetitions comprises a second field indicating a new minimum applicable scheduling offset for transmission, of the second set of DCI repetitions, starting from a time occurring before the time offset.

Clause 105. The method of any of clauses 99 and 104, wherein the first set of DCI repetitions comprises at least one of: time domain control channel repetitions; or frequency domain control channel repetitions.

Clause 106. The method of any of clauses 99 and 105, further comprising delaying starting a minimum applicable scheduling offset at least until the last-in-time repetition, of the first set of DCI repetitions.

Clause 107. The method of any of clauses 99 and 106, wherein the last-in-time repetition, of the first set of DCI repetitions, comprises a last monitoring occasion during which the base station transmits the last-in-time repetition.

Clause 108. A base station comprising: one or more processors; and memory storing instructions that, when executed by the one or more processors, cause the base station to perform the method of any one of clauses 99 to 107.

Clause 109. A system comprising: a base station configured to perform the method of any one of clauses 99 to 107; and a wireless device configured to transmit, based on the first set of DCI repetitions, at least one transport block.

Clause 110. A computer-readable medium storing instructions that, when executed, cause performance of the method of any one of clauses 99 to 107.

A wireless device may perform a method comprising multiple operations. The wireless device may receive an activation command indicating, for an uplink resource, one or more transmission parameters. The uplink resource may comprise a sounding reference signal (SRS) resource. The wireless device may monitor control resource sets (coresets) for a plurality of DCI repetitions. The wireless device may monitor a plurality of search space sets associated with a plurality of coresets. The wireless device may receive one or more messages comprising one or more configuration parameters. The one or more configuration parameters may indicate a codebook-based transmission, a non-codebook-based transmission, an SRS resource set comprising the uplink resource, and/or a plurality of coresets for the downlink control channel repetition. The one or more configuration parameters may indicate, for the uplink resource, one or more transmission parameters. The one or more transmission parameters may comprise an indication of at least one of a spatial relation, a beam, a transmission precoder, or a transmission power. The one or more transmission parameters may comprise one or more transmission precoder parameters, one or more power control parameters, and/or an SRS usage parameter for the SRS resource set. The SRS usage parameter is at least one of codebook and non-codebook. The wireless device may receive, via at least one transmission occasion of a plurality of transmission occasions, at least one downlink control information (DCI) repetition, of a plurality of DCI repetitions, indicating an uplink resource. The at least one DCI repetition may comprise a field indicating a time offset between a last-in-time repetition, of the plurality of DCI repetitions, and a second set of DCI repetitions. The time offset may comprise an activation delay. The plurality of DCI repetitions may comprise at least one of time domain control channel repetitions or frequency domain control channel repetitions. The at least one DCI repetition may schedule transmission of the at least one transport block. The at least one DCI repetition may comprise an SRS resource indicator (SRI) field indicating the SRS resource. The at least one DCI repetition may use a format comprising at least one of DCI format 0_0, DCI format 0_1, or DCI format 0_2. The wireless device may transmit, via the uplink resource, an uplink signal based on the transmission parameter, prior to a reference downlink control transmission occasion. The uplink signal, transmitted via the uplink resource, is the most recent transmission via the uplink resource prior to the reference downlink control transmission occasion. The wireless device may determine a transmission parameter used for an uplink transmission, via the uplink resource, prior to the at least one transmission occasion by determining a most recent transmission parameter used prior to the at least one transmission occasion. The transmission parameter may be associated with the uplink resource based one or beams for reception being associated with one or more beams for transmission. For example, reception may be via one or more of beam 5, beam 6, beam 7, and/or beam 8. Transmission may be via one or more of beam 1, beam 2, beam 3, and/or beam 4. Reception beam 5 may be associated with transmission beam 1. Transmission beam 1 may be associated with reception beam 5. Any reception beam may be associate with any (same or different) transmission beam. Any transmission beam may be associated with any (same or different) reception beam. The wireless device may transmit, based on the transmission parameter, at least one transport block. The transmitting the at least one transport block is based on the one or more configuration parameters indicating the downlink control channel repetition. The transmission of the at least one transport block may comprise a physical uplink shared channel (PUSCH) transmission comprising the at least one transport block. The transmitting the at least one transport block may comprise transmitting the at least one transport block using a spatial domain transmission filter determined based on a reference signal indicated by the spatial relation. The transmitting the uplink signal may comprise transmitting the uplink signal using the spatial domain transmission filter. The wireless device may determine a reference transmission occasion among the plurality of transmission occasions by determining, based on one or more configuration parameters indicating a downlink control channel repetition, a reference transmission occasion. The reference transmission occasion has an earliest starting time among starting times of the plurality of transmission occasions, or the reference transmission occasion has a latest ending time among ending times of the plurality of transmission occasions. The wireless device may determine, based on the reference transmission occasion, an activation delay during which the wireless device does not receive DCI. The wireless device may receive an activation command indicating, for the uplink resource, the one or more second transmission parameters. The wireless device may transmit, via the uplink resource, a second uplink signal based on the one or more second transmission parameters after the plurality of transmission occasions. The transmitting the second uplink signal is before the transmitting the at least one transport block. The wireless device may determine to not transmit the at least one transport block, based on one or more second transmission parameters, of the uplink resource, that are used after the plurality of transmission occasions. The wireless device may receive the second set of DCI repetitions, based on a determination that the second set of DCI repetitions is scheduled to occur after the time offset. The wireless device may receive second DCI. The second DCI is for scheduling transmission of a second transport block and may indicate a second uplink resource. The wireless device may transmit the second transport block, based on one or more transmission parameters used for an uplink transmission, via the second uplink resource, prior to the receiving the second DCI. The wireless device may comprise one or more processors; and memory storing instructions that, when executed by the one or more processors, cause the wireless device to perform the described method, additional operations and/or include the additional elements. A base station may comprise one or more processors; and memory storing instructions that, when executed by the one or more processors, cause the base station to perform operations complementary to the wireless device described herein. A system may comprise the wireless device configured to perform the described method, additional operations and/or include the additional elements; and a base station configured perform operations complementary to the described method, additional operations and/or include the additional elements. A computer-readable medium may store instructions that, when executed, cause performance of the described method, complementary operations, additional operations, and/or include the additional elements.

A wireless device may perform a method comprising multiple operations. The wireless device may monitor a plurality of coresets for downlink control information (DCI) having repetitions in a plurality of transmission occasions. The wireless device may receive a plurality of commands activating a plurality of spatial relations for an uplink resource. The wireless device may receive, via at least one transmission occasion of the plurality of transmission occasions, at least one repetition of a DCI. The DCI may indicate the uplink resource. The wireless device may determine a spatial relation, among the plurality of spatial relations of the uplink resource, that is used most recent prior to a reference transmission occasion among the plurality of transmission occasions. The wireless device may transmit, based on the spatial relation, a transport block. The wireless device may comprise one or more processors; and memory storing instructions that, when executed by the one or more processors, cause the wireless device to perform the described method, additional operations and/or include the additional elements. A base station may comprise one or more processors; and memory storing instructions that, when executed by the one or more processors, cause the base station to perform operations complementary to the wireless device described herein. A system may comprise the wireless device configured to perform the described method, additional operations and/or include the additional elements; and a base station configured perform operations complementary to the described method, additional operations and/or include the additional elements. A computer-readable medium may store instructions that, when executed, cause performance of the described method, complementary operations, additional operations, and/or include the additional elements.

A wireless device may perform a method comprising multiple operations. The wireless device may receive one or more messages comprising one or more configuration parameters for a cell. The wireless device may monitor, for downlink control channel repetition, a plurality of coresets in a plurality of transmission occasions. The wireless device may receive, via at least one transmission occasion of the plurality of transmission occasions, downlink control information (DCI). The DCI may comprise a minimum applicable scheduling offset indicator field indicating a new minimum applicable scheduling offset. The wireless device may determine, based on a reference transmission occasion among the plurality of transmission occasions, a time slot to apply the new minimum applicable scheduling offset. The determining the time slot may be further based on an activation delay. The activation delay may be in terms of time slots. The activation delay may be determined based on at least one of the current minimum applicable scheduling offset or a subcarrier spacing of an active downlink bandwidth part (BWP). The time slot may be equal to a reference time slot associated with the reference transmission occasion plus the activation delay. The reference time slot may comprise the reference transmission occasion. The wireless device may apply a current minimum applicable scheduling offset before the time slot. The applying the current minimum applicable scheduling offset before the time slot may comprise stopping using the current minimum applicable scheduling offset in the time slot and switching to the new minimum applicable scheduling offset in the time slot. The current minimum applicable scheduling offset may be equal to zero based on the one or more configuration parameters not indicating a minimum scheduling offset for an active downlink BWP of the cell. The DCI may not indicate an active BWP change of the cell. The DCI may use a format comprising at least one of a DCI format 0_1 or a DCI format 1_1. The reference transmission occasion may have an earliest starting time among starting times of the plurality of transmission occasions. The reference transmission occasion may have a latest ending time among ending times of the plurality of transmission occasions. The wireless device may apply the new minimum applicable scheduling offset starting the time slot. The applying may comprise receiving first DCI indicating a slot offset value equal to or greater than the minimum applicable scheduling offset. The first DCI may schedule a first transport block. The first transport block may comprise at least one of a first physical downlink shared channel (PDSCH) transmission or a first physical uplink shared channel (PUSCH) transmission. The applying may comprise the new minimum applicable scheduling offset starting from the time slot. The wireless device may determine not to receive second DCI indicating a slot offset value smaller than the minimum applicable scheduling offset. The second DCI may schedule a second transport block. The second transport block may comprise at least one of a second PDSCH transmission or a second PUSCH transmission. The wireless device may comprise one or more processors; and memory storing instructions that, when executed by the one or more processors, cause the wireless device to perform the described method, additional operations and/or include the additional elements. A base station may comprise one or more processors; and memory storing instructions that, when executed by the one or more processors, cause the base station to perform operations complementary to the wireless device described herein. A system may comprise the wireless device configured to perform the described method, additional operations and/or include the additional elements; and a base station configured perform operations complementary to the described method, additional operations and/or include the additional elements. A computer-readable medium may store instructions that, when executed, cause performance of the described method, complementary operations, additional operations, and/or include the additional elements.

A base station may perform a method comprising multiple operations. The base station may transmit, via at least one transmission occasion of a plurality of transmission occasions, at least one downlink control information (DCI) repetition, of a plurality of DCI repetitions, indicating an uplink resource. The at least one DCI repetition may comprise a field indicating a time offset between a last-in-time repetition, of the plurality of DCI repetitions, and a second set of DCI repetitions. The time offset may comprise an activation delay. The plurality of DCI repetitions may comprise at least one of time domain control channel repetitions or frequency domain control channel repetitions. The base station may determine a transmission parameter used for an uplink reception, via the uplink resource, prior to the transmission occasions. The transmission parameter may be associated with the uplink resource based one or beams for reception being associated with one or more beams for transmission. For example, reception may be via one or more of beam 5, beam 6, beam 7, and/or beam 8. Transmission may be via one or more of beam 1, beam 2, beam 3, and/or beam 4. Reception beam 5 may be associated with transmission beam 1. Transmission beam 1 may be associated with reception beam 5. Any reception beam may be associate with any (same or different) transmission beam. Any transmission beam may be associated with any (same or different) reception beam. The determining the transmission parameter may comprise determining a most recent transmission parameter used prior the at least one transmission occasion. The transmission parameter may comprise an indication of at least one of a spatial relation, a beam, a transmission precoder, or a transmission power. The base station may receive, based on the transmission parameter, at least one transport block. The base station may activate a minimum applicable scheduling offset starting from the last-in-time repetition of the plurality of DCI repetitions. The base station may determine to transmit the second set of DCI repetitions. The second set of DCI repetitions may comprise a second field indicating a new minimum applicable scheduling offset for transmission, of the second set of DCI repetitions, starting from a time occurring before the time offset. The base station may, based on a determination that the second set of DCI repetitions is scheduled to occur before the time offset, delay transmission of the second set of DCI repetitions. The base station may, based on a determination that the second set of DCI repetitions is not scheduled to occur before the time offset, transmit the second set of DCI repetitions. The base station may transmit second DCI. The second DCI may be for scheduling transmission of a second transport block and may indicate a second uplink resource. The base station may receive the second transport block. The receiving the second transport block may be based on one or more transmission parameters used for an uplink transmission, via the second uplink resource, prior to the transmitting the second DCI. The base station may comprise one or more processors; and memory storing instructions that, when executed by the one or more processors, cause the wireless device to perform the described method, additional operations and/or include the additional elements. A wireless device may comprise one or more processors; and memory storing instructions that, when executed by the one or more processors, cause the wireless device to perform operations complementary to the base station described herein. A system may comprise the base station configured to perform the described method, additional operations and/or include the additional elements; and a wireless device configured perform operations complementary to the described method, additional operations and/or include the additional elements. A computer-readable medium may store instructions that, when executed, cause performance of the described method, complementary operations, additional operations, and/or include the additional elements. A base station may perform a method comprising multiple operations. The base station may transmit, via a plurality of transmission occasions, a first set of downlink control information (DCI) repetitions. The first set of DCI repetitions may comprise a field indicating a time offset between a last-in-time repetition, of the first set of DCI repetitions, and a second set of DCI repetitions. The first set of DCI repetitions may comprise at least one of time domain control channel repetitions or frequency domain control channel repetitions. The transmitting the first set of DCI repetitions may be via at least one transmission occasion of the plurality of transmission occasions. The first set of DCI repetitions may indicate an uplink resource. The base station may determine a transmission parameter used for an uplink reception, via the uplink resource, prior to the at least one transmission occasion. The transmission parameter may be associated with the uplink resource based one or beams for reception being associated with one or more beams for transmission. For example, reception may be via one or more of beam 5, beam 6, beam 7, and/or beam 8. Transmission may be via one or more of beam 1, beam 2, beam 3, and/or beam 4. Reception beam 5 may be associated with transmission beam 1. Transmission beam 1 may be associated with reception beam 5. Any reception beam may be associate with any (same or different) transmission beam. Any transmission beam may be associated with any (same or different) reception beam. The determining the transmission parameter may comprise determining a most recent transmission parameter used prior to the at least one transmission occasion. The transmission parameter may comprise an indication of at least one of a spatial relation, a beam, a transmission precoder, or a transmission power. The base station may receive, based on the transmission parameter, at least one transport block. The base station may determine whether the second set of DCI repetitions is scheduled to occur before the time offset. The base station may delay transmission of the second set of DCI repetitions based on a determination that the second set of DCI repetitions is scheduled to occur before the time offset. The base station may transmit the second set of DCI repetitions based on a determination that the second set of DCI repetitions is not scheduled to occur before the time offset. The base station may delay starting a minimum applicable scheduling offset at least until the last-in-time repetition, of the first set of DCI repetitions. The last-in-time repetition, of the first set of DCI repetitions, may comprise a last monitoring occasion during which the base station transmits the last-in-time repetition. The base station may activate a minimum applicable scheduling offset starting from the last-in-time repetition of the first set of DCI repetitions. The base station may determine to transmit the second set of DCI repetitions. The second set of DCI repetitions may comprise a second field indicating a new minimum applicable scheduling offset for transmission, of the second set of DCI repetitions, starting from a time occurring before the time offset. The base station may comprise one or more processors; and memory storing instructions that, when executed by the one or more processors, cause the wireless device to perform the described method, additional operations and/or include the additional elements. A wireless device may comprise one or more processors; and memory storing instructions that, when executed by the one or more processors, cause the wireless device to perform operations complementary to the base station described herein. A system may comprise the base station configured to perform the described method, additional operations and/or include the additional elements; and a wireless device configured perform operations complementary to the described method, additional operations and/or include the additional elements. A computer-readable medium may store instructions that, when executed, cause performance of the described method, complementary operations, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

    receiving, by a wireless device via at least one transmission occasion of a plurality of transmission occasions, at least one downlink control information (DCI) repetition, of a plurality of DCI repetitions, indicating an uplink resource;
    determining a transmission parameter used for an uplink transmission, via the uplink resource, prior to the at least one transmission occasion; and
    transmitting, based on the transmission parameter, at least one transport block.

2. The method of claim 1, wherein the at least one DCI repetition comprises a field indicating a time offset between a last-in-time repetition, of the plurality of DCI repetitions, and a second set of DCI repetitions, and wherein the method further comprises:
    based on a determination that the second set of DCI repetitions is scheduled to occur after the time offset, receiving the second set of DCI repetitions.

3. The method of any one of claims 1 to 2, further comprising monitoring control resource sets (coresets) for the plurality of DCI repetitions.

4. The method of any one of claims 1 to 3, wherein the determining the transmission parameter comprises determining a most recent transmission parameter used prior to the at least one transmission occasion.

5. The method of any one of claims 1 to 4, wherein the transmission parameter comprises an indication of at least one of:

    a spatial relation;
    a beam;
    a transmission precoder; or
    a transmission power.

6. The method of any one of claims 1 to 5, further comprising:

    receiving second DCI, wherein the second DCI is for scheduling transmission of a second transport block and indicates a second uplink resource; and
    transmitting the second transport block, wherein the transmitting the second transport block is based on one or more transmission parameters used for an uplink transmission, via the second uplink resource, prior to the receiving the second DCI.

7. The method of any one of claims 1 to 6, wherein the plurality of DCI repetitions comprises at least one of:

time domain control channel repetitions; or
frequency domain control channel repetitions.

8. The method of any one of claims 1 to 7, further comprising receiving an activation command indicating, for the uplink resource, a plurality of transmission parameters, wherein the plurality of transmission parameters comprises the transmission parameter that is used for the uplink transmission occurring prior to the at least one transmission occasion.

9. The method of any one of claims 1 to 8, wherein the uplink resource comprises a sounding reference signal (SRS) resource, and wherein the at least one DCI repetition comprises an SRS resource indicator (SRI) field indicating the SRS resource.

10. The method of any one of claims 1 to 9, wherein the transmitting the at least one transport block comprises transmitting the at least one transport block using a spatial domain transmission filter associated with the transmission parameter.

11. The method of any one of claims 1 to 10, further comprising transmitting, based on the transmission parameter, the uplink transmission.

12. The method of any one of claims 1 to 11, further comprising:
based on a determination that a second set of DCI repetitions is scheduled to occur before a time offset, determining not to receive the second set of DCI repetitions.

13. A wireless device comprising:

one or more processors; and
memory storing instructions that, when executed by the one or more processors, cause the wireless device to perform the method of any one of claims 1 to 12.

14. A system comprising:

a wireless device configured to perform the method of any one of claims 1 to 12; and
a base station configured to transmit the at least one DCI repetition.

15. A computer-readable medium storing instructions that, when executed, cause performance of the method of any one of claims 1 to 12.

**FIG. 1A**

**FIG. 1B**

EP 3 952 163 A1

## Wireless Device 210

| SDAP 215 | ⟷ | SDAP 225 |
| PDCP 214 | ⟷ | PDCP 224 |
| RLC 213 | ⟷ | RLC 223 |
| MAC 212 | ⟷ | MAC 222 |
| PHY 211 | ⟷ | PHY 221 |

## Base Station 220

# FIG. 2A

## Wireless Device 210

| NAS 217 | ⟷ | | AMF 230 — NAS 237 |
| RRC 216 | ⟷ | RRC 226 |
| PDCP 214 | ⟷ | PDCP 224 |
| RLC 213 | ⟷ | RLC 223 |
| MAC 212 | ⟷ | MAC 222 |
| PHY 211 | ⟷ | PHY 221 |

## Base Station 220

## AMF 230

# FIG. 2B

**IP Packets**

FIG. 3

EP 3 952 163 A1

| | IP Packet | | IP Packet | | IP Packet | |
|---|---|---|---|---|---|---|
| | *n* | | *n+1* | | *m* | |

**SDAP 225** | radio bearer **402** | H | SDAP SDU | H | SDAP SDU | radio bearer **404** | H | SDAP SDU |

SDAP PDU

**PDCP 224** | H | PDCP SDU | H | PDCP SDU | H | PDCP SDU |

**RLC 223** | H | RLC SDU | H | RLC SDU | H | SDU Seg. | H | SDU Seg. |

**MAC 222** | H | MAC SDU | H | MAC SDU | H | MAC SDU | H | MAC SDU |

**PHY 221** | PHY SDU (Transport Block) | PHY SDU |

## FIG. 4A

| R | F | LCID | SDU Length |

| H | MAC CE | H | MAC CE | H | MAC SDU | H | MAC SDU |

MAC PDU

## FIG. 4B

**FIG. 5B**

Uplink

Logical Channels: CCCH, DCCH, DTCH

Transport Channels: UL-SCH, RACH

Physical Channels: PUSCH, PUCCH, PRACH — UCI

Physical Signals: DM-RS, PT-RS, SRS

**FIG. 5A**

Downlink

Logical Channels: PCCH, BCCH, CCCH, DCCH, DTCH

Transport Channels: PCH, BCH, DL-SCH

Physical Channels: PBCH, PDSCH, PDCCH — DCI

Physical Signals: PSS/SSS, CSI-RS, DM-RS, PT-RS

FIG. 6

1 Frame (10 ms)

| 0 | 1 | 2 | 3 | 4 | 5 | 6 | 7 | 8 | 9 |

1 Subframe (1 ms)

Subcarrier spacing = 15 kHz
1 slot per subframe

1 Slot (1 ms, 14 OFDM Symbols)

Subcarrier spacing = 30 kHz
2 slots per subframe

1 Slot (0.5 ms, 14 OFDM Symbols)

Subcarrier spacing = 60 kHz
4 slots per subframe

1 Slot (0.25 ms, 14 OFDM Symbols)

Subcarrier spacing = 120 kHz
8 slots per subframe

1 Slot (0.0125 ms, 14 OFDM Symbols)

FIG. 7

FIG. 8

**FIG. 9**

EP 3 952 163 A1

Intraband,
contiguous
1002

Freq. Band A

Freq. Band B

Component Carrier

Intraband,
non-contiguous
1004

Freq. Band A

Freq. Band B

Interband
1006

Freq. Band A

Freq. Band B

## FIG. 10A

PUCCH Group
1010

PUCCH Group
1050

Downlink
Component
Carriers

PCell 1011   SCell 1012   SCell 1013   - - - -   PSCell 1051   SCell 1052   SCell 1053   - - - -

UCI 1031   UCI 1032   UCI 1033   UCI 1071   UCI 1072   UCI 1073

Uplink
Component
Carriers

PCell 1021   SCell 1022   SCell 1023   - - - -   PSCell 1061   SCell 1062   SCell 1063   - - - -

## FIG. 10B

FIG. 11A

FIG. 11B

FIG. 12A

FIG. 12B

FIG. 13A

FIG. 13B

FIG. 13C

CORESET
1404

CORESET
1403

CORESET
1402

CORESET
1401

Bandwidth

One slot

**FIG. 14A**

EP 3 952 163 A1

CORESET → CCE-to-REG mapping → Search Space

PDCCH candidate
PDCCH candidate
PDCCH candidate

**FIG. 14B**

EP 3 952 163 A1

Air Interface
1506

| Peripheral(s) 1526 | TX Processing System 1520 | | TX Processing System 1510 | Peripheral(s) 1516 |

| Memory 1524 | Processing System 1518 | | Processing System 1508 | Memory 1514 |

| GPS Chipset 1527 | RX Processing System 1522 | | RX Processing System 1512 | GPS Chipset 1517 |

Wireless Device
1502

Base Station
1504

**FIG. 15A**

**FIG. 15B**

EP 3 952 163 A1

**FIG. 16A**

**FIG. 16B**

**FIG. 16D**

**FIG. 16C**

**ServingCellConfig**
- a list of BWP-Downlinks
- a list of BWP-Uplinks

1710

**BWP**
- locationAndBandwidth
- subcarrierSpacing
- cyclicPrefix

1730

**BWP-Downlink**
- bwp-Id
- BWP-DownlinkCommon
- BWP-DownlinkDedicated

1720

**BWP-DownlinkDedicated**
- pdcch-Config
- pdsch-Config
- sps-Config
- RLM-Config

1740

**PDCCH-Config**
- set of CORESETs
- set of SearchSpace
- Preemption
- tpc-PUSCH
- tpc-PUCCH
- tpc-SRS
- ...

1760

**CORESET**
- CORESET ID
- frequencyResource
- CCE-REG mapping
- TCI-StateIDs
- DM-RS-ScramblingID
- ...

1770

**SearchSpace**
- searchSpaceID
- CORESET ID
- monitoringPANDOffset
- duration
- nOfCandidates
- SearchSpaceTypes
- DCI-Formats
- ...

1780

**PDSCH-Config**
- TimeDomainResourceAll
- RateMatchingPattern
- ...

1750

## FIG. 17

EP 3 952 163 A1

```
ControlResourceSet ::=                    SEQUENCE {
    controlResourceSetId                      ControlResourceSetId,
    frequencyDomainResources                  BIT STRING (SIZE (45)),
    duration                                  INTEGER (1..maxCoReSetDuration),
    cce-REG-MappingType CHOICE {
        interleaved          SEQUENCE {
            reg-BundleSize       ENUMERATED {n2, n3, n6},
            interleaverSize      ENUMERATED {n2, n3, n6},
            shiftIndex           INTEGER(0..maxNrofPhysicalResourceBlocks-1)       },
        nonInterleaved                        NULL
    },
    precoderGranularity                       ENUMERATED {sameAsREG-
bundle,allContiguousRBs},
    tci-StatesPDCCH-ToAddList                 SEQUENCE(SIZE (1..maxNrofTCI-StatesPDCCH))
OF TCI-StateId
    tci-StatesPDCCH-ToReleaseList             SEQUENCE(SIZE (1..maxNrofTCI-StatesPDCCH))
OF TCI-StateId
    tci-PresentInDCI                          ENUMERATED {enabled}
    pdcch-DMRS-ScramblingID                   INTEGER (0..65535)
...,
    [[
    rb-Offset-r16                             INTEGER (0..5)
    tci-PresentInDCI-Format1-2-r16   INTEGER (1..3)
    coresetPoolIndex-r16                      INTEGER (0..1)
    controlResourceSetId-v16xy                    ControlResourceSetId-v16xy]]}
```

FIG. 18

**FIG. 19**

EP 3 952 163 A1

**FIG. 20**

FIG. 21

DCI repetition

TB

Slot

1st TCI

2nd TCI

CORESET with 1st TCI and 2nd TCI
Search Space
[1 0 0 0 0 1 0 .... 0]

FIG. 22

FIG. 23

**Control channel repetition**

DCI 1

DCI 2

DCI 3

2410

2411

PDCCH transmission/
repetition occasion 1

PDCCH transmission/
repetition occasion 2

PDCCH transmission/
repetition occasion 3

time

**FIG. 24**

FIG. 25

EP 3 952 163 A1

Receive configuration parameter(s) indicating
control channel repetition and uplink resource(s)    2610

↓

2620

Monitor, for DCIs/PDCCHs, in downlink control
signal/channel transmission/repetition occasions

↓

2630

Receive at least one downlink control signal/channel,
among the DCIs/PDCCHs, scheduling a TB and
indicating an uplink resource of the uplink resource(s)

↓

2640

Determine a reference downlink control signal/channel
transmission/repetition occasion of the downlink control
signal/channel transmission/repetition occasions

↓

2650

Determine transmission parameter(s), of the uplink resource,
that are used before (or prior to) the reference downlink
control signal/channel transmission/repetition occasion

↓

2660

Transmit the TB based on the transmission parameter(s)

FIG. 26A

Send configuration parameter(s) indicating control channel repetition and uplink resource(s)  2609

Send DCIs/PDCCHs in downlink control signal/ channel transmission/repetition occasions, at least one downlink control signal/channel, among the DCIs/PDCCHs, scheduling a TB and indicating an uplink resource of the uplink resource(s)  2619

Receive the TB based on transmission parameter(s)  2661

FIG. 26B

No DCI indicating a second new
minimum applicable scheduling offset

2710

DCI 1

DCI 2

✗

time

Slot n ◄——————X = Activation delay——————► Slot n+X

2711

Indicate a new minimum
applicable scheduling offset

Apply the new minimum
applicable scheduling offset

FIG. 27

EP 3 952 163 A1

FIG. 28

```
┌─────────────────────────────────────┐
│   Receive configuration parameter(s) │        2910
│   indicating control channel repetition │
└─────────────────────────────────────┘
                    │
                    ▼
┌─────────────────────────────────────┐
│  Monitor, for DCIs/PDCCHs, in downlink control │    2920
│  signal/channel transmission/repetition occasions │
└─────────────────────────────────────┘
                    │
                    ▼
┌─────────────────────────────────────┐
│  Receive at least one downlink control signal/ │   2930
│  channel, among the DCIs/PDCCHs, indicating a │
│  new minimum applicable scheduling offset │
└─────────────────────────────────────┘
                    │
                    ▼
┌─────────────────────────────────────┐
│  Determine a time slot based on a reference │   2940
│  downlink control signal/channel transmission/ │
│  repetition occasion of the downlink control signal/ │
│  channel transmission/repetition occasions │
└─────────────────────────────────────┘
                    │
                    ▼
┌─────────────────────────────────────┐
│  Apply the new minimum applicable │        2950
│  scheduling offset in the time slot │
└─────────────────────────────────────┘
```

**FIG. 29A**

Send configuration parameter(s)
indicating control channel repetition

2909

Send DCIs/PDCCHs, in downlink control signal/
channel transmission/repetition occasions

2919

Send at least one downlink control signal/
channel, among the DCIs/PDCCHs, indicating a
new minimum applicable scheduling offset

2929

Apply the new minimum applicable
scheduling offset in the time slot

2951

FIG. 29B

Apply a new minimum applicable
scheduling offset in a time slot
3010

Determine to transmit second DCIs/PDCCHs indicating
a second new minimum applicable scheduling offset
3020

YES / A downlink control signal/channel
transmission/repetition occasion of a last
DCI/PDCCH of the second DCIs/PDCCHs
occurs before (or prior to) the time slot? \ NO
3030

3040

3045

Delay transmission of the
second DCIs/PDCCHs

Transmit the second
DCIs/PDCCHs

FIG. 30

Europäisches
Patentamt

European
Patent Office

Office européen
des brevets

# EUROPEAN SEARCH REPORT

Application Number

EP 21 19 0099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/273027 A1 (KIM BONGHOE [KR] ET AL) 21 September 2017 (2017-09-21) * paragraph [0297] - paragraph [0300] * ----- | 1-15 | INV. H04L1/08 H04L5/00 |
| X | WO 2019/172624 A1 (LG ELECTRONICS INC [KR]) 12 September 2019 (2019-09-12) * the whole document * -& US 2021/368453 A1 (LEE HYUNHO [KR] ET AL) 25 November 2021 (2021-11-25) * paragraph [0299] - paragraph [0302] * ----- | 1-15 | |
| A | WO 2020/064512 A1 (ERICSSON TELEFON AB L M [SE]) 2 April 2020 (2020-04-02) * the whole document * ----- | 1-15 | |
| A | US 2019/342030 A1 (HOSSEINI SEYEDKIANOUSH [US] ET AL) 7 November 2019 (2019-11-07) * the whole document * ----- | 1-15 | |
| A | US 2019/313442 A1 (HOSSEINI SEYEDKIANOUSH [US] ET AL) 10 October 2019 (2019-10-10) * the whole document * ----- | 1-15 | TECHNICAL FIELDS SEARCHED (IPC) H04L |

The present search report has been drawn up for all claims

| Place of search | Date of completion of the search | Examiner |
|---|---|---|
| The Hague | 15 December 2021 | Tanbourgi, Ralph |

EP 3 952 163 A1

## ANNEX TO THE EUROPEAN SEARCH REPORT
## ON EUROPEAN PATENT APPLICATION NO.

EP 21 19 0099

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2021

| Patent document cited in search report | | Publication date | Patent family member(s) | | Publication date |
|---|---|---|---|---|---|
| US 2017273027 | A1 | 21-09-2017 | CN | 105794280 A | 20-07-2016 |
| | | | EP | 3079414 A1 | 12-10-2016 |
| | | | JP | 6169797 B2 | 26-07-2017 |
| | | | JP | 2017502576 A | 19-01-2017 |
| | | | KR | 20160085797 A | 18-07-2016 |
| | | | US | 2017273027 A1 | 21-09-2017 |
| | | | US | 2018295587 A1 | 11-10-2018 |
| | | | WO | 2015084093 A1 | 11-06-2015 |
| WO 2019172624 | A1 | 12-09-2019 | US | 2021368453 A1 | 25-11-2021 |
| | | | WO | 2019172624 A1 | 12-09-2019 |
| US 2021368453 | A1 | 25-11-2021 | US | 2021368453 A1 | 25-11-2021 |
| | | | WO | 2019172624 A1 | 12-09-2019 |
| WO 2020064512 | A1 | 02-04-2020 | CN | 113169841 A | 23-07-2021 |
| | | | EP | 3857783 A1 | 04-08-2021 |
| | | | WO | 2020064512 A1 | 02-04-2020 |
| US 2019342030 | A1 | 07-11-2019 | AU | 2019261998 A1 | 22-10-2020 |
| | | | BR | 112020022103 A2 | 02-02-2021 |
| | | | CN | 112075045 A | 11-12-2020 |
| | | | EP | 3788737 A1 | 10-03-2021 |
| | | | JP | 2021522733 A | 30-08-2021 |
| | | | KR | 20210003130 A | 11-01-2021 |
| | | | SG | 11202009417V A | 27-11-2020 |
| | | | TW | 201946407 A | 01-12-2019 |
| | | | US | 2019342030 A1 | 07-11-2019 |
| | | | WO | 2019213216 A1 | 07-11-2019 |
| US 2019313442 | A1 | 10-10-2019 | CN | 112005510 A | 27-11-2020 |
| | | | EP | 3776954 A1 | 17-02-2021 |
| | | | US | 2019313442 A1 | 10-10-2019 |
| | | | WO | 2019195757 A1 | 10-10-2019 |

EPO FORM P0459

For more details about this annex : see Official Journal of the European Patent Office, No. 12/82

106

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63062190